(19) Europäisches Patentamt
European Patent Office
Office européen des brevets

(11) EP 4 286 420 A1

(12) EUROPEAN PATENT APPLICATION
published in accordance with Art. 153(4) EPC

(43) Date of publication:
**06.12.2023 Bulletin 2023/49**

(21) Application number: **22745272.9**

(22) Date of filing: **26.01.2022**

(51) International Patent Classification (IPC):
***C08F 4/646*** *(2006.01)* ***C08F 210/16*** *(2006.01)*

(52) Cooperative Patent Classification (CPC):
**C08F 4/646; C08F 210/16**

(86) International application number:
**PCT/CN2022/074011**

(87) International publication number:
**WO 2022/161399 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 CN 202110135240**
**01.02.2021 CN 202110135427**

(71) Applicants:
- **China Petroleum & Chemical Corporation Beijing 100728 (CN)**
- **Sinopec Yangzi Petrochemical Company Ltd. Nanjing, Jiangsu 210048 (CN)**

(72) Inventors:
- **LI, Chuanfeng Nanjing, Jiangsu 210048 (CN)**
- **WANG, Wenrui Nanjing, Jiangsu 210048 (CN)**
- **JING, Kun Nanjing, Jiangsu 210048 (CN)**
- **XING, Yuejun Nanjing, Jiangsu 210048 (CN)**
- **XIA, Huimin Nanjing, Jiangsu 210048 (CN)**
- **CHEN, Minghua Nanjing, Jiangsu 210048 (CN)**
- **YOU, Zhonglin Nanjing, Jiangsu 210048 (CN)**
- **CHEN, Shaohui Nanjing, Jiangsu 210048 (CN)**
- **ZHAI, Jianhong Nanjing, Jiangsu 210048 (CN)**
- **GUO, Feng Nanjing, Jiangsu 210048 (CN)**
- **YANG, Liu Nanjing, Jiangsu 210048 (CN)**

(74) Representative: **Hoffmann Eitle Patent- und Rechtsanwälte PartmbB Arabellastraße 30 81925 München (DE)**

# (54) ULTRA-HIGH MOLECULAR WEIGHT POLYETHYLENE AND PREPARATION METHOD THEREFOR

(57) The present invention relates to an ultra-high molecular weight polyethylene and a process for preparing the same, said ultra-high molecular weight polyethylene has a viscosity-average molecular weight of 150-1000 $\times 10^4$ g/mol, a metal element content of 0-50 ppm, a bulk density of 0.30-0.55 g/cm$^3$, a true density of 0.900-0.940 g/cm$^3$, a melting point of 140-152°C, and a crystallinity of 40-75%, and said polyethylene satisfies at least one of condition (1) and condition (2):
Condition (1): tensile elasticity modulus is greater than 250 MPa, preferably greater than 280 MPa, more preferably greater than 300 MPa,
Condition (2): Young's modulus is greater than 300 MPa, preferably greater than 350 MPa.

The ultra-high molecular weight polyethylene has high mechanical properties, high melting point, low metal element content and ash content, and the preparation process is simple, flexible and adjustable, and the ultra-high molecular weight ethylene copolymer has a high tensile elasticity module.

EP 4 286 420 A1

## Description

## Technical Field

The present invention relates to an ultra-high molecular weight ethylene homopolymer and copolymer with low metal element content and high mechanical property, as well as a slurry preparation process for the ethylene homopolymer and ethylene copolymer using an alkane or a mixed alkane as the polymerization solvent and a catalyst system containing a supported non-metallocene catalyst as the main catalyst.

## Background technology

Ultra-high molecular weight polyethylene (UHMWPE) generally refers to linear structured polyethylene with a relative molecular weight of $150 \times 10^4$ g/mol or higher. It has the advantages such as excellent wear resistance, extremely high impact strength, excellent self-lubricating performance, excellent chemical and low-temperature resistance, excellent adhesion resistance, hygiene, non-toxic, and pollution-free properties, recyclability and reusability that ordinary polyethylene does not have, and therefore have been widely applied in the field such as textile, papermaking, food, chemical industry, packaging, agriculture, construction, medical treatment, water purification, sports, entertainment, and military.

In high-end applications, ultra-high molecular weight polyethylene with ultra-high viscosity-average molecular weight (viscosity-average molecular weight generally needs to be higher than $400 \times 10^4$ g/mol) and low ash content can be used for dry or wet gel spinning to obtain high-strength ultra-high molecular weight polyethylene fibers, which are used for bullet resistant materials, cutting resistant fabrics, parachutes, fishing boxes and nets, and the like. Ultra-high molecular weight polyethylene with lower metal element content and high mechanical property can be used as medical materials such as artificial joints.

At present, in the preparation process of ultra-high molecular weight polyethylene, Ziegler-Natta catalysts are mainly used; and it is obtained by the polymerization under the slurry polymerization conditions. Patent ZL94116488.8 discloses a process for preparing an ultra-high molecular weight polyethylene with high bulk density, which is obtained by the catalytic polymerization of ethylene using a mixed catalyst containing an organic aluminum compound and a titanium component. CN200410054344.7 discloses an ultra-high molecular weight polyethylene catalyst and preparation process and application thereof. The involved catalyst is composed of a magnesium compound loaded with a titanium-containing component and a silicon-containing component. The ultra-high molecular weight polyethylene is prepared in the presence of an organic aluminum compound. CN200710042467.2 discloses an ultra-high molecular weight polyethylene catalyst and a preparation process thereof. The preparation of the main component of the catalyst is obtained by the following steps: (1) a magnesium halide reacts with an alcohol to form a magnesium compound; (2) the magnesium compound reacts with a silicon compound having at least one halogen group to form an intermediate product; and (3) the intermediate product reacts with a titanium compound to prepare the main component of the catalyst; benzoic acid ester compounds can be selectively added in each reaction step. The ultra-high molecular weight polyethylene catalyst has a high activity, and the obtained ultra-high molecular weight polyethylene has the characteristic of high bulk density.

CN200710042468.7 discloses an ultra-high molecular weight polyethylene catalyst and a preparation process thereof. The main component of the catalyst is prepared by the following steps: (1) a magnesium halide compound reacts with an alcohol compound and a titanate ester compound to form a magnesium compound solution; (2) the magnesium compound solution reacts with an alkyl aluminum chloride compound to obtain an intermediate product; (3) the intermediate product then reacts with a titanium compound, an electron donor. The ultra-high molecular weight polyethylene catalyst has high activity and the resulting ultra-high molecular weight polyethylene has the characteristic of high bulk density. US4962167A1 discloses a process for obtaining a polyethylene catalyst by reacting a reaction productof a magnesium halide compound and a titanium alkoxide with a reaction product of an aluminum halide and a silicon alkoxide. US5587440 discloses a process for preparing an ultra-high molecular weight polyethylene with a narrow particle size distribution and a high bulk density by reducing a titanium (IV) halide with an organoaluminum compound and undergoing a post-treatment, but the activity of the catalyst is relatively low.

The production processes of polyethylene mainly include a high-pressure polymerization, a gas-phase polymerization, a slurry polymerization, a solution polymerization, and other technologies and processes. Among them, the ethylene slurry polymerization process is one of the main processes for producing polyethylene. This process is divided into a loop reactor polymerization process and a stirred tank slurry polymerization process.

To obtain an ultra-high molecular weight polyethylene, the commonly used process is to polymerize ethylene in hexane or heptane solvent at a polymerization temperature and under a polymerization pressure, both of which are as low as possible. High polymerization temperature will faciliate the chain transfer, which limits the growth of polyethylene molecular chain, and it is difficult to obtain polyethylene with high viscosity-average molecular weight.

Moreover, it is known that copolymerization of ethylene and the comonomer will significantly reduce the molecular weight of the resulting polyethylene. In the existing technologies, it is even difficult to generate ultra-high molecular weight ethylene copolymers with a viscosity-average molecular weight higher than 150 $\times$ $10^4$ g/mol.

Patent CN201480057309.2 discloses a process for preparing a granular ultra-high molecular weight polyethylene copolymers with an organometallic compound ($R^{33}P$=N-TiCpXn) supported on a magnesium support, its catalytic activity is relatively low and the ash content in the copolymer is relatively high.

Patent CN201780000391.9 discloses an ultra-high molecular weight ethylene copolymer powder and a molded article using the ultra-high molecular weight ethylene copolymer powder. Among them, the total amount of the $\alpha$-olefin unit is 0.01-0.10 mol%. However, as can be seen from the examples, the titanium element content in the copolymer is relatively high.

Patents CN201610892732.5, CN201610892836.6, CN201610892837.0, and CN201610892424.2 respectively disclose ultra-high molecular weight polyethylene, and preparation processes, and applications thereof. A supported non-metallocene catalyst is used to perform the homopolymerization of ethylene and the copolymerization of ethylene and alpha-olefin in stages. The obtained ultra-high molecular weight polyethylene molecular chain has at least two segments (homopolymerization segment A and copolymerization segment B), and is a block copolymer with a wide molecular weight distribution.

In order to obtain an ultra-high molecular weight polyethylene with low metal element content, the general approach is to select or prepare appropriate catalytic systems to achieve high polymerization activity as much as possible under ethylene polymerization conditions, which requires the catalyst to have high intrinsic polymerization activity; alternatively, under the conditions of ethylene slurry intermittent polymerization, the polymerization reaction time should be extended as much as possible to achieve a high polymerization activity, which requires the catalyst to have a long polymerization activity life, and the instantaneous consumption of its polymerization monomer ethylene should increase, remain unchanged, or slow down with time, but cannot show a rapid decrease, or even quickly decrease to an extremely low level, losing the significance of extending the reaction; alternatively, the ultra-high molecular weight polyethylene obtained after the polymerization should be subjected to a post-treatment. For example, Chinese patent 200410024103.8 discloses a post-treatment of an ultra-high molecular weight polyethylene, including filtering, solvent-washing, drying, water-washing, screening and like. However, the treatment is complex and has a requirement to the impurity content in the washing solvent, resulting in high washing and drying costs.

Chinese patent 201610747653.5 discloses a continuous water washing device and process for the ultra-high molecular weight polyethylene, which points out that during the polymerization process of the ultra-high molecular weight polyethylene, the catalyst forms an active center with alkyl aluminum, triggering the polymerization reaction of ethylene, while also producing a small amount of metallic acid. If water-washing is not carried out, during the subsequent processing of the powder, the metallic acid can cause the corrosion to processing equipment. In addition, the excessive presence of the high-boiling point alkyl aluminum during the polymerization process reacts with a small amount of oxygen and a trace amount of water in the solvent to generate aluminum hydroxide, which leads to a high content of the aluminum element in polyethylene, thereby reducing the tensile strength, the impact strength, and the wear resistance of the product. Therefore, the current situation in this field is still to wish developing an ultra-high molecular weight polyethylene with high and controllable viscosity-average molecular weight, adjustable viscosity-average molecular weight, high bulk density and high mechanical property, low metal element content and low ash content, and high mechanical property; and a process for preparing an ultra-high molecular weight polyethylene that satisfies the following characteristics: under the ethylene slurry polymerization conditions, the catalyst has a long active life and high polymerization activity, the polymerization preparation process is flexible and adjustable, and is suitable for large-scale implementation. The produced ultra-high molecular weight polyethylene has a high bulk density, and the ethylene homopolymer has a low branching degree, the ethylene copolymers have high tensile elasticity modulus, which is beneficial for product packaging, storage, transportation, loading, and downstream processing applications.

**Summary of the Invention**

On the basis of the existing technology, the present inventors have conducted in-depth research and found that raw materials containing ethylene and optionally at least one como-nomer are subjected to a slurry polymerization by using an alkane solvent having a boiling point of 5-55°C or a mixed alkane solvent having a saturated vapor pressure at 20°C of 20-150 KPa as the polymerization solvent of the ethylene slurry polymerization, using a supported non-metallocene catalyst as the main catalyst, and using one or more of aluminoxane, alkyl aluminum, and haloalkyl aluminum as the cocatalyst in the absence of hydrogen gas, which can produce an ultra-high molecular weight polyethylene with low metal element content and high mechanical property. Hence, the aforementioned existing problems can be solved and thus the present invention is completed.

That is to say, with the ultra-high molecular weight polyethylene having low metal element content and high mechanical property and its preparation process of the present invention, an ultra-high molecular weight polyethylene with low metal element content and high mechanical property can be provided without the need for harsh ethylene slurry

polymerization reactor configuration and polymerization reaction conditions, as well as complex post-treatment steps. Specifically, the obtained polyethylene has mechanical properties such as high tensile elasticity modulus, high Young's modulus, high tensile yield strength, high tensile fracture strength, and high impact strength, making it very suitable for industrial scale production and for the subsequent preparation of high-strength ultra-high molecular weight polyethylene fibre, and artificial medical joints.

Specifically, the present invention provides an ultra-high molecular weight polyethylene, wherein the ultra-high molecular weight polyethylene has a viscosity-average molecular weight of 150-1000 $\times$ $10^4$ g/mol, preferably 200-850 $\times$ $10^4$ g/mol, more preferably 300-700 $\times$ $10^4$ g/mol, and a metal element content of 0-50 ppm, preferably 0-30 ppm, and said polyethylene satisfies at least one of condition (1) and condition (2):

Condition (1): tensile elasticity modulus is greater than 250 MPa, preferably greater than 280 MPa, more preferably greater than 300 MPa,
Condition (2): Young's modulus is greater than 300 MPa, preferably greater than 350 MPa.

More specifically, in case that said ultra-high molecular weight polyethylene is an ethylene homopolymer, the viscosity-average molecular weight is 150-1000 $\times$ $10^4$ g/mol, preferably 200-850 $\times$ $10^4$ g/mol, the titanium content is 0-3 ppm, preferably 0-2 ppm, more preferably 0-1 ppm, the calcium content is 0-5 ppm, preferably 0-3 ppm, more preferably 0-2 ppm, the magnesium content is 0-10 ppm, preferably 0-5 ppm, more preferably 0-2 ppm, the aluminum content is 0-30 ppm, preferably 0-20 ppm, more preferably 0-15 ppm, the silicon content is 0-10 ppm, preferably 0-5 ppm, more preferably 0-3 ppm, the chlorine content is 0-50 ppm, preferably 0-30 ppm, the ash content is less than 200 ppm, preferably less than 150 ppm, more preferably 80 ppm or less, the tensile yield strength is greater than 22 MPa, preferably greater than 25 MPa, the tensile strength at break is greater than 32 MPa, preferably greater than 35 MPa, the elongation at break is greater than 350%, preferably greater than 400%, the impact strength is greater than 70 $KJ/m^2$, preferably greater than 75 $KJ/m^2$, the Young's modulus is greater than 300 MPa, preferably greater than 350 MPa, more preferably greater than 400 MPa.

More specifically, in case that said ultra-high molecular weight polyethylene is an ethylene copolymer, the viscosity-average molecular weight is 150-800 $\times 10^4$ g/mol, preferably 200-700 $\times$ $10^4$ g/mol, the titanium content is 0-3 ppm, preferably 0-2 ppm, more preferably 0-1 ppm, the calcium content is 0-5 ppm, preferably 0-3 ppm, more preferably 0-2 ppm, the magnesium content is 0-10 ppm, preferably 0-5 ppm, more preferably 0-2 ppm, the aluminum content is 0-30 ppm, preferably 0-20 ppm, more preferably 0-15 ppm, the silicon content is 0-10 ppm, preferably 0-5 ppm, more preferably 0-3 ppm, the chlorine content is 0-50 ppm, preferably 0-30 ppm, the ash content is less than 200 ppm, preferably less than 150 ppm, more preferably 80 ppm or less, the tensile elasticity modulus is greater than 250 MPa, preferably greater than 280 MPa, more preferably greater than 300 MPa. The present invention also provides a process for preparing an ultra-high molecular weight polyethylene, said ultra-high molecular weight polyethylene has a viscosity-average molecular weight of 150-1000 $\times 10^4$ g/mol, preferably 200-850 $\times$ $10^4$ g/mol, more preferably 300-700 $\times$ $10^4$ g/mol, wherein raw materials containing ethylene and optionally at least one como-nomer are subjected to the slurry polymerization in the absence of hydrogen gas, using a supported non-metallocene catalyst as the main catalyst, using one or more of aluminoxane, alkyl aluminum, and haloalkyl aluminum as the cocatalyst, using an alkane solvent having a boiling point of 5-55°C or a mixed alkane solvent having a saturated vapor pressure at 20°C of 20-150 KPa (preferably 40-110 KPa) as the polymerization solvent, to produce the ultra-high molecular weight polyethylene having a low metal element content.

### Technical effect

The ultra-high molecular weight polyethylene of the present invention has high viscosity-average molecular weight, low metal element content, low ash content, and excellent mechanical property. Specifically, the polyethylene has high tensile elasticity modulus, high tensile yield strength, high tensile strength at break, high impact strength and high Young's modulus, and high elongation at break, which is very beneficial for improving the tensile strength, the impact strength, and the wear resistance of the products made of this polyethylene.

Through the preparation process of the present invention, the used amount of the cocatalyst required for the preparation process is low, the polymerization process is stable, the real-time consumption of ethylene is stable, the activity life of the polymerization system is long, and the ethylene slurry polymerization activity is high. A polyethylene having an ultra-high viscosity average molecular weight (ethylene homopolymer or ethylene copolymer) can be obtained at a relatively higher polymerization temperature.

In addition, through the polymerization process of the present invention, an alkane solvent having a boiling point of 5-55°C or a mixed alkane solvent having a saturated vapor pressure at 20°C of 20-150 KPa as the polymerization solvent is used as the polymerization solvent. The selection range for the polymerization solvent is wide, and there is a wide range of options for the heat removal manner during the polymerization reaction and the post-treatment of the

obtained ultra-high molecular weight polyethylene powder. Moreover, the post-treatment of the obtained ultra-high molecular weight polyethylene can be easily carried out. Moreover, when combined with the use of non-metallocene catalysts, the obtained ultra-high molecular weight polyethylene has a low residual solvent content, which is very conducive to shortening the drying time of the polyethylene material, and saving the cost of the polyethylene post-treatment, which in return facilitates the subsequent industrial application of the ethylene polymer. Moreover, polyethylene with low metal element content and low ash content as well as excellent mechanical properties can be achieved.

Moreover, in the polymerization process of the present invention, only an alkane solvent having a boiling point of 5-55°C or a mixed alkane solvent having a saturated vapor pressure of 20-150KPa at 20°C is used as the polymerization solvent without the need of using other solvents such as dispersants and diluents, resulting in a simplex reaction system and a simple and easy post-treatment.

**Detailed description**

Reference will now be made in detail to the present embodiments of the present invention, but it should be understood that the scope of the invention is not limited by the embodiments, but is defined by the appended claims.

In the context of the present invention, unless otherwise clearly defined or beyond the understanding of those skilled in the art, the hydrocarbons or hydrocarbon-derived groups having three or more carbon atoms (such as propyl, propyloxy, butyl, butane, butene, butenyl, and hexane) that are not prefixed with "n-" have the same meanings as those prefixed with "n-". For example, propyl is generally understood as n-propyl, while butyl is generally understood as n-butyl, unless otherwise specified.

In this specification, in order to avoid complicated expressions, it is not clear whether the valence bond status of each substituent or group of the compound is monovalent, divalent, trivalent, or tetravalent, those skilled in the art can make specific judgments based on the positions or substitutions of these substituents or groups (such as groups G, D, B, A, and F recorded or defined in this specification) on the structural formulas of corresponding compounds, and choose the definition that is suitable for the valence bond status at that position or substitution situation from the definitions provided in this specification for these substituents or groups. All publications, patent applications, patents, and other references mentioned in this specification are all incorporated herein by reference. Unless defined otherwise, all technical and scientific terms used herein have the same meanings as commonly understood by those skilled in the art to which this invention belongs. In case of conflict, the present specification, including definitions, will control.

When the specification derives a material, a substance, a process, a step, a device, an element and the like with the expression such as "known to those skilled in the art", "prior art", or the anologous term, it is intended that the subject matter so derived encompasses those having been conventionally used in the art at the time of filing this application, but also includes those which may not be so commonly used at the present time, but will become known in the art as being suitable for a similar purpose.

In the context of this specification, except for what is explicitly stated, any item or matter not mentioned is directly applicable to those known in the art without any changes. Moreover, any of the embodiments described herein can be freely combined with one or more other embodiments described herein, and the resulting technical solutions or technical ideas are regarded as part of the original disclosure or the original record of the present invention, and should not be regarded as new content that has not been disclosed or anticipated in this specification, unless those skilled in the art believe that the combination is obviously unreasonable.

In the absence of an explicit indication, all percentages, parts, ratios and the like mentioned in this specification are based on the weight, unless the basis on the weight is not consistent with the conventional knowledge of those skilled in the art.

Reference will now be made in detail to the present embodiments of the present invention, but it should be understood that the scope of the invention is not limited by the embodiments, but is defined by the appended claims.

In the context of the present invention, unless otherwise specified, the physical property values (such as boiling point) of the material are the values measured at normal temperature (25°C) and normal pressure (101325 Pa).

The inventors of the present invention have conducted in-depth research and confirmed that in the polymerization process of the present invention, by using an alkane solvent having a boiling point of 5-55°C or a mixed alkane solvent having a saturated vapor pressure at 20°C of 20-150 KPa as the polymerization solvent, compared with the previous polymerization solvents, the specific polymerization solvent of the present invention and ethylene and optionally at least one olefin for copolymerization (e.g. propylene, 1-butene, 1-hexene, 1-octene) as the reactant have significant different boiling points, therefore the post-treatment of the obtained ultra-high molecular weight polyethylene powder may be conveniently and efficiently performed, and the residual solvent content in the obtained ultra-high molecular weight polyethylene powder is low, which is very conducive to shortening the drying time of the polyethylene powder, saving the cost of the post-treatment of the polyethylene powder. Moreover, in the present invention, only an alkane solvent having a boiling point of 5-55°C or a mixed alkane solvent having a saturated vapor pressure at 20°C of 20-150 KPa as the polymerization solvent is used as the polymerization solvent without the need of using other solvents such

as dispersants and diluents, resulting in a simplex reaction system and a simple and easy post-treatment.

Moreover, in the present invention, the catalytic activity of the slurry polymerization system can be further improved by using a catalyst system of non-metallocene catalyst and cocatalyst in the polymerization solvent of an alkane solvent having a boiling point of 5-55°C or a mixed alkane solvent having a saturated vapor pressure at 20°C of 20-150 KPa (preferably 40-110 KPa), resulting in a stable polymerization process and a stable ethylene real-time consumption, and therefore a polyethylene having an ultra-high viscosity-average molecular weight can be obtained at a higher polymerization temperature. Moreover, when the slurry polymerization system of the present invention is used for copolymerization, a higher insertion rate of olefin for copolymerization can be obtained.

Therefore, the ultra-high molecular weight polyethylene obtained with the present invention shows high viscosity-average molecular weight, low metal element content, and low ash content. The obtained polyethylene has excellent mechanical property, specifically, the polyethylene has high tensile elasticity modulus, high tensile yield strength, high tensile strength at break, high impact strength and high Young's modulus, and high elongation at break. Therefore, the products obtained by using the ultra-high molecular weight polyethylene of the present invention have excellent mechanical strength and low impurity content. Therefore, the products obtained by using the ultra-high molecular weight polyethylene of the present invention are suitable for application in fields such as aerospace, medical materials, and other fields with strict quality requirements.

Through the polymerization process of the present invention, after preparing the crude product of the ultra-high molecular weight polyethylene, there is no need for complex subsequent purification processes (such as high-purity solvent washing, high-purity water washing, high-temperature digestion, and polymer melting and filtering), and nothing remains but to remove the corresponding solvent (through filtering, decanting, flash evaporation, evaporation to dryness, and the like), so that the high-purity ultra-high molecular weight polyethylene with low metal element content, low ash content, and excellent mechanical property can be obtained.

In the present invention, ethylene homopolymer and ethylene copolymer are commonly referred to as ethylene polymer or polyethylene. When there is a copolymerization unit, the ultra-high molecular weight polyethylene of the present invention is not a block copolymer, and its structure is a random copolymerization structure.

An ultra-high molecular weight polyethylene provided by the present invention is characterized in that the ultra-high molecular weight polyethylene has a viscosity-average molecular weight of 150-1000 $\times$ $10^4$ g/mol, preferably 200-850 $\times$ $10^4$ g/mol, more preferably 300-700 $\times$ $10^4$ g/mol, and a metal element content of 0-50 ppm, preferably 0-30 ppm, and said polyethylene satisfies at least one of condition (1) and condition (2):

Condition (1): tensile elasticity modulus is greater than 250 MPa, preferably greater than 280 MPa, more preferably greater than 300 MPa,

Condition (2): Young's modulus is greater than 300 MPa, preferably greater than 350 MPa.

In one embodiment of the present invention, said polyethylene has a bulk density of 0.30-0.55 g/cm$^3$, preferably 0.33-0.52 g/cm$^3$, more preferably 0.40-0.50 g/cm$^3$. In one embodiment of the present invention, said polyethylene has a true density of 0.900-0.940 g/cm$^3$, preferably 0.905-0.935 g/cm$^3$, further preferably 0.915-0.930 g/cm$^3$. In one embodiment of the present invention, said polyethylene has a melting point of 140-152°C, preferably 142-150°C. In one embodiment of the present invention, said polyethylene has a crystallinity of 40-75%, preferably 45-70%.

In one embodiment of the present invention, said polyethylene has a titanium content of 0-3 ppm, preferably 0-2 ppm, more preferably 0-1 ppm. In one embodiment of the present invention, said polyethylene has a calcium content of 0-5 ppm, preferably 0-3 ppm, more preferably 0-2 ppm. In one embodiment of the present invention, said polyethylene has a magnesium content of 0-10 ppm, preferably 0-5 ppm, more preferably 0-2 ppm. In one embodiment of the present invention, said polyethylene has an aluminum content of 0-30 ppm, preferably 0-20 ppm, more preferably 0-15 ppm. In one embodiment of the present invention, said polyethylene has a silicon content of 0-10 ppm, preferably 0-5 ppm, more preferably 0-3 ppm. In one embodiment of the present invention, said polyethylene has a chlorine content of 0-50 ppm, preferably 0-30 ppm.

In one embodiment of the present invention, when the polyethylene contains comonomer units, the polyethylene is a random copolymer, the comonomer molar insertion rate is 0.05-4.0%, preferably 0.10-2.0%.

In one embodiment of the present invention, said polyethylene satisfies at least one of the following condition (3) to condition (6):

Condition (3): the tensile yield strength is greater than 22 MPa, preferably greater than 25 MPa,

Condition (4): the tensile strength at break is greater than 32 MPa, preferably greater than 35 MPa,

Condition (5): the elongation at break is greater than 350%, preferably greater than 400%,

Condition (6): the impact strength is greater than 70 KJ/m$^2$, preferably greater than 75 KJ/m$^2$.

In one embodiment of the present invention, said polyethylene has an ash content of less than 200 ppm,

preferably less than 150 ppm, more preferably 80 ppm or less.

In one embodiment of the present invention, when said polyethylene is an ethylene homopolymer, its viscosity-average molecular weight is 150-1000 $\times$ $10^4$ g/mol, preferably 200-850 $\times$ $10^4$ g/mol.

In one embodiment of the present invention, when the polyethylene is an ethylene homopolymer, it has a titanium content of 0-3 ppm, preferably 0-2 ppm, more preferably 0-1 ppm, a calcium content of 0-5 ppm, preferably 0-3 ppm, more preferably 0-2 ppm, a magnesium content of 0-10 ppm, preferably 0-5 ppm, more preferably 0-2 ppm, a aluminum content of 0-30 ppm, preferably 0-20 ppm, more preferably 0-15 ppm, a silicon content of 0-10 ppm, preferably 0-5 ppm, more preferably 0-3 ppm, a chlorine content of 0-50 ppm, preferably 0-30 ppm.

In one embodiment of the present invention, when said polyethylene is ethylene homopolymer, it has a bulk density of 0.30-0.55 g/cm$^3$, preferably 0.33-0.52 g/cm$^3$, more preferably 0.40-0.45 g/cm$^3$, a true density of 0.910-0.940 g/cm$^3$, preferably 0.915-0.935 g/cm$^3$, more preferably 0.920-0.930 g/cm$^3$, a melting point of 140-152°C, preferably 142-150°C, a crystallinity of 40-75%, preferably 45-70%.

In one embodiment of the present invention, when said polyethylene is ethylene homopolymer, it has a tensile yield strength of greater than 22 MPa, preferably greater than 25 MPa, a tensile strength at break of greater than 32 MPa, preferably greater than 35 MPa, an elongation at break of greater than 350%, preferably greater than 400%, an impact strength of greater than 70 KJ/m$^2$, preferably greater than 75 KJ/m$^2$, and a Young's modulus of greater than 300 MPa, preferably greater than 350 MPa.

In one embodiment of the present invention, when said polyethylene is ethylene homopolymer, it has an ash content of less than 200 ppm, preferably less than 150 ppm, more preferably 80 ppm or less.

In one embodiment of the present invention, when said polyethylene is an ethylene copolymer, it has a viscosity-average molecular weight of 150-800 $\times$ $10^4$ g/mol, preferably 200-700 $\times$ $10^4$ g/mol.

In one embodiment of the present invention, when said polyethylene is an ethylene copolymer, it has a titanium content of 0-3 ppm, preferably 0-2 ppm, more preferably 0-1 ppm, a calcium content of 0-5 ppm, preferably 0-3 ppm, more preferably 0-2 ppm, a magnesium content of 0-10 ppm, preferably 0-5 ppm, more preferably 0-2 ppm, an aluminum content of 0-30 ppm, preferably 0-20 ppm, more preferably 0-15 ppm, a silicon content of 0-10 ppm, preferably 0-5 ppm, more preferably 0-3 ppm, a chlorine content of 0-50 ppm, preferably 0-30 ppm.

In one embodiment of the present invention, when said polyethylene is an ethylene copolymer, it has a bulk density of 0.30-0.55 g/cm$^3$, preferably 0.33-0.52 g/cm$^3$, more preferably 0.41-0.50 g/cm$^3$, a true density of 0.900-0.940 g/cm$^3$, preferably 0.905-0.935 g/cm$^3$, more preferably 0.910-0.930 g/cm$^3$, a melting point of 140-152°C, preferably 142-150°C, a crystallinity of 40-75%, preferably 45-70%. In one embodiment of the present invention, when the polyethylene is an ethylene copolymer, the copolymer has a random copolymerization structure, the comonomer molar insertion rate is 0.05-4.0%, preferably 0.10-2.0%.

In one embodiment of the present invention, when said polyethylene is an ethylene copolymer, the tensile elasticity modulus is greater than 250 MPa, preferably greater than 280 MPa, more preferably greater than 300 MPa.

In one embodiment of the present invention, when said polyethylene is an ethylene copolymer, it has an ash content of less than 200 ppm, preferably less than 150 ppm, more preferably 80 ppm or less.

The ultra-high molecular weight polyethylene provided by the present invention has a metal element content of 0-50 ppm, preferably 0-30 ppm.

The ultra-high molecular weight polyethylene of the present invention is obtained through the following ethylene slurry preparation process of the present invention. The present invention provides a process for preparing an ultra-high molecular weight polyethylene, wherein raw materials containing ethylene and optionally at least one como-nomer are subjected to slurry polymerization in the absence of hydrogen gas, using a supported non-metallocene catalyst as the main catalyst, using one or more of aluminoxane, alkyl aluminum, and haloalkyl aluminum as the cocatalyst, using an alkane solvent having a boiling point of 5-55°C or a mixed alkane solvent having a saturated vapor pressure at 20°C of 20-150 KPa (preferably 40-110 KPa) as the polymerization solvent.

In one embodiment of the present invention, In the process for preparing said ultra-high molecular weight polyethylene, the polymerization temperature is 50-100°C, preferably 60-90°C, and the polymerization pressure is 0.4-4.0 MPa, preferably 1.0-3.0 MPa, most preferably 1.5-3.0 MPa.

In one embodiment of the present invention, the slurry polymerization is a tank slurry polymerization.

In one embodiment of the present invention, in the process for preparing said ultra-high molecular weight polyethylene, the ethylene slurry polymerization activity is higher than 2 $\times$ $10^4$ gpolyethylene/g main catalyst, preferably the polymerization activity is higher than 3 $\times$ $10^4$ g polyethylene/g main catalyst, most preferably the polymerization activity is higher than 4 $\times$ $10^4$ g polyethylene/g main catalyst.

In one embodiment of the present invention, in the process for preparing said ultra-high molecular weight polyethylene, in case that the comonomer is present, the molar ratio of the comonomer to the active metal in the catalyst is 10-500: 1, preferably 20-400:1, and ethylene and the comonomer are charged together into the polymerization to perform the one-step polymerization.

In one embodiment of the present invention, in the process for preparing said ultra-high molecular weight

polyethylene, no hydrogen gas is used.

In the present invention, ethylene homopolymer refers to a homopolymer formed by homopolymerization of ethylene as the sole polymerization monomer, while ethylene copolymer refers to a copolymer formed by copolymerization of ethylene with at least one como-nomer that is not ethylene.

Specifically, for the ethylene copolymer, the comonomer is selected from alpha-olefins, diolefins, cyclic olefins and other olefinic unsaturated compounds. As said alpha-olefin, it can be a $C_3$-$C_{10}$ alpha-olefin, for example, propylene, 1-butene, 1-pentene, 1-hexene, 1-heptene, 4-methyl-1-pentene, 4-methyl-1-hexene, 1-octene, 1-decene, 1-undecene, 1-dodecene, and styrene can be enumerated. As the cyclic olefin, for example, 1-cyclopentene, ethylidene norbornene, and norbornene can be enumerated. As the diolefin, for example, 1,4-butadiene, 2,5-pentadiene, 1,5-hexadiene, vinylnorbornene, norbornadiene, 1,7- octadiene and the like can be enumerated. As said other olefinic unsaturated compound, for example, vinyl acetate, (meth)acrylate and the like can be enumerated. Among them, the comonomer is preferably $C_3$-$C_{10}$ alpha-olefin, more preferably selected from 1-butene, 1-hexene, 4-methyl-1-pentene, 1-octene, and mixtures thereof, and further preferably selected from 1-butene, 1-hexene, 1-octene, and mixtures thereof.

The alpha-olefins as the comonomer can be used alone or in combination of two or more of them. In one embodiment of the present invention, when the comonomer is used in the polymerization reaction, the molar ratio of the comonomer to the active metal in the catalyst can be 10-500:1, preferably 20-400:1, more preferably 50-300:1. In one embodiment of the present invention, when the comonomer is used in the polymerization reaction, relative to the total mole number of ethylene and the comonomer, the proportion of the comonomer is 0.01-3 mol%, preferably 0.01-2 mol%.

Moreover, during the polymerization reaction, ethylene and the comonomer are charged together into the polymerization tank. In the present invention, "ethylene and the comonomer are charged together into the polymerization tank" refers to feeding raw materials containing ethylene and the comonomer together into the reaction tank and performing the polymerization reaction together without the presence of segmented polymerization steps, that is, there are neither segmented steps of first polymerizing ethylene and then adding the comonomer for the polymerization, nor segmented steps of homogenizing the comonomer and then adding ethylene for the polymerization.

According to the present invention, the supported non-metallocene catalyst as the main catalyst can be prepared by using well-known processes in the art, such as the following process:

a step of dissolving a magnesium compound in a first solvent in the presence of an alcohol to obtain a magnesium compound solution; a step of mixing a porous support that optionally has undergone a thermal activation treatment and/or a chemical activation treatment with the magnesium compound solution to obtain a first mixed slurry; a step of adding a precipitating agent to the first mixed slurry or drying the first mixed slurry to obtain a composite support; a step of contacting the composite support with a chemical treating agent selected from Group IVB metal compounds to obtain a modified composite support; a step of contacting a non-metallocene complex with the modified composite support in the presence of a second solvent to obtain a second mixed slurry, and optionally drying to obtain the supported non-metallocene catalyst.

The explanation about the magnesium compound will be provided hereinafter.

According to the present invention, the term "magnesium compound" involves an ordinary concept in the art, referring to an organic or inorganic solid anhydrous magnesium-containing compound that is commonly used as the support in the supported olefin polymerization catalyst.

Specifically, as magnesium halide, for example, magnesium chloride ($MgCl_2$), magnesium bromide ($MgBr_2$), magnesium iodide ($MgI_2$) and magnesium fluoride ($MgF_2$) can be enumerated, wherein magnesium chloride is preferable.

As alkoxy magnesium halide, for example, methyloxy magnesium chloride ($Mg(OCH_3)Cl$), ethyloxy magnesium chloride ($Mg(OC_2H_5)Cl$), propyloxy magnesium chloride ($Mg(OC_3H_7)Cl$), n-butyloxy magnesium chloride ($Mg(OC_4H_9)Cl$), iso-butyloxy magnesium chloride ($Mg(i\text{-}OC_4H_9)Cl$), methyloxy magnesium bromide ($Mg(OCH_3)Br$), ethyloxy magnesium bromide ($Mg(OC_2H_5)Br$), propyloxy magnesium bromide ($Mg(OC_3H_7)Br$), n-butyloxy magnesium bromide ($Mg(OC_4H_9)Br$), iso-butyloxy magnesium bromide ($Mg(i\text{-}OC_4H_9)Br$), methyloxy magnesium iodide ($Mg(OCH_3)I$), ethyloxy magnesium iodide ($Mg(OC_2H_5)I$), propyloxy magnesium iodide ($Mg(OC_3H_7)I$), n-butyloxy magnesium iodide ($Mg(OC_4H_9)I$), iso-butyloxy magnesium iodide ($Mg(i\text{-}OC_4H_9)I$) and the like can be enumerated, wherein methyloxy magnesium chloride, ethyloxy magnesium chloride and iso-butyloxy magnesium chloride are preferable.

As alkoxy magnesium, for example, methyloxy magnesium ($Mg(OCH_3)_2$), ethyloxy magnesium ($Mg(OC_2H_5)_2$), propyloxy magnesium ($Mg(OC_3H_7)_2$), butyloxy magnesium ($Mg(OC_4H_9)_2$), iso-butyloxy magnesium ($Mg(i\text{-}OC_4H_9)_2$), 2-ethyl hexyloxy magnesium ($Mg(OCH_2CH(C_2H_5)C_4H_8)_2$) and the like can be enumerated, wherein ethyloxy magnesium and iso-butyloxy magnesium are preferable.

As alkyl magnesium, for example, methyl magnesium ($Mg(CH_3)_2$), ethyl magnesium ($Mg(C_2H_5)_2$), propyl magnesium ($Mg(C_3H_7)_2$), n-butyl magnesium ($Mg(C_4H_9)_2$), iso-butyl magnesium ($Mg(i\text{-}C_4H_9)_2$) and the like can be enumerated, wherein ethyl magnesium and n-butyl magnesium are preferable.

As alkyl magnesium halide, for example, methyl magnesium chloride ($Mg(CH_3)Cl$), ethyl magnesium chloride ($Mg(C_2H_5)Cl$), propyl magnesium chloride ($Mg(C_3H_7)Cl$), n-butyl magnesium chloride ($Mg(C_4H_9)Cl$), iso-butyl magnesium chloride ($Mg(i\text{-}C_4H_9)Cl$), methyl magnesium bromide ($Mg(CH_3)Br$), ethyl magnesium bromide ($Mg(C_2H_5)Br$), propyl

magnesium bromide ($Mg(C_3H_7)Br$), n-butyl magnesium bromide ($Mg(C_4H_9)Br$), iso-butyl magnesium bromide ($Mg(i-C_4H_9)Br$), methyl magnesium iodide ($Mg(CH_3)I$), ethyl magnesium iodide ($Mg(C_2H_5)I$), propyl magnesium iodide ($Mg(C_3H_7)I$), n-butyl magnesium iodide ($Mg(C_4H_9)I$), iso-butyl magnesium iodide ($Mg(i-C_4H_9)I$) and the like can be enumerated, wherein methyl magnesium chloride, ethyl magnesium chloride and iso-butyl magnesium chloride are preferable.

As alkyl alkoxy magnesium, for example, methyl methyloxy magnesium ($Mg(OCH_3)(CH_3)$), methyl ethyloxy magnesium ($Mg(OC_2H_5)(CH_3)$), methyl propyloxy magnesium ($Mg(OC_3H_7)(CH_3)$), methyl n-butyloxy magnesium ($Mg(OC_4H_9)(CH_3)$), methyl iso-butyloxy magnesium ($Mg(i-OC_4H_9)(CH_3)$), ethyl methyloxy magnesium ($Mg(OCH_3)(C_2H_5)$), ethyl ethyloxy magnesium ($Mg(OC_2H_5)(C_2H_5)$), ethyl propyloxy magnesium ($Mg(OC_3H_7)(C_2H_5)$), ethyl n-butyloxy magnesium ($Mg(OC_4H_9)(C_2H_5)$), ethyl iso-butyloxy magnesium ($Mg(i-OC_4H_9)(C_2H_5)$), propyl methyloxy magnesium ($Mg(OCH_3)(C_3H_7)$), propyl ethyloxy magnesium ($Mg(OC_2H_5)(C_3H_7)$), propyl propyloxy magnesium ($Mg(OC_3H_7)(C_3H_7)$), propyl n-butyloxy magnesium ($Mg(OC_4H_9)(C_3H_7)$), propyl iso-butyloxy magnesium ($Mg(i-OC_4H_9)(C_3H_7)$), n-butyl methyloxy magnesium ($Mg(OCH_3)(C_4H_9)$), n-butyl ethyloxy magnesium ($Mg(OC_2H_5)(C_4H_9)$), n-butyl propyloxy magnesium ($Mg(OC_3H_7)(C_4H_9)$), n-butyl n-butyloxy magnesium ($Mg(OC_4H_9)(C_4H_9)$), n-butyl iso-butyloxy magnesium ($Mg(i-OC_4H_9)(C_4H_9)$), iso-butyl methyloxy magnesium ($Mg(OCH_3)(i-C_4H_9)$), iso-butyl ethyloxy magnesium ($Mg(OC_2H_5)(i-C_4H_9)$), iso-butyl propyloxy magnesium ($Mg(OC_3H_7)(i-C_4H_9)$), iso-butyl n-butyloxy magnesium ($Mg(OC_4H_9)(i-C_4H_9)$), iso-butyl iso-butyloxy magnesium ($Mg(i-OC_4H_9)(i-C_4H_9)$) and the like can be enumerated, wherein butyl ethyloxy magnesium is preferable.

These magnesium compounds can be used alone or in combination without any special limitation.

When used in combination, the molar ratio of two magnesium compounds in the mixture of magnesium compounds is, for example, 0.25-4:1, preferably 0.5-3:1, more preferably 1-2:1.

The explanation about the step of obtaining the magnesium compound solution will be provided hereinafter.

According to this step, the magnesium compound is dissolved in the first solvent (hereinafter sometimes also referred to as a solvent for dissolving the magnesium compound) in the presence of the alcohol to obtain the magnesium compound solution.

As the first solvent, for example, solvents such as $C_{6-12}$ aromatic hydrocarbons, halogenated $C_{6-12}$ aromatic hydrocarbons, $C_{5-12}$ alkanes, esters, and ethers can be enumerated.

As the $C_{6-12}$ aromatic hydrocarbon, for example, toluene, xylene, trimethylbenzene, ethylbenzene, and diethylbenzene can be enumerated.

As the halogenated $C_{6-12}$ aromatic hydrocarbon, for example, chlorotoluene, chloroethylbenzene, bromotoluene, bromoethylbenzene and the like can be enumerated.

As the $C_{5-12}$ alkane, for example, pentane, hexane, heptane, octane, nonane, and decane can be enumerated, wherein hexane, heptane, and decane are preferable, and hexane is most preferable.

As the ester, for example, methyl formate, ethyl formate, propyl formate, butyl formate, methyl acetate, ethyl acetate, propyl acetate, butyl acetate, methyl propionate, ethyl propionate, butyl propionate, butyl butyrate and the like can be enumerated.

As the ether, for example, diethylether, methylethylether, tetrahydrofuran, and the like can be enumerated.

Among them, $C_{6-12}$ aromatic hydrocarbons, $C_{5-12}$ alkanes, and tetrahydrofuran are preferable, and tetrahydrofuran is most preferable.

These solvents can be used alone or in combination at any proportion.

According to the present invention, the term 'alcohol' refers to a compound obtained by replacing at least one hydrogen atom on a hydrocarbon chain (such as $C_{1-30}$ hydrocarbon) with hydroxyl group(s). It can be selected from aliphatic alcohols, aromatic alcohols, alicyclic alcohols and mixtures thereof.

As the alcohol, for example, $C_{1-30}$ aliphatic alcohols (preferably $C_{1-30}$ aliphatic monohydric alcohols), $C_{6-30}$ aromatic alcohols (preferably $C_{6-30}$ aromatic monohydric alcohols), and $C_{4-30}$ alicyclic alcohols (preferably $C_{4-30}$ alicyclic monohydric alcohols) can be enumerated, wherein $C_{1-30}$ aliphatic monohydric alcohols or $C_{2-8}$ aliphatic monohydric alcohols are preferable, and ethanol and butanol are more preferable. In addition, the alcohol can be optionally substituted with at least one substituent selected from halogen atoms or $C_{1-6}$ alkoxy groups. As the $C_{1-30}$ aliphatic alcohol, for example, methanol, ethanol, propanol, 2-propanol, butanol, pentanol, 2-methylpentanol, 2-ethylpentanol, 2-hexylbutanol, hexanol, and 2-ethylhexanol and the like can be enumerated, wherein ethanol, butanol, and 2-ethylhexanol are preferable.

As the $C_{6-30}$ aromatic alcohol, for example, benzyl alcohol, phenylethyl alcohol, and methylbenzyl alcohol can be enumerated, wherein phenylethyl alcohol is preferable.

As the $C_{4-30}$ alicyclic alcohol, for example, cyclohexanol, cyclopentanol, cyclooctanol, methylcyclopentanol, ethylcyclopentanol, propylcyclopentanol, methylcyclohexanol, ethylcyclohexanol, propylcyclohexanol, methylcyclooctanol, ethylcyclooctanol and propylcyclooctanol and the like can be enumerated, wherein cyclohexanol and methylcyclohexanol are preferable.

As the halogen-substituted alcohol, for example, trichloromethanol, trichloroethanol, trichlorohexanol and the like can be enumerated, wherein trichloromethanol is preferable.

As the alkoxy-substituted alcohol, for example, ethylene glycol-ethyl ether, ethylene glycol-n-butyl ether, 1-butoxy-2-propanol and the like can be enumerated, wherein ethylene glycol-ethyl ether is preferable.

These alcohols can be used alone or in combination. When used in combination, the ratio of any two alcohols in the alcohol mixture can be arbitrarily determined without special limitations.

In order to prepare the magnesium compound solution, the magnesium compound can be added to a mixed solvent formed from the first solvent and the alcohol for dissolution, or the magnesium compound can be added to the first solvent and the alcohol can be added simultaneously or subsequently for dissolution, but not limited thereto. The preparation time of the magnesium compound solution (i.e. the dissolution time of the magnesium compound) is not particularly limited, but is generally 0.5-24 hours, preferably 4-24 hours. During the preparation process, stirring can be used to promote the dissolution of the magnesium compound. The stirring can be performed in any manner, for example, with a stirring paddle (usually with a rotation speed of 10-1000 rpm) and the like. As needed, sometimes dissolution can be promoted by appropriate heating (but the maximum temperature must be lower than the boiling points of the first solvent and the alcohol). According to the present invention, the porous support that optionally has undergone a thermal activation treatment and/or a chemical activation treatment is mixed with the magnesium compound solution to obtain the first mixed slurry. The explanation about the porous support will be provided hereinafter.

According to the present invention, as the porous support, for example those organic or inorganic porous solids conventionally used as the support in the preparation of a supported olefin polymerization catalyst in the art can be enumerated.

Specifically, as said organic porous solid, for example, olefin homopolymer or copolymer, polyvinyl alcohol or a copolymer thereof, cyclodextrin, (co)polyester, (co)polyamide, vinyl chloride homopolymer or copolymer, acrylate homopolymer or copolymer, methacrylate homopolymer or copolymer, styrene homopolymer or copolymer and the like, and a partially crosslinked form of these homopolymers or copolymers can be enumerated, wherein a partially crosslinked styrene polymer (for example having a crosslinking degree of at least 2% but less than 100%) is preferable.

According to a preferred embodiment of the present invention, it is preferable to have any one or more active functional groups on the surface of the organic porous solid, for example selected from hydroxy, primary amino, secondary amino, sulfonic group, carboxyl, amido, N-mono-substituted amido, sulfamido, N-mono-substituted sulfamido, mercapto, imido and hydrazido, preferably at least one of carboxyl and hydroxy.

According to one embodiment of the present invention, the organic porous solid is subjected to a thermal activation treatment and/or a chemical activation treatment before use.

According to the present invention, the organic porous solid can be only subjected to a thermal activation treatment before use, or can be also only subjected to a chemical activation treatment before use, or can be subjected to said thermal activation treatment and said chemical activation treatment in any combination order before use, without special limitations.

The thermal activation treatment can be carried out according to a usual manner. For example, said organic porous solid is heated under a reduced pressure or in an inert atmosphere. The inert atmosphere herein means that the gas contains only a very small amount of the component that can be reacted with said organic porous solid or is free of the component that can be reacted with said organic porous solid. As said inert atmosphere, for example, nitrogen gas atmosphere or noble gas atmosphere can be enumerated, wherein nitrogen gas atmosphere is preferable. Since the organic porous solid has poor heat resistance, the thermal activation process should be carried out based on a prerequisite that it does not damage the structure and basic composition of the organic porous solid itself. Generally, the thermal activation temperature is 50-400°C, preferably 100-250°C, and the thermal activation time is 1-24 hours, preferably 2-12 hours.

After the thermal activation/chemical activation treatment, the organic porous solid needs to be kept under a positive pressure in an inert atmosphere for later use.

As said inorganic porous solid, for example, refractory oxides of Group IIA, IIIA, IVA or IVB metal of the periodic table of elements (for example silica (also known as silicon oxide or silica gel), alumina, magnesia, titania, zirconia, thoria or the like), or any refractory composite oxide of these metals (for example silica-alumina, magnesia-alumina, titania-silica, titania-magnesia and titania-alumina or the like), and clay, molecular sieve (for example ZSM-5 and MCM-41), mica, montmorillonite, bentonite, diatomaceous earth and the like can be enumerated. As said inorganic porous solid, an oxide formed by the pyrohydrolysis of a gaseous metal halide or a gaseous silicon compound, for example silica gel obtained by the pyrohydrolysis of silicon tetrachloride, alumina obtained by the pyrohydrolysis of aluminium trichloride, or the like can also be enumerated.

As said inorganic porous solid, silica, alumina, magnesia, silica-alumina, magnesia-alumina, titania-silica, titania, molecular sieve, montmorillonite and the like are preferable, and silica is particularly preferable.

According to the present invention, a suitable silica can be produced by a conventional process, or may be any commercially available product, for example, Grace 955, Grace 948, Grace SP9-351, Grace SP9-485, Grace SP9-10046, Grace 2480D, Grace 2212D, Grace 2485, Davsion Syloid 245 and Aerosil812 available from the Grace company; ES70, ES70X, ES70Y, ES70W, ES757, EP10X and EP11 available from the Ineos company; and CS-2133 and MS-3040

available from the PQ company.

According to a preferred embodiment of the present invention, it is preferable to have active functional groups such as hydroxy on the surface of the inorganic porous solid.

According to one embodiment of the present invention, the inorganic porous solid is subjected to a thermal activation treatment and/or a chemical activation treatment before use.

According to the present invention, the inorganic porous solid can be only subjected to a thermal activation treatment before use, or can be also only subjected to a chemical activation treatment before use, or can be subjected to said thermal activation treatment and said chemical activation treatment in any combination order before use, without special limitations.

The thermal activation treatment can be carried out in the usual way, e.g. heating the inorganic porous solid under reduced pressure or inert atmosphere. The inert atmosphere herein means that the gas contains only a very small amount of the component that can be reacted with said inorganic porous solid or is free of the component that can be reacted with said inorganic porous solid. As said inert atmosphere, for example, nitrogen gas atmosphere or noble gas atmosphere can be enumerated, wherein nitrogen gas atmosphere is preferable. Generally, the thermal activation temperature is 200-800°C, preferably 400-700°C, most preferably 400-650°C, and the heating time is for example 0.5-24 hours, preferably 2-12 hours, most preferably 4-8 hours.

After the thermal activation/chemical activation treatment, the inorganic porous solid needs to be kept under a positive pressure in an inert atmosphere for later use.

According to the present invention, the chemical activation treatment of the organic porous solid or the inorganic porous solid can be carried out in the usual manner. For example, a process of using a chemical activator to chemically activate the organic porous solid or the inorganic porous solid can be enumerated. According to the present invention, the Group IVB metal compound is used as the chemical activator.

As said Group IVB metal compound, for example, at least one of Group IVB metal halide, Group IVB metal alkyl compound, Group IVB metal alkoxy compound, Group IVB metal alkyl halide and Group IVB metal alkoxy halide can be enumerated.

As said Group IVB metal compound, said Group IVB metal halide is preferable, $TiCl_4$, $TiBr_4$, $ZrCl_4$, $ZrBr_4$, $HfCl_4$ and $HfBr_4$ are more preferable, and $TiCl_4$ and $ZrCl_4$ are most preferable.

These Group IVB metal compounds can be used alone or in combination at any proportion.

When the chemical activator is liquid at normal temperature, it can be directly used by dropwise adding a predetermined amount of the chemical activator to the organic porous solid or inorganic porous solid to be activated with the chemical activator.

When the chemical activator is solid at normal temperature, it is preferred to use the chemical activator in solution form for ease of measurement and operation. Of course, when the chemical activator is liquid at room temperature, it can sometimes be used in solution form as needed, without special limitations.

When preparing a solution of the chemical activator, there is no special limit on the solvent used at this time, as long as it can dissolve the chemical activator. Specifically, $C_{5-12}$ alkane, $C_{5-12}$ cycloalkane, halogenated $C_{5-12}$ alkane, halogenated $C_{5-12}$ cycloalkane, $C_{6-12}$ aromatic hydrocarbon, halogenated $C_{6-12}$ aromatic hydrocarbon and the like, can be enumerated, for example, pentane, hexane, heptane, octane, nonane, decane, undecane, dodecane, cyclopentane, cyclohexane, cycloheptane, cyclooctane, toluene, ethylbenzene, xylene, chloropentane, chlorohexane, chloroheptane, chlorooctane, chlorononane, chlorodecane, chloroundecane, chlorododecane, chlorocyclohexane, chlorotoluene, chloroethylbenzene, chloroxylene and the like can be enumerated, wherein pentane, hexane, decane, cyclohexane and toluene are preferable, hexane and toluene are most preferable.

These solvents can be used alone or in combination at any proportion.

In addition, there is no special limit on the concentration of the chemical activator in its solution, and it can be appropriately selected as required, as long as it can achieve the chemical activation with a predetermined amount of the chemical activator. As mentioned earlier, if the chemical activator is liquid, it can be directly used for activation, but it can also be formulated into a chemical activator solution and used.

Conveniently, the molar concentration of the chemical activator in its solution is generally set at 0.01-1.0 mol/L, but is not limited thereto.

As the process of performing the chemical activation, for example, the following can be enumerated: in the case that the chemical activator is solid (e.g. zirconium tetrachloride), a solution of the chemical activator is first prepared, and then a solution containing a predetermined amount of the chemical activator is added (preferably dropwise) to the organic or inorganic porous solid to be activated to perform the chemical activation reaction. In the case that the chemical activator is liquid (e.g. titanium tetrachloride), a predetermined amount of the chemical activator can be directly added (preferably dropwise) to the organic porous solid or inorganic porous solid to be activated to perform the chemical activation reaction, or the chemical activator is prepared into a solution, and then to the organic porous solid or inorganic porous solid to be activated is added (preferably dropwise) the solution containing a predetermined amount of said chemical activator to perform the chemical activation reaction.

Generally speaking, the chemical activation reaction (with stirring if necessary) is performed for 0.5-24 hours, preferably 1-8 hours, and more preferably 2-6 hours at a reaction temperature of -30 to 60°C (preferably -20 to 30°C).

After the chemical activation reaction is completed, the organic porous solid or inorganic porous solid that has undergone the chemical activation can be obtained through filtering, washing, and drying.

According to the present invention, the filtering, washing, and drying can be carried out according to the conventional processes, wherein the washing solvent can be the same solvent as used for dissolving the chemical activator. As required, the washing is generally performed 1-8 times, preferably 2-6 times, and most preferably 2-4 times.

The drying can be performed by using conventional processes, e.g. inert gas drying, drying in vacuum or heating and drying in vacuum, preferably inert gas drying or heating and drying in vacuum, most preferably heating and drying in vacuum. The drying temperature range is generally from normal temperature to 140°C, the drying time is generally 2-20 hours, but not limited thereto. According to the present invention, the chemical activator is used in such an amount that the ratio of the porous support to the chemical activator as Group IVB metal elements is 1 g: 1-100 mmol, preferably 1 g:2-5 mmol, more preferably 1 g: 10-25 mmol.

According to the present invention, there is no specific limit on the surface area of the porous support, but it is generally 10-1000 $m^2/g$ (measured by BET process), preferably 100-600 $m^2/g$; the pore volume of the porous support (measured by nitrogen adsorption method) is generally 0.1-4 $cm^3/g$, preferably 0.2-2 $cm^3/g$, and its average particle size (measured by laser particle size analyzer) is preferably 1-500 mm, more preferably 1-100 mm.

According to the present invention, the porous support can be in any morphology, such as micropowder, granular, spherical, aggregate, or other forms.

The porous support (that optionally has undergone a thermal activation treatment and/or a chemical activation treatment) is mixed with the magnesium compound solution to obtain the first mixed slurry.

According to the present invention, the process of mixing the porous support and the magnesium compound solution can be carried out by using conventional processes without special limitations. For example, the following can be enumerated: in the range from normal temperature to the temperature at which the magnesium compound solution is prepared, the porous support is added in a metered amount to the magnesium compound solution or the magnesium compound solution is added in a metered amount to the porous support, the resulting material is mixed for 0.1-8 hours, preferably 0.5-4 hours, preferably 1-2 hours (with stirring if necessary).

According to the present invention, the porous support is used in such an amount that the mass ratio of the magnesium compound (as the solid magnesium compound contained in the magnesium compound solution) to the porous support reaches 1:0.1-20, preferably 1:0.5-10, more preferably 1:1-5.

At this point, the obtained first mixed slurry is a slurry-like system. Although it is not necessary, in order to ensure the uniformity of the system, the first mixed slurry is preferably placed in a sealed state for a certain period of time (2-48 hours, preferably 4-24 hours, most preferably 6-18 hours) after the preparation. According to the present invention, a solid product with good flowability can be obtained by directly drying the first mixed slurry, and it is a composite support of the present invention.

At this point, the direct drying can be carried out by using conventional processes, e.g. drying in an inert gas atmosphere, drying in vacuum, heating and drying in vacuum, or the like, wherein heating and drying in vacuum is preferable. The drying temperature is generally 30-160°C, preferably 60-130°C, and the drying time is generally 2-24 hours, but not limited thereto in some cases.

Alternatively, according to the present invention, a composite support can be obtained by adding a precipitating agent in a metered amount to the first mixed slurry to precipitate solid substances from the first mixed slurry.

The explanation about the precipitating agent will be provided hereinafter.

According to the present invention, the term "precipitating agent" involves an ordinary concept in the art, and refers to a chemically inert liquid that can reduce the solubility of a solid solute (e.g. the magnesium compound, the porous support, the non-metallocene ligand, or the non-metallocene complex, and the like) in its solution and subsequently precipitate them in solid form from the solution. According to the present invention, as the precipitating agent, for example, such a solvent can be enumerated that it is a poor solvent for the solid solute to be precipitated (e.g. the magnesium compound, the porous support, the non-metallocene ligand, the non-metallocene complexe, or the like), but a good solvent relative to the solvent for dissolving the solid solute (e.g. the magnesium compound). For example, $C_{5-12}$ alkanes, $C_{5-12}$ cycloalkanes, halogenated $C_{1-10}$ alkanes, and halogenated $C_{5-12}$ cycloalkanes can be enumerated.

As the $C_{5-12}$ alkane, for example, pentane, hexane, heptane, octane, nonane, and decane can be enumerated, wherein hexane, heptane, and decane are preferable, and hexane is most preferable.

As said $C_{5-12}$ cycloalkane, for example, cyclohexane, cyclopentane, cycloheptane, cyclodecane, cyclononane and the like can be enumerated, and cyclohexane is most preferable.

As said halogenated $C_{1-10}$ alkane, for example, the following can be enumerated: dichloromethane, dichlorohexane, dichloroheptane, trichloromethane, trichloroethane, trichlorobutane, dibromomethane, dibromoethane, dibromoheptane, tribromomethane, tribromoethane, tribromobutane and the like. As said halogenated $C_{5-12}$ cycloalkane, for example, the following can be enumerated: chlorocyclopentane, chlorocyclohexane, chlorocycloheptane, chlorocyclooctane, chlorocyclononane, chlorocyclodecane, bromocyclopentane, bromocyclohexane, bromocycloheptane, bromocyclooctane, bromocyclononane, bromocyclodecane and the like.

These precipitating agents can be used alone or in combination at any proportion.

The precipitating agent can be added in one shot or dropwise, preferably in one shot. During this precipitation process, stirring can be used to promote the dispersion of the precipitating agent and facilitate the final precipitation of the solid product. The stirring can be done in any form (e.g. with a stirring paddle), and the rotation speed is usually 10-1000 rpm and the like.

There is no specific limit on the used amount of the precipitating agent, but generally by volume, the ratio of the precipitating agent to the solvent used to dissolve the magnesium compound is 1:0.2-5, preferably 1:0.5-2, more preferably 1:0.8-1.5.

There is no specific limit on the temperature of the used precipitating agent, but it is generally preferable to be from normal temperature to a temperature that is below the boiling point of any of the used solvents and the boiling point of the precipitating agent (preferably 20-80°C, more preferably 40-60°C), but not limited thereto in some cases. Moreover, it is generally preferable to perform the precipitation process at a temperature in the range from normal temperature to a temperature that is below the boiling point of any of the used solvents and the boiling point of the precipitating agent (preferably 20-80°C, more preferably 40-60°C) for 0.3-12 hours, but not limited thereto in some cases, subject to substantially complete precipitation of the solid product.

After the complete precipitation, the obtained solid product is filtered, washed, and dried. There is no specific limitation on the processs of filtering, washing, and drying, and those commonly used in this field can be used as required.

As required, the washing is generally performed 1-6 times, preferably 3-4 times. Among them, the used washing solvent is preferably identical to the solvent for the precipitating agent, but it can also be different.

The drying can be performed by using conventional processes, e.g. inert gas drying, drying in vacuum or heating and drying in vacuum, preferably inert gas drying or heating and drying in vacuum, most preferably heating and drying in vacuum.

The drying temperature range is generally from normal temperature to 140°C. The drying time is generally 2-20 hours, but it can also vary depending on the solvent used to dissolve the magnesium compound. For example, when tetrahydrofuran is used as a solvent for dissolving the magnesium compound, the drying temperature is generally around 80°C, and the drying should be carried out in vacuum for 2-12 hours, while when toluene is used as a solvent for dissolving the magnesium compound, the drying temperature is generally around 100°C, and the drying should be carried out in vacuum for 4-24 hours.

According to the present invention, a modified composite support is obtained by contacting the aforementioned obtained composite support with a chemical treating agent selected from Group IVB metal compounds.

The explanation about the chemical treating agent will be provided hereinafter. According to the present invention, the Group IVB metal compound is used as the chemical treating agent.

As said Group IVB metal compound, for example, at least one of Group IVB metal halide, Group IVB metal alkyl compound, Group IVB metal alkoxy compound, Group IVB metal alkyl halide and Group IVB metal alkoxy halide can be enumerated.

As said Group IVB metal halide, said Group IVB metal alkyl compound, said Group IVB metal alkoxy compound, said Group IVB metal alkyl halide and said Group IVB metal alkoxy halide, for example, a compound having a structure represented by the following general formula can be enumerated:

$$M(OR^1)_mX_nR^2_{4-m-n}$$

wherein m is 0, 1, 2, 3 or 4; n is 0, 1, 2, 3 or 4; M represents the Group IVB metal of the periodic table of elements, for example, titanium, zirconium, hafnium, and the like; X is halogen, for example F, Cl, Br, and I; and $R^1$ and $R^2$ are each independently selected from $C_{1-10}$ alkyl groups, for example methyl, ethyl, propyl, n-butyl, isobutyl, and the like. $R^1$ and $R^2$ can be identical or different.

Specifically, as said Group IVB metal halide, for example, the following can be enumerated: titanium tetrafluoride ($TiF_4$), titanium tetrachloride ($TiCl_4$), titanium tetrabromide ($TiBr_4$), titanium tetraiodide ($TiI_4$); zirconium tetrafluoride ($ZrF_4$), zirconium tetrachloride ($ZrCl_4$), zirconium tetrabromide ($ZrBr_4$), zirconium tetraiodide ($ZrI_4$); hafnium tetrafluoride ($HfF_4$), hafnium tetrachloride ($HfCl_4$), hafnium tetrabromide ($HfBr_4$), and hafnium tetraiodide ($HfI_4$).

As said Group IVB metal alkyl compound, for example, the following can be enumerated: tetra-methyl titanium ($Ti(CH_3)_4$), tetra-ethyl titanium ($Ti(CH_3CH_2)_4$), tetra-iso-butyl titanium ($Ti(i\text{-}C_4H_9)_4$), tetra-n-butyl titanium ($Ti(C_4H_9)_4$), triethyl methyl titanium ($Ti(CH_3)(CH_3CH_2)_3$), diethyl dimethyl titanium ($Ti(CH_3)_2(CH_3CH_2)_2$), trimethyl ethyl titanium ($Ti(CH_3)_3(CH_3CH_2)$), tri-iso-butyl methyl titanium ($Ti(CH_3)(i\text{-}C_4H_9)_3$), bis-iso-butyl dimethyl titanium ($Ti(CH_3)_2(i\text{-}C_4H_9)_2$), trimethyl iso-butyl titanium ($Ti(CH_3)_3(i\text{-}C_4H_9)$), tri-iso-butyl ethyl titanium ($Ti(CH_3CH_2)(i\text{-}C_4H_9)_3$), bis-iso-butyl diethyl titanium ($Ti(CH_3CH_2)_2(i\text{-}C_4H_9)_2$), triethyl iso-butyl titanium ($Ti(CH_3CH_2)_3(i\text{-}C_4H_9)$), tri-n-butyl methyl titanium ($Ti(CH_3)(C_4H_9)_3$), bis-n-butyl dimethyl titanium ($Ti(CH_3)_2(C_4H_9)_2$), trimethyl n-butyl titanium ($Ti(CH_3)_3(C_4H_9)$), tri-n-butyl

ethyl titanium ($Ti(CH_3CH_2)(C_4H_9)_3$), bis-n-butyl diethyl titanium ($Ti(CH_3CH_2)_2(C_4H_9)_2$), triethyl n-butyl titanium ($Ti(CH_3CH_2)_3(C_4H_9)$) and the like; tetra-methyl zirconium ($Zr(CH_3)_4$), tetra-ethyl zirconium ($Zr(CH_3CH_2)_4$), tetra-iso-butyl zirconium ($Zr(i\text{-}C_4H_9)_4$), tetra-n-butyl zirconium ($Zr(C_4H_9)_4$), triethyl methyl zirconium ($Zr(CH_3)(CH_3CH_2)_3$), diethyl dimethyl zirconium ($Zr(CH_3)_2$ $(CH_3CH_2)_2$), trimethyl ethyl zirconium ($Zr(CH_3)_3(CH_3CH_2)$), tri-iso-butyl methyl zirconium ($Zr(CH_3)(i\text{-}C_4H_9)_3$), bis-iso-butyl dimethyl zirconium ($Zr(CH_3)_2(i\text{-}C_4H_9)_2$), trimethyl iso-butyl zirconium ($Zr(CH_3)_3(i\text{-}C_4H_9)$), tri-iso-butyl ethyl zirconium ($Zr(CH_3CH_2)(i\text{-}C_4H_9)_3$), bis-iso-butyl diethyl zirconium ($Zr(CH_3CH_2)_2(i\text{-}C_4H_9)_2$), triethyl iso-butyl zirconium ($Zr(CH_3CH_2)_3(i\text{-}C_4H_9)$), tri-n-butyl methyl zirconium ($Zr(CH_3)(C_4H_9)_3$), bis-n-butyl dimethyl zirconium ($Zr(CH_3)_2(C_4H_9)_2$), trimethyl n-butyl zirconium ($Zr(CH_3)_3(C_4H_9)$), tri-n-butyl ethyl zirconium ($Zr(CH_3CH_2)(C_4H_9)_3$), bis-n-butyl diethyl zirconium ($Zr(CH_3CH_2)_2(C_4H_9)_2$), triethyl n-butyl zirconium ($Zr(CH_3CH_2)_3(C_4H_9)$) and the like; tetra-methyl hafnium ($Hf(CH_3)_4$), tetra-ethyl hafnium ($Hf(CH_3CH_2)_4$), tetra-iso-butyl hafnium ($Hf(i\text{-}C_4H_9)_4$), tetra-n-butyl hafnium ($Hf(C_4H_9)_4$), triethyl methyl hafnium ($Hf(CH_3)(CH_3CH_2)_3$), diethyl dimethyl hafnium ($Hf(CH_3)_2(CH_3CH_2)_2$), trimethyl ethyl hafnium ($Hf(CH_3)_3(CH_3CH_2)$), tri-iso-butyl methyl hafnium ($Hf(CH_3)(i\text{-}C_4H_9)_3$), bis-iso-butyl dimethyl hafnium ($Hf(CH_3)_2(i\text{-}C_4H_9)_2$), trimethyl iso-butyl hafnium ($Hf(CH_3)_3(i\text{-}C_4H_9)$), tri-iso-butyl ethyl hafnium ($Hf(CH_3CH_2)(i\text{-}C_4H_9)_3$), bis-iso-butyl diethyl hafnium ($Hf(CH_3CH_2)_2(i\text{-}C_4H_9)_2$), triethyl iso-butyl hafnium ($Hf(CH_3CH_2)_3(i\text{-}C_4H_9)$), tri-n-butyl methyl hafnium ($Hf(CH_3)(C_4H_9)_3$), bis-n-butyl dimethyl hafnium ($Hf(CH_3)_2(C_4H_9)_2$), trimethyl n-butyl hafnium ($Hf(CH_3)_3(C_4H_9)$), tri-n-butyl ethyl hafnium ($Hf(CH_3CH_2)(C_4H_9)_3$), bis-n-butyl diethyl hafnium ($Hf(CH_3CH_2)_2(C_4H_9)_2$), triethyl n-butyl hafnium ($Hf(CH_3CH_2)_3(C_4H_9)$) and the like.

As said Group IVB metal alkoxy compound, for example, the following can be enumerated: tetra-methyloxy titanium ($Ti(OCH_3)_4$), tetra-ethyloxy titanium ($Ti(OCH_3CH_2)_4$), tetra-iso-butyloxy titanium ($Ti(i\text{-}OC_4H_9)_4$), tetra-n-butyloxy titanium ($Ti(OC_4H_9)_4$), tri-ethyloxy methyloxy titanium ($Ti(OCH_3)(OCH_3CH_2)_3$), di-ethyloxy di-methyloxy titanium ($Ti(OCH_3)_2(OCH_3CH_2)_2$), tri-methyloxy ethyloxy titanium ($Ti(OCH_3)_3(OCH_3CH_2)$), tri-iso-butyloxy methyloxy titanium ($Ti(OCH_3)(i\text{-}OC_4H_9)_3$), bis-iso-butyloxy di-methyloxy titanium ($Ti(OCH_3)_2(i\text{-}OC_4H_9)_2$), tri-methyloxy iso-butyloxy titanium ($Ti(OCH_3)_3(i\text{-}OC_4H_9)$), tri-iso-butyloxy ethyloxy titanium ($Ti(OCH_3CH_2)(i\text{-}OC_4H_9)_3$), bis-iso-butyloxy di-ethyloxy titanium ($Ti(OCH_3CH_2)_2(i\text{-}OC_4H_9)_2$), tri-ethyloxy iso-butyloxy titanium ($Ti(OCH_3CH_2)_3(i\text{-}OC_4H_9)$), tri-n-butyloxy methyloxy titanium ($Ti(OCH_3)(OC_4H_9)_3$), bis-n-butyloxy di-methyloxy titanium ($Ti(OCH_3)_2(OC_4H_9)_2$), tri-methyloxy n-butyloxy titanium ($Ti(OCH_3)_3(OC_4H_9)$), tri-n-butyloxy ethyloxy titanium ($Ti(OCH_3CH_2)(OC_4H_9)_3$), bis-n-butyloxy di-ethyloxy titanium ($Ti(OCH_3CH_2)_2(OC_4H_9)_2$), tri-ethyloxy n-butyloxy titanium ($Ti(OCH_3CH_2)_3(OC_4H_9)$) and the like; tetra-methyloxy zirconium ($Zr(OCH_3)_4$), tetra-ethyloxy zirconium ($Zr(OCH_3CH_2)_4$), tetra-iso-butyloxy zirconium ($Zr(i\text{-}OC_4H_9)_4$), tetra-n-butyloxy zirconium ($Zr(OC_4H_9)_4$), tri-ethyloxy methyloxy zirconium ($Zr(OCH_3)(OCH_3CH_2)_3$), di-ethyloxy di-methyloxy zirconium ($Zr(OCH_3)_2(OCH_3CH_2)_2$), tri-methyloxy ethyloxy zirconium ($Zr(OCH_3)_3$ $(OCH_3CH_2)$), tri-iso-butyloxy methyloxy zirconium($Zr(OCH_3)(i\text{-}OC_4H_9)_3$), bis-iso-butyloxy di-methyloxy zirconium ($Zr(OCH_3)_2(i\text{-}OC_4H_9)_2$), tri-methyloxy iso-butyloxy zirconium ($Zr(OCH_3)_3(i\text{-}C_4H_9)$), tri-iso-butyloxy ethyloxy zirconium ($Zr(OCH_3CH_2)(i\text{-}OC_4H_9)_3$), bis-iso-butyloxy di-ethyloxy zirconium ($Zr(OCH_3CH_2)_2(i\text{-}OC_4H_9)_2$), tri-ethyloxy iso-butyloxy zirconium ($Zr(OCH_3CH_2)_3(i\text{-}OC_4H_9)$), tri-n-butyloxy methyloxy zirconium ($Zr(OCH_3)(OC_4H_9)_3$), bis-n-butyloxy di-methyloxy zirconium ($Zr(OCH_3)_2(OC_4H_9)_2$), tri-methyloxy n-butyloxy zirconium ($Zr(OCH_3)_3(OC_4H_9)$), tri-n-butyloxy ethyloxy zirconium ($Zr(OCH_3CH_2)(OC_4H_9)_3$), bis-n-butyloxy di-ethyloxy zirconium ($Zr(OCH_3CH_2)_2(OC_4H_9)_2$), tri-ethyloxy n-butyloxy zirconium ($Zr(OCH_3CH_2)_3(OC_4H_9)$) and the like; tetra-methyloxy hafnium ($Hf(OCH_3)_4$), tetra-ethyloxy hafnium ($Hf(OCH_3CH_2)_4$), tetra-iso-butyloxy hafnium ($Hf(i\text{-}OC_4H_9)_4$), tetra-n-butyloxy hafnium ($Hf(OC_4H_9)_4$), tri-ethyloxy methyloxy hafnium ($Hf(OCH_3)(OCH_3CH_2)_3$), di-ethyloxy di-methyloxy hafnium ($Hf(OCH_3)_2(OCH_3CH_2)_2$), tri-methyloxy ethyloxy hafnium ($Hf(OCH_3)_3(OCH_3CH_2)$), tri-iso-butyloxy methyloxy hafnium ($Hf(OCH_3)(i\text{-}OC_4H_9)_3$), bis-iso-butyloxy di-methyloxy hafnium ($Hf(OCH_3)_2(i\text{-}OC_4H_9)_2$), tri-methyloxy iso-butyloxy hafnium ($Hf(OCH_3)_3(i\text{-}OC_4H_9)$), tri-iso-butyloxy ethyloxy hafnium ($Hf(OCH_3CH_2)(i\text{-}OC_4H_9)_3$), bis-iso-butyloxy di-ethyloxy hafnium ($Hf(OCH_3CH_2)_2(i\text{-}OC_4H_9)_2$), tri-ethyloxy iso-butyloxy hafnium ($Hf(OCH_3CH_2)_3(i\text{-}C_4H_9)$), tri-n-butyloxy methyloxy hafnium ($Hf(OCH_3)(OC_4H_9)_3$), bis-n-butyloxy di-methyloxy hafnium ($Hf(OCH_3)_2(OC_4H_9)_2$), tri-methyloxy n-butyloxy hafnium ($Hf(OCH_3)_3(OC_4H_9)$), tri-n-butyloxy ethyloxy hafnium ($Hf(OCH_3CH_2)(OC_4H_9)_3$), bis-n-butyloxy di-ethyloxy hafnium ($Hf(OCH_3CH_2)_2(OC_4H_9)_2$), tri-ethyloxy n-butyloxy hafnium ($Hf(OCH_3CH_2)_3(OC_4H_9)$) and the like.

As said Group IVB metal alkyl halide, for example, the following can be enumerated: trimethyl titanium chloride ($TiCl(CH_3)_3$), triethyl titanium chloride ($TiCl(CH_3CH_2)_3$), tri-iso-butyl titanium chloride ($TiCl(i\text{-}C_4H_9)_3$), tri-n-butyl titanium chloride ($TiCl(C_4H_9)_3$), dimethyl titanium dichloride ($TiCl_2(CH_3)_2$), diethyl titanium dichloride ($TiCl_2(CH_3CH_2)_2$), bis-iso-butyl titanium dichloride ($TiCl_2(i\text{-}C_4H_9)_2$), tri-n-butyl titanium chloride ($TiCl(C_4H_9)_3$), methyl titanium trichloride ($Ti(CH_3)Cl_3$), ethyl titanium trichloride ($Ti(CH_3CH_2)Cl_3$), iso-butyl titanium trichloride ($Ti(i\text{-}C_4H_9)Cl_3$), n-butyl titanium trichloride ($Ti(C_4H_9)Cl_3$);trimethyl titanium bromide ($TiBr(CH_3)_3$), triethyl titanium bromide ($TiBr(CH_3CH_2)_3$), tri-iso-butyl titanium bromide ($TiBr(i\text{-}C_4H_9)_3$), tri-n-butyl titanium bromide ($TiBr(C_4H_9)_3$), dimethyl titanium dibromide ($TiBr_2(CH_3)_2$), diethyl titanium dibromide ($TiBr_2(CH_3CH_2)_2$), bis-iso-butyl titanium dibromide ($TiBr_2(i\text{-}C_4H_9)_2$), tri-n-butyl titanium bromide ($TiBr(C_4H_9)_3$), methyl titanium tribromide ($Ti(CH_3)Br_3$), ethyl titanium tribromide ($Ti(CH_3CH_2)Br_3$), iso-butyl titanium tribromide ($Ti(i\text{-}C_4H_9)Br_3$), n-butyl titanium tribromide ($Ti(C_4H_9)Br_3$);trimethyl zirconium chloride ($ZrCl(CH_3)_3$), triethyl zirconium chloride ($ZrCl(CH_3CH_2)_3$), tri-iso-butyl zirconium chloride ($ZrCl(i\text{-}C_4H_9)_3$), tri-n-butyl zirconium chloride ($ZrCl(C_4H_9)_3$), dimethyl zirconium dichloride ($ZrCl_2(CH_3)_2$), diethyl zirconium dichloride ($ZrCl_2(CH_3CH_2)_2$), bis-iso-butyl zirconium dichloride ($ZrCl_2(i\text{-}C_4H_9)_2$), tri-n-butyl zirconium chloride ($ZrCl(C_4H_9)_3$), methyl zirconium trichloride

($Zr(CH_3)Cl_3$), ethyl zirconium trichloride ($Zr(CH_3CH_2)Cl_3$), iso-butyl zirconium trichloride ($Zr(i-C_4H_9)Cl_3$), n-butyl zirconium trichloride ($Zr(C_4H_9)Cl_3$);trimethyl zirconium bromide ($ZrBr(CH_3)_3$), triethyl zirconium bromide ($ZrBr(CH_3CH_2)_3$), tri-iso-butyl zirconium bromide ($ZrBr(i-C_4H_9)_3$), tri-n-butyl zirconium bromide ($ZrBr(C_4H_9)_3$), dimethyl zirconium dibromide ($ZrBr_2(CH_3)_2$), diethyl zirconium dibromide ($ZrBr_2(CH_3CH_2)_2$), bis-iso-butyl zirconium dibromide ($ZrBr_2(i-C_4H_9)_2$), tri-n-butyl zirconium bromide ($ZrBr(C_4H_9)_3$), methyl zirconium tribromide ($Zr(CH_3)Br_3$), ethyl zirconium tribromide ($Zr(CH_3CH_2)Br_3$), iso-butyl zirconium tribromide ($Zr(i-C_4H_9)Br_3$), n-butyl zirconium tribromide ($Zr(C_4H_9)Br_3$);trimethyl hafnium chloride ($HfCl(CH_3)_3$), triethyl hafnium chloride ($HfCl(CH_3CH_2)_3$), tri-iso-butyl hafnium chloride ($HfCl(i-C_4H_9)_3$), tri-n-butyl hafnium chloride ($HfCl(C_4H_9)_3$), dimethyl hafnium dichloride ($HfCl_2(CH_3)_2$), diethyl hafnium dichloride ($HfCl_2(CH_3CH_2)_2$), bis-iso-butyl hafnium dichloride ($HfCl_2(i-C_4H_9)_2$), tri-n-butyl hafnium chloride ($HfCl(C_4H_9)_3$), methyl hafnium trichloride ($Hf(CH_3)Cl_3$), ethyl hafnium trichloride ($Hf(CH_3CH_2)Cl_3$), iso-butyl hafnium trichloride ($Hf(i-C_4H_9)Cl_3$), n-butyl hafnium trichloride ($Hf(C_4H_9)Cl_3$);trimethyl hafnium bromide ($HfBr(CH_3)_3$), triethyl hafnium bromide ($HfBr(CH_3CH_2)_3$), tri-iso-butyl hafnium bromide ($HfBr(i-C_4H_9)_3$), tri-n-butyl hafnium bromide ($HfBr(C_4H_9)_3$), dimethyl hafnium dibromide ($HfBr_2(CH_3)_2$), diethyl hafnium dibromide ($HfBr_2(CH_3CH_2)_2$), bis-iso-butyl hafnium dibromide ($HfBr_2(i-C_4H_9)_2$), tri-n-butyl hafnium bromide ($HfBr(C_4H_9)_3$), methyl hafnium tribromide ($Hf(CH_3)Br_3$), ethyl hafnium tribromide ($Hf(CH_3CH_2)Br_3$), iso-butyl hafnium tribromide ($Hf(i-C_4H_9)Br_3$), n-butyl hafnium tribromide ($Hf(C_4H_9)Br_3$).

As said Group IVB metal alkoxy halide, for example, the following can be enumerated: tri-methyloxy titanium chloride ($TiCl(OCH_3)_3$), tri-ethyloxy titanium chloride ($TiCl(OCH_3CH_2)_3$), tri-iso-butyloxy titanium chloride ($TiCl(i-OC_4H_9)_3$), tri-n-butyloxy titanium chloride ($TiCl(OC_4H_9)_3$), di-methyloxy titanium dichloride ($TiCl_2(OCH_3)_2$), di-ethyloxy titanium dichloride ($TiCl_2(OCH_3CH_2)_2$), bis-iso-butyloxy titanium dichloride ($TiCl_2(i-OC_4H_9)_2$), tri-n-butyloxy titanium chloride ($TiCl(OC_4H_9)_3$), methyloxy titanium trichloride ($Ti(OCH_3)Cl_3$), ethyloxy titanium trichloride ($Ti(OCH_3CH_2)Cl_3$), iso-butyloxy titanium trichloride ($Ti(i-C_4H_9)Cl_3$), n-butyloxy titanium trichloride ($Ti(OC_4H_9)Cl_3$); tri-methyloxy titanium bromide ($TiBr(OCH_3)_3$), tri-ethyloxy titanium bromide ($TiBr(OCH_3CH_2)_3$), tri-iso-butyloxy titanium bromide ($TiBr(i-OC_4H_9)_3$), tri-n-butyloxy titanium bromide ($TiBr(OC_4H_9)_3$), di-methyloxy titanium dibromide ($TiBr_2(OCH_3)_2$), di-ethyloxy titanium dibromide ($TiBr_2(OCH_3CH_2)_2$), bis-iso-butyloxy titanium dibromide ($TiBr_2(i-OC_4H_9)_2$), tri-n-butyloxy titanium bromide ($TiBr(OC_4H_9)_3$), methyloxy titanium tribromide ($Ti(OCH_3)Br_3$), ethyloxy titanium tribromide ($Ti(OCH_3CH_2)Br_3$), iso-butyloxy titanium tribromide ($Ti(i-C_4H_9)Br_3$), n-butyloxy titanium tribromide ($Ti(OC_4H_9)Br_3$); tri-methyloxy zirconium chloride ($ZrCl(OCH_3)_3$), tri-ethyloxy zirconium chloride ($ZrCl(OCH_3CH_2)_3$), tri-iso-butyloxy zirconium chloride ($ZrCl(i-OC_4H_9)_3$), tri-n-butyloxy zirconium chloride ($ZrCl(OC_4H_9)_3$), di-methyloxy zirconium dichloride ($ZrCl_2(OCH_3)_2$), di-ethyloxy zirconium dichloride ($ZrCl_2(OCH_3CH_2)_2$), bis-iso-butyloxy zirconium dichloride ($ZrCl_2(i-OC_4H_9)_2$), tri-n-butyloxy zirconium chloride ($ZrCl(OC_4H_9)_3$), methyloxy zirconium trichloride ($Zr(OCH_3)Cl_3$), ethyloxy zirconium trichloride ($Zr(OCH_3CH_2)Cl_3$), iso-butyloxy zirconium trichloride ($Zr(i-C_4H_9)Cl_3$), n-butyloxy zirconium trichloride ($Zr(OC_4H_9)Cl_3$); tri-methyloxy zirconium bromide ($ZrBr(OCH_3)_3$), tri-ethyloxy zirconium bromide($ZrBr(OCH_3CH_2)_3$), tri-iso-butyloxy zirconium bromide ($ZrBr(i-OC_4H_9)_3$), tri-n-butyloxy zirconium bromide ($ZrBr(OC_4H_9)_3$), di-methyloxy zirconium dibromide ($ZrBr_2(OCH_3)_2$), di-ethyloxy zirconium dibromide ($ZrBr_2(OCH_3CH_2)_2$), bis-iso-butyloxy zirconium dibromide ($ZrBr_2(i-OC_4H_9)_2$), tri-n-butyloxy zirconium bromide ($ZrBr(OC_4H_9)_3$), methyloxy zirconium tribromide ($Zr(OCH_3)Br_3$), ethyloxy zirconium tribromide ($Zr(OCH_3CH_2)Br_3$), iso-butyloxy zirconium tribromide ($Zr(i-C_4H_9)Br_3$), n-butyloxy zirconium tribromide ($Zr(OC_4H_9)Br_3$); tri-methyloxy hafnium chloride ($HfCl(OCH_3)_3$), tri-ethyloxy hafnium chloride ($HfCl(OCH_3CH_2)_3$), tri-iso-butyloxy hafnium chloride ($HfCl(i-OC_4H_9)_3$), tri-n-butyloxy hafnium chloride ($HfCl(OC_4H_9)_3$), di-methyloxy hafnium dichloride ($HfCl_2(OCH_3)_2$), di-ethyloxy hafnium dichloride ($HfCl_2(OCH_3CH_2)_2$), bis-iso-butyloxy hafnium dichloride ($HfCl_2(i-OC_4H_9)_2$), tri-n-butyloxy hafnium chloride ($HfCl(OC_4H_9)_3$), methyloxy hafnium trichloride ($Hf(OCH_3)Cl_3$), ethyloxy hafnium trichloride ($Hf(OCH_3CH_2)Cl_3$), iso-butyloxy hafnium trichloride ($Hf(i-C_4H_9)Cl_3$), n-butyloxy hafnium trichloride ($Hf(OC_4H_9)Cl_3$); tri-methyloxy hafnium bromide ($HfBr(OCH_3)_3$), tri-ethyloxy hafnium bromide ($HfBr(OCH_3CH_2)_3$), tri-iso-butyloxy hafnium bromide ($HfBr(i-OC_4H_9)_3$), tri-n-butyloxy hafnium bromide ($HfBr(OC_4H_9)_3$), di-methyloxy hafnium dibromide ($HfBr_2(OCH_3)_2$), di-ethyloxy hafnium dibromide ($HfBr_2(OCH_3CH_2)_2$), bis-iso-butyloxy hafnium dibromide ($HfBr_2(i-OC_4H_9)_2$), tri-n-butyloxy hafnium bromide ($HfBr(OC_4H_9)_3$), methyloxy hafnium tribromide ($Hf(OCH_3)Br_3$), ethyloxy hafnium tribromide ($Hf(OCH_3CH_2)Br_3$), iso-butyloxy hafnium tribromide ($Hf(i-C_4H_9)Br_3$), n-butyloxy hafnium tribromide ($Hf(OC_4H_9)Br_3$).

As said Group IVB metal compound, said Group IVB metal halide is preferable, $TiCl_4$, $TiBr_4$, $ZrCl_4$, $ZrBr_4$, $HfCl_4$ and $HfBr_4$ are more preferable, and $TiCl_4$ and $ZrCl_4$ are most preferable.

These Group IVB metal compounds can be used alone or in combination at any proportion.

When the chemical treating agent is liquid at room temperature, the chemical treating agent can be directly used to perform said chemical treatment reaction. When the chemical treating agent is solid at normal temperature, it is preferred to use the chemical treating agent in solution form for ease of measurement and operation. Of course, when the chemical treating agent is liquid at room temperature, the chemical treating agent can sometimes be used in solution form as needed, without special limitations.

When preparing a solution of the chemical treating agent, there is no special limitation on the solvent used at this time, as long as it can dissolve the chemical treating agent and does not damage (for example dissolve) the existing support structure of the composite support.

Specifically, $C_{5-12}$ alkane, $C_{5-12}$ cycloalkane, halogenated $C_{5-12}$ alkane, halogenated $C_{5-12}$ cycloalkane, and the like can be enumerated. For example, pentane, hexane, heptane, octane, nonane, decane, undecane, dodecane, cyclopentane, cyclohexane, cycloheptane, cyclooctane, chloropentane, chlorohexane, chloroheptane, chlorooctane, chlorononane, chlorodecane, chloroundecane, chlorododecane, chlorocyclohexane and the like can be enumerated, wherein pentane, hexane, decane and cyclohexane are preferable, and hexane is most preferable.

These solvents can be used alone or in combination at any proportion.

In addition, there is no special limit on the concentration of the chemical treating agent in its solution, and it can be appropriately selected as required, as long as it can achieve the chemical treatment reaction with a predetermined amount of the chemical treating agent. As mentioned earlier, if the chemical treating agent is liquid, the chemical treating agent can be directly used to perform the treatment, but it can also be formulated into a chemical treating agent solution and used. Generally speaking, the molar concentration of the chemical treating agent in its solution is generally set at 0.01-1.0 mol/L, but not limited thereto.

According to the present invention, as the manner of performing the chemical treatment reaction, for example, a process of contacting the composite support with the chemical treating agent in the presence of a solvent (also known as a chemical treatment solvent) can be enumerated.

According to the present invention, there is no special limitation on the chemical treatment solvent, as long as it can dissolve the chemical treating agent and does not damage (for example dissolve) the existing support structure of the composite support.

Specifically, as said chemical treatment solvent, $C_{5-12}$ alkane, $C_{5-12}$ cycloalkane, halogenated $C_{5-12}$ alkane, halogenated $C_{5-12}$ cycloalkane, and the like can be enumerated. For example, pentane, hexane, heptane, octane, nonane, decane, undecane, dodecane, cyclopentane, cyclohexane, cycloheptane, cyclooctane, chloropentane, chlorohexane, chloroheptane, chlorooctane, chlorononane, chlorodecane, chloroundecane, chlorododecane, chlorocyclohexane and the like can be enumerated, wherein pentane, hexane, decane and cyclohexane are preferable, and hexane is most preferable.

These solvents can be used alone or in combination at any proportion.

According to the present invention, the chemical treatment solvent is used in such an amount that the ratio of the composite support to the chemical treatment solvent is 1 g:1-100 mL, preferably 1 g:2-40 mL, but not limited thereto in some cases. In addition, when using the chemical treating agent in the form of solution as mentioned earlier, the used amount of the chemical treatment solvent can be appropriately reduced according to the actual situation without any special limitation.

According to the present invention, the chemical treating agent is used in such an amount that the molar ratio of the composite support (as the magnesium element) to the chemical treating agent (as the Group IVB metal element) reaches 1:0.01-1, preferably 1:0.01-0.50, more preferably 1:0.10-0.30.

According to one embodiment of the present invention, in the presence of the chemical treatment solvent, the composite support is contacted with the chemical treating agent to perform the chemical treatment reaction.

As the manner of the contacting, for example, the following can be enumerated: the composite support is added to the chemical treatment solvent under stirring, and the chemical treating agent or the chemical treating agent solution can be added simultaneously or subsequently (preferably dropwise), and after the addition is completed, the reaction under stirring can be continued at 0-100°C (preferably 20-80°C). There is no specific limitation on the reaction time at this time, for example, 0.5-8 hours, preferably 1-4 hours can be enumerated.

After the chemical treatment reaction is completed, the product that has undergone the chemical treatment (the modified composite support) can be obtained through filtering, washing, and drying.

According to the present invention, the filtering, washing, and drying can be carried out according to the conventional processes, wherein the washing solvent can be the same solvent as used for the chemical treatment. As required, the washing is generally performed 1-8 times, preferably 2-6 times, and most preferably 2-4 times.

The drying can be performed by using conventional processes, e.g. inert gas drying, drying in vacuum or heating and drying in vacuum, preferably inert gas drying or heating and drying in vacuum, most preferably heating and drying in vacuum. The drying temperature range is generally from normal temperature to 140°C, the drying time is generally 2-20 hours, but not limited thereto. According to the present invention, a non-metallocene complex is contacted with the modified composite support in the presence of a second solvent to obtain the supported non-metallocene catalyst.

According to the present invention, the term "non-metallocene complex", as opposed to metallocene catalysts, refers to a single center olefin polymerization catalyst that does not contain cyclopentadienyl groups or their derivatives such as cyclopentadiene ring, fluorene ring, indene rings, and the like in its structure, and is a metal organic compound that can exhibit the olefin polymerization catalytic activity when combined with a cocatalyst (such as those described below) (therefore, the non-metallocene complexe is sometimes referred to as the non-metallocene olefin polymerization-like complex). The compound contains a center metal atom and at least one multidentate ligand (preferably a tridentate ligand or a polydentate (higher than tridentate) ligand) bound by a coordination bond with the center metal atom, and the term "non-metallocene ligand" is the above-mentioned multidentate ligand.

According to the present invention, the non-metallocene complex is selected from a compound with the following chemical structural formula:

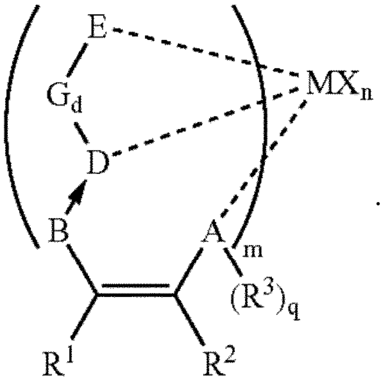

According to this chemical structural formula, the ligand that forms a coordination bond with the center metal atom M includes n groups X and m multidentate ligands (the structural formula in the parenthesis). According to the chemical structural formula of the multidentate ligand, groups A, D, and E (coordination groups) form coordination bonds with the center metal atom M through the coordination atoms contained in these groups (heteroatoms such as N, O, S, Se, and P). In the present invention, the center metal atom M is also known as the active metal, and the amount of the catalyst is usually represented by the amount of the center metal atom M in the non-metallocene complex.

According to the present invention, the absolute value of the total negative charge carried by all ligands (including the groups X and the multidentate ligands) is identical to the absolute value of the positive charge carried by the central metal atom M.

In a more specific embodiment, the non-metallocene complex is selected from compounds (A) and (B) with the following chemical structural formulae.

| | |
|---|---|
| 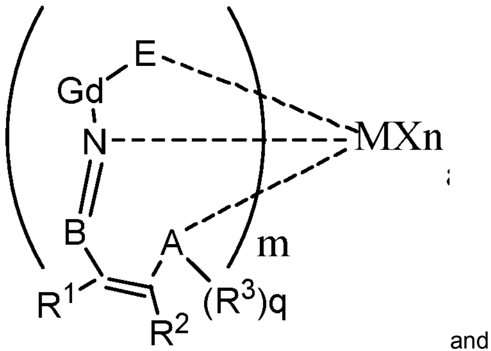 and | 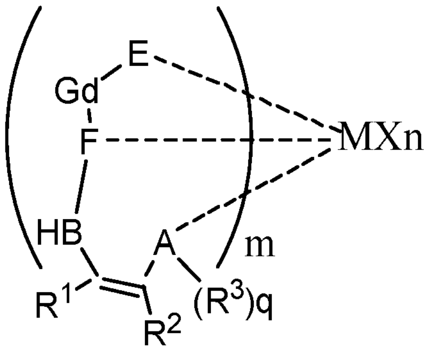 |
| (A) | (B) |

In a more specific embodiment, the non-metallocene complex is selected from compound (A-1) to compound (A-4) and compound (B-1) to compound (B-4) with the following chemical structural formulae:

| | |
|---|---|
| 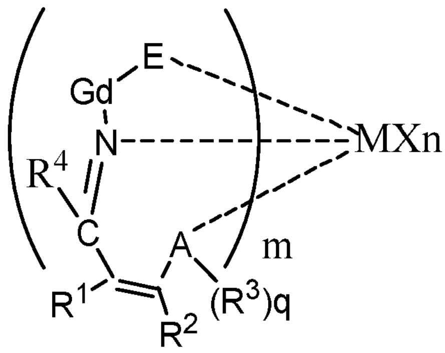 , | 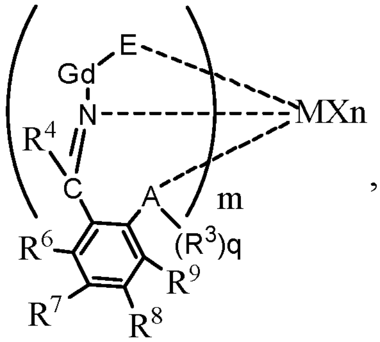 , |
| (A-1) | (A-2) |
| 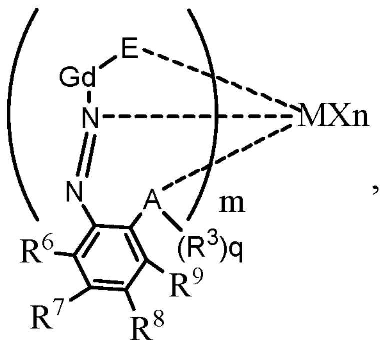 , | 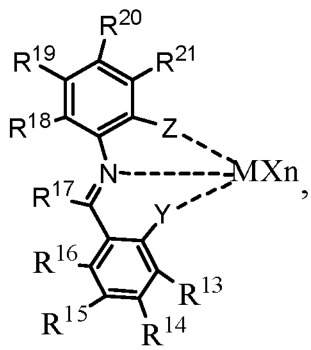 , |
| (A-3) | (A-4) |
| 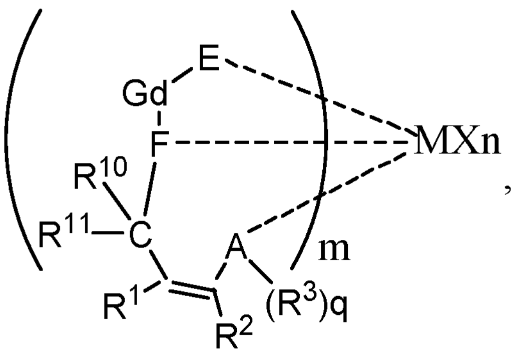 , | 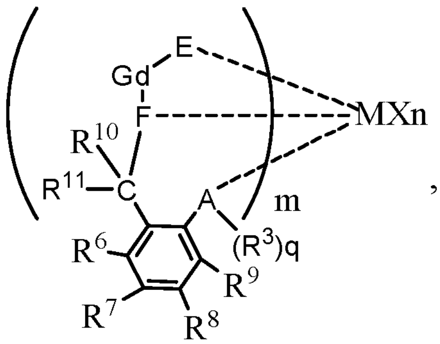 , |
| (B-1) | (B-2) |
| 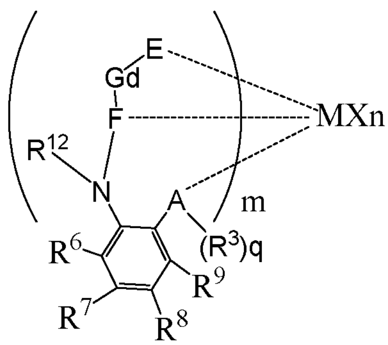 and | 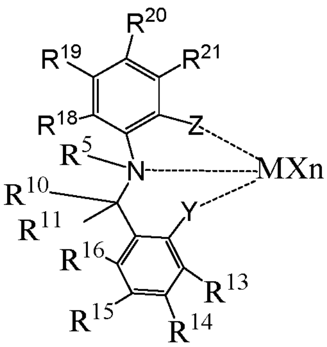 , |
| (B-3) | (B-4) |

in all the above chemical structural formulae, q is 0 or 1; d is 0 or 1; m is 1, 2 or 3; M is the center metal atom selected from metal atoms of Group III To Group XI in the Periodic Table of Elements, preferably metal atoms of Group

IVB. For example, Ti (IV), Zr (IV), Hf (IV), Cr (III), Fe (III), Ni (II), Pd (II) or Co (II), can be enumerated; n is 1, 2, 3 or 4, depending on the valence state of the central metal atom M; X is selected from a halogen atom, a hydrogen atom, a $C_1$-$C_{30}$ hydrocabon group, a substituted $C_1$-$C_{30}$ hydrocabon group, an oxygen-containing group, a nitrogen-containing group, a sulfur-containing group, a boron-containing group, an aluminum-containing group, a phosphorus-containing group, a silicon-containing group, a germanium-containing group or a stannum-containing group, a plurality of Xs can be identical or different, and can also form a bond or a ring with each other; A is selected from an oxygen atom, a sulphur atom, a selenium atom,

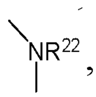

, $-NR^{23}R^{24}$, $-N(O)R^{25}R^{26}$,

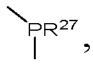

, $-PR^{28}R^{29}$, $-P(O)R^{30}OR^{31}$, sulfonyl, sulfinyl or $-Se(O)R^{39}$, wherein N, O, S, Se, and P are each coordination atoms; B is selected from a nitrogen atom, a nitrogen-containing group, a phosphorus-containing group or a $C_1$-$C_{30}$ hydrocabon group; D is selected from a nitrogen atom, an oxygen atom, a sulphur atom, a selenium atom, a phosphorus atom, a nitrogen-containing group, a phosphorus-containing group, a $C_1$-$C_{30}$ hydrocabon group, sulfonyl or sulfinyl, wherein N, O, S, Se, and P are each coordination atoms; E is selected from a nitrogen-containing group, an oxygen-containing group, a sulfur-containing group, a selenium-containing group, a phosphorus-containing group or cyano (-CN), wherein N, O, S, Se, and P are each coordination atoms; F is selected from a nitrogen atom, a nitrogen-containing group, an oxygen atom, a sulphur atom, a selenium atom, or a phosphorus-containing group, wherein N, O, S, Se, and P are each coordination atoms; G is selected from a $C_1$-$C_{30}$ hydrocabon group, a substituted $C_1$-$C_{30}$ hydrocabon group or an inert functional group; Y is selected from an oxygen atom, a nitrogen-containing group, an oxygen-containing group, a sulfur-containing group, a selenium-containing group or a phosphorus-containing group, wherein N, O, S, Se, and P are each coordination atoms; Z is selected from a nitrogen-containing group, an oxygen-containing group, a sulfur-containing group, a selenium-containing group, a phosphorus-containing group or cyano (-CN), for example, $-NR^{23}R^{24}$, $-N(O)R^{25}R^{26}$, $-PR^{28}R^{29}$, $-P(O)R^{30}R^{31}$, $-OR^{34}$, $-SR^{35}$, $-S(O)R^{36}$, $-SeR^{38}$ or $-Se(O)R^{39}$ can be enumerated, wherein N, O, S, Se, and P are each coordination atoms; $\rightarrow$ represents a single bond or a double bond;-represents a covalent bond or an ionic bond; --- represents a coordination bond, a covalent bond or an ionic bond.

$R^1$ to $R^4$ and $R^6$ to $R^{21}$ are each independently selected from hydrogen, a $C_1$-$C_{30}$ hydrocabon group, a substituted $C_1$-$C_{30}$ hydrocabon group (wherein preferably a halohydrocabon group, for example $-CH_2Cl$ and $-CH_2CH_2Cl$) or an inert functional group. $R^{22}$ to $R^{36}$, $R^{38}$ and $R^{39}$ are each independently selected from hydrogen, a $C_1$-$C_{30}$ hydrocabon group or a substituted $C_1$-$C_{30}$ hydrocabon group (wherein preferably a halohydrocabon group, for example $-CH_2Cl$ and $-CH_2CH_2Cl$). The above-mentioned groups can be identical to or different from each other, wherein adjacent groups for example $R^1$ and $R^2$, $R^6$ and $R^7$, $R^7$ and $R^8$, $R^8$ and $R^9$, $R^{13}$ and $R^{14}$, $R^{14}$ and $R^{15}$ , $R^{15}$ and $R^{16}$, $R^{18}$ and $R^{19}$, $R^{19}$ and $R^{20}$, $R^{20}$ and $R^{21}$, $R^{23}$ and $R^{24}$, $R^{25}$ and $R^{26}$, or the like can bind to each other to form a bond or to form a ring, preferably form an aromatic ring, for example an unsubstituted benzene ring or a benzene ring substituted by 1-4 substituents selected from a $C_1$-$C_{30}$ hydrocabon group or a substituted $C_1$-$C_{30}$ hydrocabon group (wherein preferably a halohydrocabon group, for example $-CH_2Cl$ and $-CH_2CH_2Cl$), and $R^5$ is selected from a lone pair of electrons on the nitrogen, a hydrogen atom, a $C_1$-$C_{30}$ hydrocabon group, a substituted $C_1$-$C_{30}$ hydrocabon group, an oxygen-containing group, a sulfur-containing group, a nitrogen-containing group, a selenium-containing group or a phosphorus-containing group. When $R^5$ is an oxygen-containing group, a sulfur-containing group, a nitrogen-containing group, a selenium-containing group or a phosphorus-containing group, N, O, S, P and Se in $R^5$ can serve as coordination atoms (coordinating with the center metal atom M).

In the context of the present invention, said inert functional group that for example can be enumerated is selected from at least one of halogen, an oxygen-containing group, a nitrogen-containing group, a silicon-containing group, a germanium-containing group, a sulfur-containing group, a stannum-containing group, a $C_1$-$C_{10}$ ester group, nitro ($-NO_2$), or the like, but usually excluding a $C_1$-$C_{30}$ hydrocabon group and a substituted $C_1$-$C_{30}$ hydrocabon group.

In the context of the present invention, subject to the chemical structure of the multidentate ligand, the inert functional group has the following characteristics: (1) Not interfering with the coordination process between the group A, D, E, F, Y, or Z and the center metal atom M, and (2) The coordination ability with the center metal atom M being lower than that of the groups A, D, E, F, Y, and Z, and not replacing the existing coordination between these groups and

the center metal atom M.

According to the present invention, in all the aforementioned chemical structural formulae, depending on the specific situations, any adjacent two or more groups, such as $R^{21}$ and group Z, or $R^{13}$ and group Y, can combine with each other to form a ring, preferably to form a $C_6$-$C_{30}$ aromatic heterocycle containing a heteroatom from the group Z or Y, e.g. a pyridine ring and the like, wherein the aromatic heterocycle is optionally substituted by one or more substituents selected from a $C_1$-$C_{30}$ hydrocarbon group and a substituted $C_1$-$C_{30}$ hydrocarbon group.

In the context of the present invention, said halogen is selected from F, Cl, Br or I. Said nitrogen-containing group is selected from

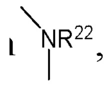,

, $-NR^{23}R^{24}$, $-T-NR^{23}R^{24}$ or $-N(O)R^{25}R^{26}$. Said phosphorus-containing group is selected from

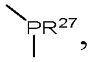,

, $-PR^{28}R^{29}$, $-P(O)R^{30}R^{31}$ or $-P(O)R^{32}(OR^{33})$. Said oxygen-containing group is selected from hydroxy, $-OR^{34}$ and $-T-OR^{34}$. Said sulfur-containing group is selected from $-SR^{35}$, $-T-SR^{35}$, $-S(O)R^{36}$ or $-T-SO_2R^{37}$. Said selenium-containing group is selected from $-SeR^{38}$, $-T-SeR^{38}$, $-Se(O)R^{39}$ or $-T-Se(O)R^{39}$. Said group T is selected from a $C_1$-$C_{30}$ hydrocabon group or a substituted $C_1$-$C_{30}$ hydrocabon group. Said $R^{37}$ is selected from hydrogen, a $C_1$-$C_{30}$ hydrocabon group or a substituted $C_1$-$C_{30}$ hydrocabon group.

In the context of the present invention, said $C_1$-$C_{30}$ hydrocabon group is selected from $C_1$-$C_{30}$ alkyl (preferably $C_1$-$C_6$ alkyl, for example isobutyl), $C_7$-$C_{30}$ alkylaryl (for example tolyl, dimethylphenyl, diisobutylphenyl or the like), $C_7$-$C_{30}$ arylalkyl (for example benzyl), $C_3$-$C_{30}$ cyclic alkyl group, $C_2$-$C_{30}$ alkenyl, $C_2$-$C_{30}$ alkynyl, $C_6$-$C_{30}$ aryl (for example phenyl, naphthyl, anthracyl or the like), $C_8$-$C_{30}$ fused ring group or $C_4$-$C_{30}$ heterocyclic group, wherein said heterocyclic group contains 1-3 heteroatoms selected from a nitrogen atom, an oxygen atom or a sulphur atom, for example pyridyl, pyrrolyl, furyl, thienyl or the like.

According to the present invention, in the context of the present invention, said $C_1$-$C_{30}$ hydrocarbon group sometimes refers to the $C_1$-$C_{30}$ hydrocarbon diyl (divalent group, or referred to as the $C_1$-$C_{30}$ hydrocarbylene group) or $C_1$-$C_{30}$ hydrocarbon triyl (trivalent group), depending on the specific situation of the related group it is combined with, which is obvious to those skilled in the art.

In the context of the present invention, the substituted $C_1$-$C_{30}$ hydrocabon group refers to a $C_1$-$C_{30}$ hydrocarbon group with one or more inert substituents. The so-called inert substituent refers to those substituents that do not substantially interfere with the coordination process between the aforementioned coordination groups (referring to groups A, D, E, F, Y, and Z, or optionally including group $R^5$) and the center metal atom M; in other words, due to the limitation by the chemical structure of the multidentate ligand described in the present invention, these substituents have no ability or opportunity (e.g. being affected by steric hindrance) to undergo a coordination reaction with the center metal atom M to form a coordination bond. Generally speaking, the inert substituent is selected from halogen or $C_1$-$C_{30}$ alkyl (preferably $C_1$-$C_6$ alkyl, such as isobutyl).

In the context of the present invention, said boron-containing group is selected from $BF_4^-$, $(C_6F_5)_4B^-$ or $(R^{40}BAr_3)^-$; said aluminum-containing group is selected from alkyl aluminum, $AlPh_4^-$, $AlF_4^-$, $AlCl_4^-$, $AlBr_4^-$, $A11_4^-$ or $R^{41}AlAr_3^-$; said silicon-containing group is selected from $-SiR^{42}R^{43}R^{44}$ or $-T-SiR^{45}$; said germanium-containing group is selected from $-GeR^{46}R^{47}R^{48}$ or $-T-GeR^{49}$; said stannum-containing group is selected from $-SnR^{50}R^{51}R^{52}$, $-T-SnR^{53}$ or $-T-Sn(O)R^{54}$, wherein Ar represents $C_6$-$C_{30}$ aryl. $R^{40}$ to $R^{54}$ are each independently selected from hydrogen, the above-mentioned $C_1$-$C_{30}$ hydrocarbon group, or the above-mentioned substituted $C_1$-$C_{30}$ hydrocarbon group. The above-mentioned groups can be identical to or different from each other, wherein adjacent groups can be combined together with each other to form a bond or to form a ring, wherein, group T is defined as before.

As the non-metallocene complex, for example, the following compounds can be enumerated:

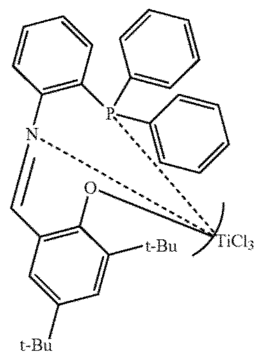 , 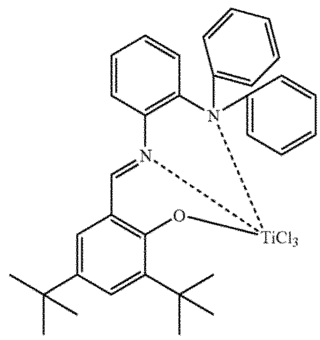 , 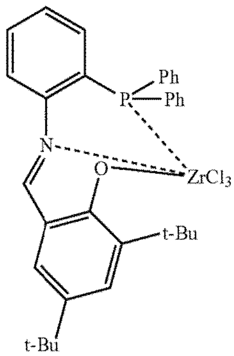 ,

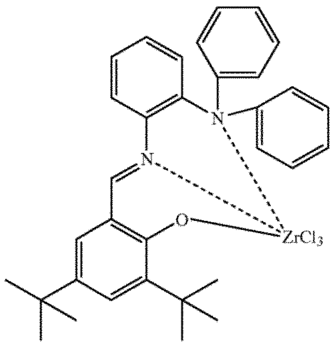 , 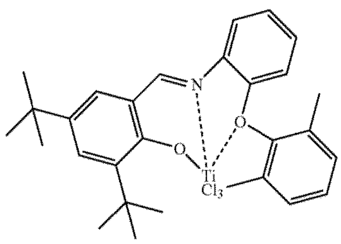 , 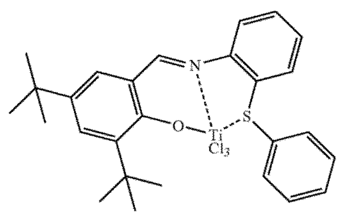 ,

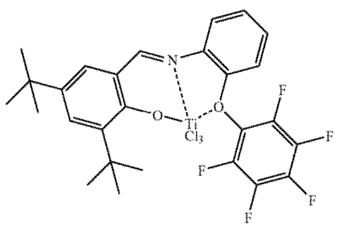 , 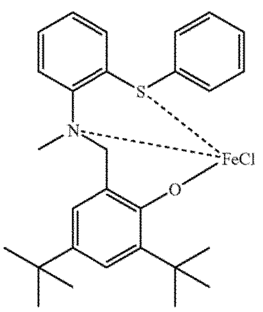 , 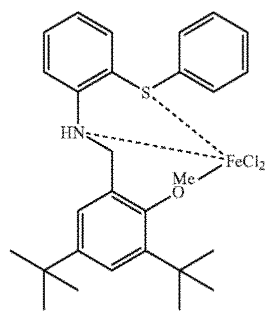 ,

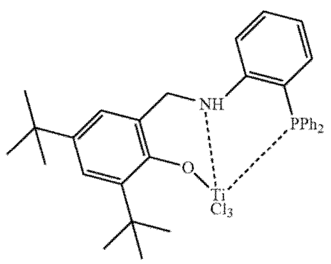 , 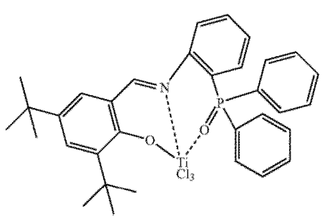 , 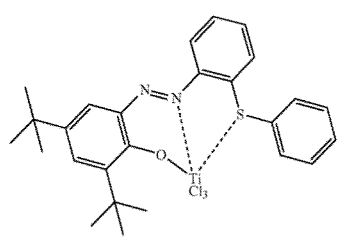 ,

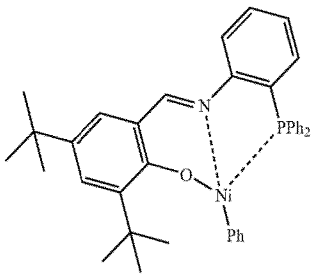 , 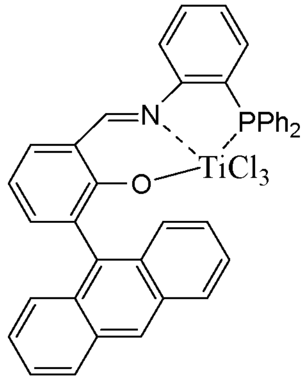 , 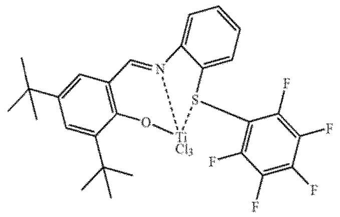 ,

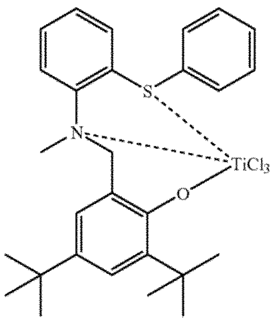 , 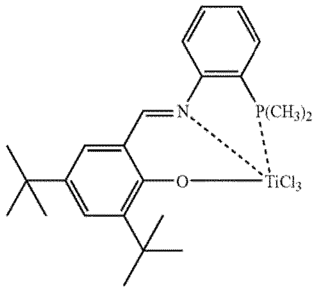 , 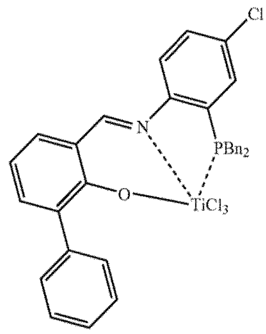 ,

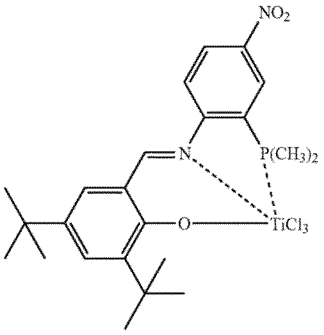 , 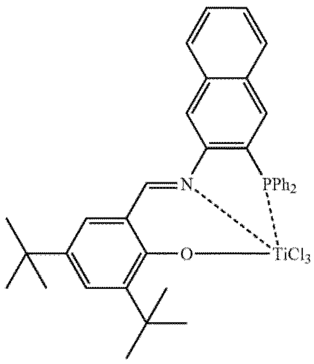 , 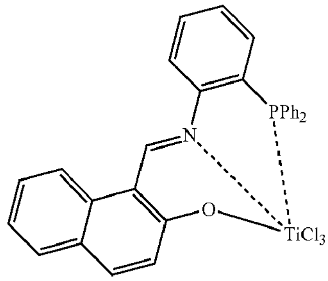 ,

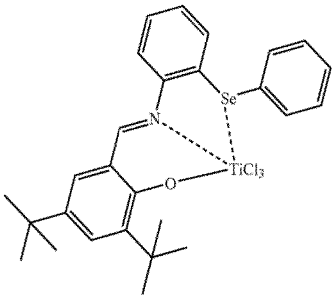 , 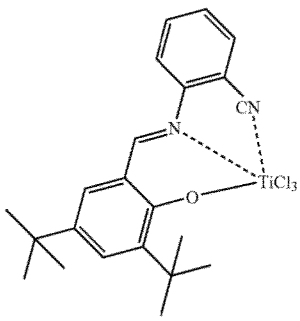 , 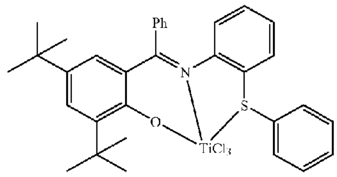 ,

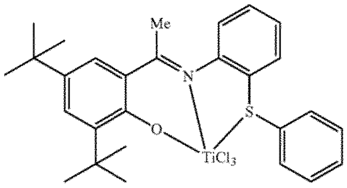, 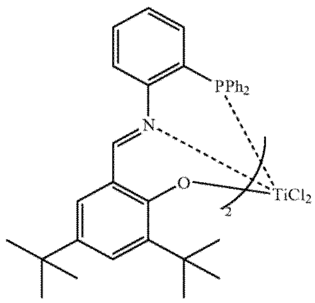, 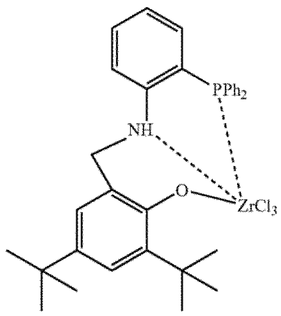,

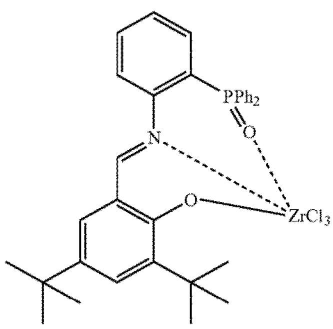, 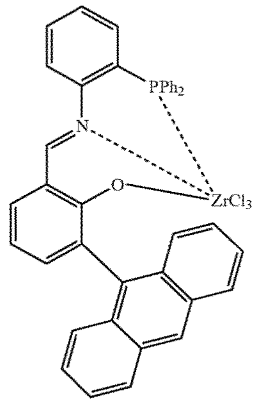, 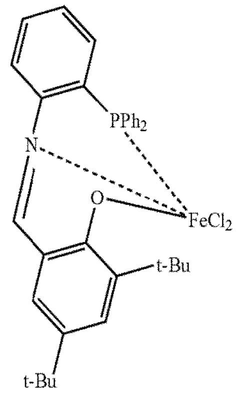,

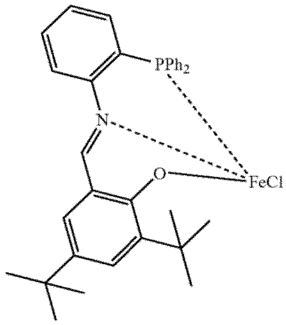, 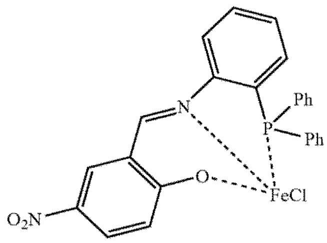, 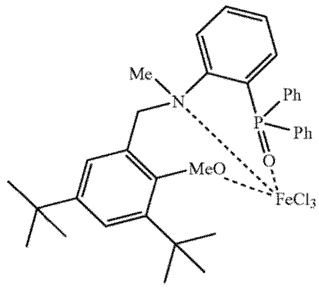,

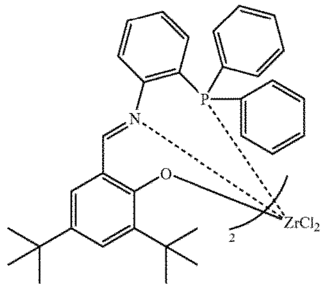 and 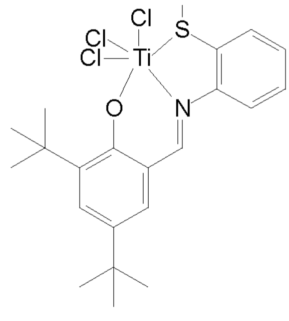.

The non-metallocene complex is preferably selected from the following compounds:

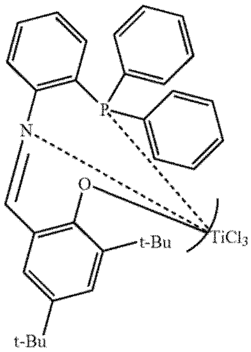 , 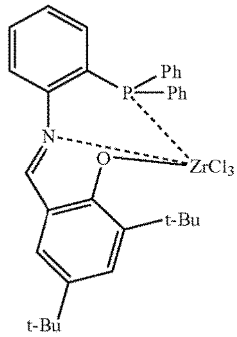 , 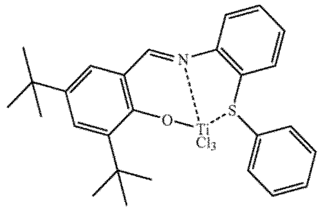 ,

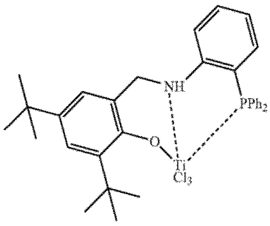 , 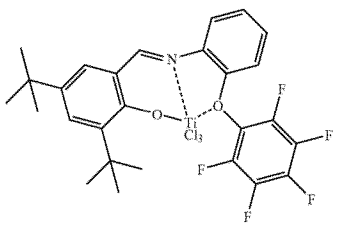 , 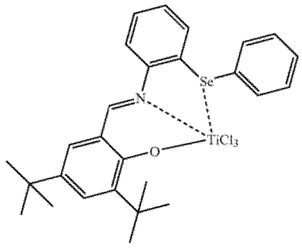 ,

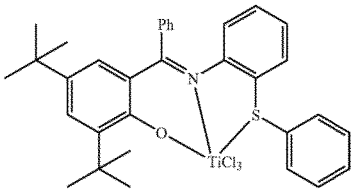 , 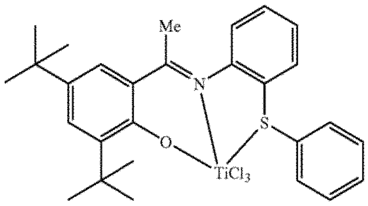 and 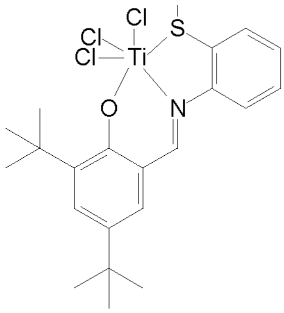 .

The non-metallocene complex is further preferably selected from the following compounds:

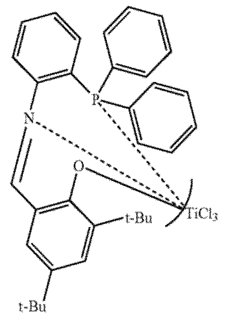 , 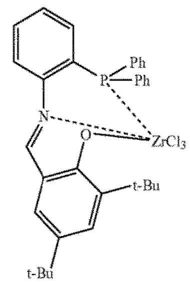 , 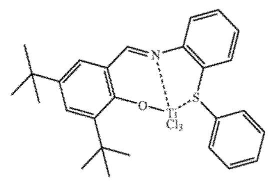 ,

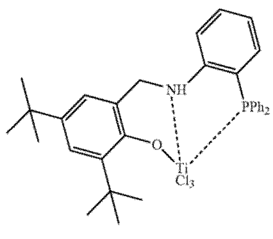 , 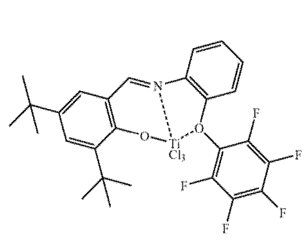 and 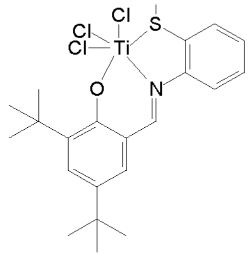 .

The non-metallocene complex is more preferably selected from the following compounds:

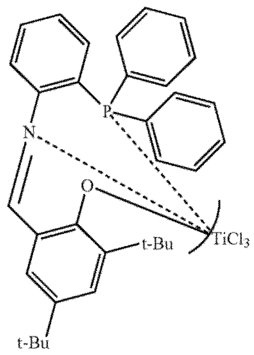 and 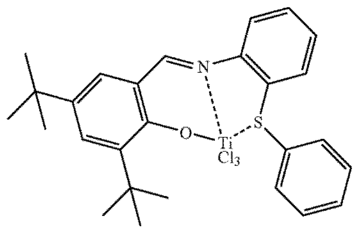.

These non-metallocene complexes can be used alone or in combination at any proportion.

According to the present invention, the multidentate ligand in the non-metallocene complex is not a diethyl compound conventionally used as an electron donor compound in the art.

The non-metallocene complex or the multidentate ligand can be prepared according to any process known to those skilled in the art. For specific contents of the preparation process, see, for example, WO03/010207 and Chinese patents ZL01126323.7 and ZL02110844.7, and the like, which are incorporated herein by reference in their entirety.

According to the present invention, for the convenience of metering and operation, the non-metallocene complex is used in solution form when necessary.

When preparing a solution of said non-metallocene complex, there is no special limit on the solvent used at this time, as long as it can dissolve said non-metallocene complex. As said solvent, for example, one or more of $C_{6-12}$ aromatic hydrocarbon, halogenated $C_{6-12}$ aromatic hydrocarbon, halogenated $C_{1-10}$ alkane, ester and ether can be enumerated. Specifically, for example, toluene, xylene, trimethylbenzene, ethylbenzene, di-ethylbenzene, chlorotoluene, chloroethylbenzene, bromotoluene, bromoethylbenzene, dichloromethane, dichloroethane, ethyl acetate, tetrahydrofuran, and the like can be enumerated. Among them, $C_{6-12}$ aromatic hydrocarbon, dichloromethane and tetrahydrofuran are preferable.

These solvents can be used alone or in combination at any proportion.

In case of dissolving the non-metallocene complex, stirring can be used as required (the stirring rotation speed is generally 10-500 rpm).

According to the present invention, it is convenient that the ratio of the non-metallocene complex to the solvent is generally 0.02-0.30 g/mL, preferably 0.05-0.15 g/mL, but not limited thereto in some cases.

As the way of contacting the non-metallocene complex with the modified composite support in the presence of a second solvent, for example, the following processes can be enumerated.

Firstly, the modified composite support and the non-metallocene complex are contacted (reacted by contacting) in the presence the second solvent to obtain a second mixed slurry.

During the preparation of the second mixed slurry, there is no special limitation on the contact mode and the contact order between the modified composite support and the non-metallocene complex (as well as the second solvent). For example, the following can be enumerated: the modified composite support and the non-metallocene complex are first mixed, and then the second solvent is added to the resulting mixture; alternatively, the non-metallocene complex is dissolved in the second solvent to produce a non-metallocene complex solution, and then the modified composite support and the non-metallocene complex solution are mixed, wherein the latter is preferable.

In addition, in order to prepare the second mixed slurry, for example, the reaction by contacting between the modified composite support and the non-metallocene complex in the presence of the second solvent can be carried out at a temperature in the range from normal temperature to a temperature that is below the boiling point of any of the used solvents (with stirring if necessary) for 0.5-24 hours, preferably 1-8 hours, more preferably 2-6 hours.

At this point, the obtained second mixed slurry is a slurry-like system. Although it is not necessary, in order to ensure the uniformity of the system, the second mixed slurry is preferably placed in a sealed state for a certain period of time (2-48 hours, preferably 4-24 hours, most preferably 6-18 hours) after the preparation. According to the present invention, there is no special limitation on the second solvent (hereinafter sometimes referred to as a solvent for dissolving the non-metallocene complex) during the preparation of the second mixed slurry or during the contacting, as long as it can dissolve the non-metallocene complex.

As the second solvent, for example, one or more of $C_{6-12}$ aromatic hydrocarbon, halogenated $C_{6-12}$ aromatic hydrocarbon, $C_{5-12}$ alkane, halogenated $C_{1-10}$ alkane and ether can be enumerated. Specifically, for example toluene, xylene, trimethylbenzene, ethylbenzene, di-ethylbenzene, chlorotoluene, chloroethylbenzene, bromotoluene, bromoethylbenzene, hexane, dichloromethane, dichloroethane, tetrahydrofuran and the like can be enumerated. Among them, $C_{6-12}$ aromatic hydrocarbon, dichloromethane and tetrahydrofuran are preferable, and dichloromethane is most

preferable.

These solvents can be used alone or in combination at any proportion.

During the preparation of the second mixed slurry or the non-metallocene complex solution, stirring can be used as required (the stirring rotation speed is generally 10-500 rpm).

According to the present invention, there is no limitation on the used amount of the second solvent, as long as it is such an amount sufficient to achieve the adequate contact between the modified composite support and the non-metallocene complex. For example, it is convenient that the ratio of the non-metallocene complex to the second solvent is generally 0.01-0.25 g/mL, preferably 0.05-0.16 g/mL, but not limited thereto in some cases.

In one embodiment of the present invention, a solid product with good flowability can be obtained by directly drying the second mixed slurry, and it is a supported non-metallocene catalyst of the present invention.

In one embodiment of the present invention, it is unnecessary to dry the second mixed slurry, which can be directly used as the supported non-metallocene catalyst.

At this point, the direct drying can be carried out by using conventional processes, e.g. drying in an inert gas atmosphere, drying in vacuum, heating and drying in vacuum, or the like, wherein heating and drying in vacuum is preferable. The drying is generally carried out at a temperature of 5-15°C lower than the boiling point of any solvent contained in the mixed slurry (generally 30-160°C, preferably 60-130°C), and the drying time is generally 2-24 hours, but not limited thereto in some cases.

According to the present invention, the first solvent is used in such an amount that the ratio of the magnesium compound to the first solvent is 1 mol:75-400mL, preferably 1 mol:150-300mL, more preferably 1 mol:200-250mL.

According to the present invention, the alcohol is used in such an amount that the molar ratio of the magnesium compound as the Mg element to the alcohol is 1:0.02-4.00, preferably 1:0.05-3.00, more preferably 1:0.10-2.50.

According to the present invention, the porous support is used in such an amount that the mass ratio of the magnesium compound as the magnesium compound solid to the porous support is 1:0.1-20, preferably 1:0.5-10, more preferably 1:1-5. According to the present invention, the precipitating agent is used in such an amount that the volume ratio of the precipitating agent to the first solvent is 1:0.2-5, preferably 1:0.5-2, more preferably 1:0.8-1.5.

According to the present invention, the chemical treating agent is used in such an amount that the molar ratio of the composite support as the Mg element to the chemical treating agent as the Group IVB metal element is 1:0.01-1, preferably 1:0.01-0.50, more preferably 1:0.10-0.30.

According to the present invention, the non-metallocene complex is used in such an amount that the molar ratio of the composite support as the Mg element to the non-metallocene complex is 1:0.01-1, preferably 1:0.04-0.4, more preferably 1:0.08-0.2.

Those skilled in the art are aware that all the aforementioned process steps are preferably carried out under essentially anhydrous and oxygen-free conditions. "Essentially anhydrous and oxygen-free" as mentioned herein refers to the contents of water and oxygen in the system are continuously less than 100 ppm. Moreover, the supported non-metallocene catalyst of the present invention after the preparation usually needs to be stored for backup in the presence of a micro positive-pressure inert gas (e.g. nitrogen gas, argon gas, helium gas, and the like) under a sealed condition.

In the present invention, unless otherwise specified, the amount of the supported non-metallocene catalyst is expressed as the amount of the Group IVB active metal element.

According to the present invention, the cocatalyst is selected from aluminoxane, alkyl aluminum, haloalkyl aluminum, and mixtures thereof.

For said aluminoxane, for example, a linear aluminoxane represented by the following general formula (III-1) and a cyclic aluminoxane represented by the following general formula (III-2).

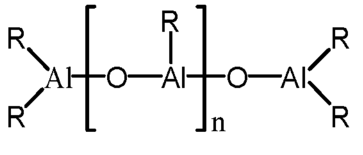 (III-1) 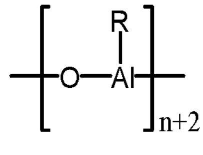 (III-2)

In the aforementioned general formulae, the groups R are identical to or different from (preferably identical to) each other, and each independently selected from $C_1$-$C_8$ alkyl, preferably methyl, ethyl, propyl, butyl, and isobutyl, most preferably methyl; n is any integer in the range of 1-50, preferably any integer in the range of 10-30.

As said aluminoxane, methyl aluminoxane, ethyl aluminoxane, iso-butyl aluminoxane and n-butyl aluminoxane are preferable; methyl aluminoxane and iso-butyl aluminoxane are further preferable, and methyl aluminoxane is most preferable.

These aluminoxanes can be used alone or in combination at any proportion.

As said alkyl aluminum, for example, a compound represented by the following general formula (III) can be enumerated:

$Al(R)_3$ (III)

wherein, groups R are identical to or different from (preferably identical to) each other, and are each independently selected from $C_1$-$C_8$ alkyl, preferably methyl, ethyl, propyl, butyl and iso-butyl, most preferably methyl.

Specifically, as said alkyl aluminum, for example, the following can be enumerated: trimethyl aluminum ($Al(CH_3)_3$), triethyl aluminum ($Al(CH_3CH_2)_3$), tri-n-propyl aluminum ($Al(C_3H_7)_3$), tri-iso-propyl aluminum ($Al(i\text{-}C_3H_7)_3$), tri-iso-butyl aluminum ($Al(i\text{-}C_4H_9)_3$), tri-n-butyl aluminum ($Al(C_4H_9)_3$), tri-iso-pentyl aluminum ($Al(i\text{-}C_5H_{11})_3$), tri-n-pentyl aluminum ($Al(C_5H_{11})_3$), tri-n-hexyl aluminum ($Al(C_6H_{13})_3$), tri-iso-hexyl aluminum ($Al(i\text{-}C_6H_{13})_3$), diethyl methyl aluminum ($Al(CH_3)(CH_3CH_2)_2$) and dimethyl ethyl aluminum ($Al(CH_3CH_2)(CH_3)_2$) and the like, wherein trimethyl aluminum, triethyl aluminum, tri-propyl aluminum and tri-iso-butyl aluminum are preferable, triethyl aluminum and tri-iso-butyl aluminum are most preferable.

These alkyl aluminums can be used alone or in combination at any proportion.

As said haloalkyl aluminum, for example, a compound represented by the following general formula (III') can be enumerated:

$Al(R)_nX_{3-n}$ (III')

wherein, groups R are identical to or different from (preferably identical to) each other, and are each independently selected from $C_1$-$C_8$ alkyl, preferably methyl, ethyl, propyl, butyl and iso-butyl, most preferably methyl; X represents F, Cl, Br, or I; n represents 1 or 2.

Specifically, as the haloalkyl aluminum, for example, the following can be enumerated: monochlorodimethylaluminum ($Al(CH_3)_2Cl$), dichloromethylaluminum ($Al(CH_3)Cl_2$), monochlorodiethylaluminum ($Al(CH_3CH_2)_2Cl$), dichloroethylaluminum ($Al(CH_3CH_2)Cl_2$), monochlorodipropylaluminum ($Al(C_3H_7)_2Cl$), dichloropropylaluminum ($Al(C_3H_7)Cl_2$)), monochlorodi-n-butylaluminum ($Al(C_4H_9)_2Cl$), dichloro-n-butylaluminum ($Al(C_4H_9)Cl_2$), monochlorodiisobutylaluminum ($Al(i\text{-}C_4H_9)_2Cl$), dichloro-isobutylaluminum ($Al(i\text{-}C_4H_9)Cl_2$), monochlorodi-n-pentylaluminum ($Al(C_5H_{11})_2Cl$), dichloro-n-pentylaluminum ($Al(C_5H_{11})Cl_2$), monochlorodiisopentylaluminum ($Al(i\text{-}C_5H_{11})_2Cl$), dichloro-isopentylaluminum ($Al(i\text{-}C_5H_{11})Cl_2$), monochlorodi-n-hexylaluminum ($Al(C_6H_{13})_2Cl$), dichloro-n-hexylaluminum ($Al(C_6H_{13})Cl_2$), monochlorodiisohexylaluminum ($Al(i\text{-}C_6H_{13})_2Cl$), dichloro-isohexylaluminum ($Al(i\text{-}C_6H_3)Cl_2$), monochloromethylethylaluminum ($Al(CH_3)(CH_3CH_2)Cl$), monochloromethylpropylaluminum ($Al(CH_3)(C_3H_7)Cl$), monochloromethyl-n-butylaluminum ($Al(CH_3)(C_4H_9)Cl$), monochloromethyl-isobutylaluminum ($Al(CH_3)(i\text{-}C_4H_9)Cl$), monochloroethylpropylaluminum ($Al(CH_2CH_3)(C_3H_7)Cl$), monochloroethyl-n-butylaluminum ($AlCH_2CH_3)(C_4H_9)Cl$), monochloromethyl-isobutylaluminum ($Al(CH_2CH_3)(i\text{-}C_4H_9)Cl$) and the like, wherein is/are preferable monochlorodiethylaluminum, dichloroethylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, further preferably chlorodiethylaluminum, dichloroethylaluminum and monochlorodi-n-hexylaluminum, and most preferably monochlorodiethylaluminum.

These haloalkyl aluminums can be used alone or in combination at any proportion. In addition, according to the present invention, the cocatalysts can be used alone or in combination at any proportion as required, without any special limitations. In the present invention, unless otherwise specified, the amount of the cocatalyst is expressed as the content of the Al element.

According to the present invention, in the process for preparing the ultra-high molecular weight polyethylene, the polymerization solvent is selected from an alkane solvent having a boiling point of 5-55°C or a mixed alkane solvent having a saturated vapor pressure at 20°C of 20-150 KPa (preferably 40-110 KPa). According to the present invention, as the alkane solvent having a boiling point of 5-55°C, for example, 2,2-dimethylpropane (also known as neopentane, having a boiling point of 9.5°C, and a saturated vapor pressure at 20°C of 146.63KPa), 2-methylbutane (also known as isopentane, having a boiling point of 27.83°C, and a saturated vapor pressure at 20°C of 76.7KPa), n-pentane (having a boiling point of 36.1°C, and a saturated vapor pressure at 20°C of 56.5KPa), cyclopentane (having a boiling point of 49.26°C, and a saturated vapor pressure at 20°C of 34.6KPa) can be enumerated, preferably an alkane solvent having a boiling point of 25-52°C.

As the mixed alkane solvent having a saturated vapor pressure at 20°C of 20-150 KPa (preferably 40-110 KPa), it is a mixed solvent formed by mixing different alkane solvents according to a certain ratio, for example, a mixed solvent formed from hexane and an isomer thereof and from pentane and an isomer thereof, or an alkane mixture obtained by cutting according to the distillation range from a solvent distillation unit, preferably a mixed solvent formed from hexane and an isomer thereof. Specifically, a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-hexane and cyclopentane, a combination of n-hexane and n-pentane, a combination of n-pentane-isopentane-cyclopentane, a combination of n-pentane-n-hexane-isopentane, or the like can be enumerated, but not limited thereto, as long as it is a

mixed alkane having a saturated vapor pressure at 20°C of 20-150KPa (preferably 40-110KPa).

In one embodiment of the present invention, as the mixed alkane solvent having a saturated vapor pressure at 20°C of 20-150 KPa (preferably 40-110 KPa), it is preferably a mixed alkane solvent having a saturated vapor pressure at 20°C of 20-150 KPa (preferably 40-110 KPa) formed by mixing two or more alkanes selected from n-pentane, isopentane, neopentane and cyclopentane, more preferably a combination of n-pentane and isopentane, a combination of isopentane and neopentane, a combination of n-pentane and cyclopentane, a combination of isopentane and cyclopentane, a combination of neopentane and cyclopentane, a combination of neopentane and n-pentane, a combination of n-pentane-isopentane-cyclopentane, a combination of neopentane-isopentane-n-pentane and the like. For the proportion of each alkane in the mixed alkane, for example, when two alkane solvents are mixed, their molar ratio can be 0.01-100: 1, preferably 0.1-10: 1, and when three alkane solvents are mixed, their molar ratio can be 0.01-100:0.01-100: 1, preferably 0.1-10:0.1-10:1, so long as the obtained mixed alkane solvent has a saturated vapor pressure at 20°C of 20-150 KPa (preferably 40-110 KPa). In one embodiment of the present invention, only an alkane solvent having a boiling point of 5-55°C or a mixed alkane solvent having a saturated vapor pressure at 20°C of 20-150 KPa is used as the polymerization solvent.

In the process for preparing the ultra-high molecular weight polyethylene of the present invention, the polymerization temperature of the ethylene slurry polymerization is 50-100°C, preferably 60-90°C. Among them, if the ethylene slurry polymerization is carried out at a higher polymerization temperature, a solvent with a higher boiling point can be used. Conversely, if the ethylene slurry polymerization is carried out at a lower polymerization temperature, a solvent with a lower boiling point can be used. It is known that in the ethylene slurry polymerization condition, under similar and comparable conditions such as polymerization pressure, main catalyst, cocatalyst, and solvent, within the polymerization temperature range described in the present invention, as the polymerization temperature increases, the viscosity-average molecular weight of the thereby obtained ultra-high molecular weight polyethylene increases first and then decreases. Therefore, according to the present invention, the viscosity-average molecular weight of the ultra-high molecular weight polyethylene obtained from the ethylene slurry polymerization can be adjusted and controlled through the polymerization temperature.

In the process for preparing the ultra-high molecular weight polyethylene of the present invention, the polymerization pressure is 0.4-4.0 MPa, preferably 1.0-3.0 MPa, and more preferably 1.5-3.0 MPa. Among them, if the ethylene slurry polymerization is carried out at a higher polymerization temperature, a lower polymerization pressure can be used. Conversely, if the ethylene slurry polymerization is carried out at a lower polymerization temperature, a higher polymerization pressure can be used. In the ethylene slurry polymerization condition, under similar and comparable conditions such as polymerization temperature, main catalyst, cocatalyst, and solvent, within the polymerization pressure range described in the present invention, as the polymerization pressure increases, the viscosity-average molecular weight of the thereby obtained ultra-high molecular weight polyethylene also increases first and then decreases. Therefore, according to the present invention, the viscosity-average molecular weight of the ultra-high molecular weight polyethylene obtained from the ethylene slurry polymerization can also be adjusted and controlled through the polymerization pressure.

The use of an alkane solvent having a boiling point of 5-55°C or a mixed alkane solvent having a saturated vapor pressure at 20°C of 20-150 KPa provided by the present invention as a polymerization solvent provides an opportunity and choice for preparing the ultra-high molecular weight polyethylene with different viscosity-average molecular weights through the ethylene slurry polymerization. For example, the use of an alkane solvent having a lower boiling point (for example n-pentane, isopentane or cyclopentane and the like) or a mixed alkane solvent having a higher saturated vapor pressure at 20°C (for example a combination of n-pentane and neopentane, a combination of isopentane and neopentane and the like) is prone to the heat removal of the ethylene slurry polymerization reaction, and therefore can be carried out at a higher polymerization pressure and a lower polymerization temperature, while the use of an alkane solvent having a higher boiling point or a mixed alkane solvent having a lower saturated vapor pressure at 20°C can be carried out at a lower polymerization pressure and a higher polymerization temperature in order to effectively remove the heat from the polymerization reaction.

In one embodiment of the present invention, an ultra-high viscosity-average molecular weight polyethylene is provided, wherein the ultra-high viscosity-average molecular weight polyethylene has a viscosity-average molecular weight of 150-1000 $\times$ $10^4$ g/mol, a bulk density of 0.30-0.55 g/cm$^3$, a true density of 0.910-0.950 g/cm$^3$, a titanium content of 0-3 ppm, a calcium content of 0-5 ppm, a magnesium content of 0-10 ppm, an aluminum content of 0-30 ppm, a chlorine content of 0-50 ppm, a total ash content of less than 200 ppm, a melting point of 140-152°C, a crystallinity of 40-70%, a tensile yield strength of greater than 22 MPa, a tensile strength at break of greater than 32 MPa, an elongation at break of greater than 350%, an impact strength of greater than 70 KJ/m$^2$, and a Young's modulus of greater than 300 MPa.

In one embodiment of the present invention, an ultra-high viscosity-average molecular weight polyethylene is provided, wherein it has a viscosity-average molecular weight of 300-800 $\times$ $10^4$ g/mol, a bulk density of 0.33-0.52 g/cm$^3$, a true density of 0.915-0.945 g/cm$^3$, a titanium content of 0-2 ppm, a calcium content of 0-3 ppm, a magnesium content of 0-5 ppm, an aluminum content of 0-20 ppm, a chlorine content of 0-30 ppm, a total ash content of less than 150 ppm,

a melting point of 142-150°C, a crystallinity of 45-65%, a tensile yield strength of greater than 25 MPa, a tensile strength at break of greater than 35 MPa, an elongation at break of greater than 400%, an impact strength of greater than 75 $KJ/m^2$, and a Young's modulus of greater than 350 MPa.

In one embodiment of the present invention, an ultra-high viscosity-average molecular weight ethylene copolymer is provided, wherein the ultra-high molecular weight ethylene copolymer has a viscosity-average molecular weight of 150-800 $\times 10^4$ g/mol, a bulk density of 0.30-0.55 $g/cm^3$, a true density of 0.900-0.950 $g/cm^3$, a comonomer molar insertion rate of 0.05-4.0%, a titanium content of 0-3 ppm, a calcium content of 0-5 ppm, a magnesium content of 0-10 ppm, an aluminum content of 0-30 ppm, a chlorine content of 0-50 ppm, a total ash content of less than 200 ppm, a melting point of 140-152°C, a crystallinity of 40-70%, and a tensile elasticity module of greater than 250 MPa.

In one embodiment of the present invention, an ultra-high viscosity-average molecular weight ethylene copolymer is provided, wherein the ethylene copolymer has a viscosity-average molecular weight of 300-700 $\times 10^4$ g/mol, a bulk density of 0.33-0.52 $g/cm^3$, a true density of 0.905-0.945 $g/cm^3$, a comonomer molar insertion rate of 0.10-2.0%, a titanium content of 0-2 ppm, a calcium content of 0-3 ppm, a magnesium content of 0-5 ppm, an aluminum content of 0-20 ppm, a chlorine content of 0-30 ppm, a total ash content of less than 150 ppm, a melting point of 142-150°C, a crystallinity of 45-65%, and a tensile elasticity module of greater than 280 MPa.

In one embodiment of the present invention, a process for preparing an ultra-high viscosity-average molecular weight polyethylene by polymerization is provided, wherein ethylene and optionally a comonomer are subjected to the slurry polymerization with a supported non-metallocene catalyst as the main catalyst, with one or more of aluminoxane, alkyl aluminum, and haloalkyl aluminum as the cocatalyst, with an alkane solvent having a boiling point of 5-55°C or a mixed alkane solvent having a saturated vapor pressure at 20°C of 20-150 KPa as the polymerization solvent, at a polymerization temperature of 50-100°C, under a polymerization pressure 0.4-4.0 of MPa, in the ethylene slurry polymerization condition, and the ethylene slurry polymerization activity is higher than 2 $\times 10^4$ g polyethylene/g main catalyst.

In one embodiment of the present invention, in the process for preparaing the ultra-high viscosity-average molecular weight polyethylene by polymerization, ethylene is subjected to the slurry polymerization at a polymerization temperature of 60-90°C, under a polymerization pressure of 1.0-3.0 MPa, in the ethylene slurry polymerization condition, and the ethylene slurry polymerization activity is higher than 3 $\times 10^4$ g polyethylene/g main catalyst, and when the comonomer is present, the molar ratio of the comonomer to the active metal in the catalyst is 20-400: 1.

In the process for preparing the ultra-high molecular weight polyethylene of the present invention, the ethylene slurry polymerization reactor is not limited in any way, as long as ethylene and optionally the comonomer can come into contact with the main catalyst and the cocatalyst in the solvent within the ranges of the polymerization pressure and the polymerization temperature described in the present invention. In order to effectively avoid the material adhesion and aggregation, it can a tank-type ethylene slurry stirring reactor. For a stirring tank, there is no specific limitation to its stirring rate. As long as it can ensure the normal dispersion of the slurry in the reactor, the stirring rotation speed is related to the reactor volume. Generally speaking, the smaller the reactor volume is, the higher the stirring rotation speed is required. The stirring rotation speed is 10-1000 rpm, preferably 20-500 rpm.

In the process for preparing the ultra-high molecular weight polyethylene of the present invention, there is no specific limitation on the polymerization reaction time as long aswithin a certain polymerization time, based on the main catalyst of the present invention, the polymerization activity of the ethylene slurry polymerization is higher than 2 $\times 10^4$ gpolyethylene/g main catalyst, preferably the polymerization activity of the ethylene slurry polymerization is higher than 3 $\times 10^4$ g polyethylene/g main catalyst, most preferably the polymerization activity is higher than 4 $\times 10^4$ g polyethylene/g main catalyst.

According to the present invention, the mode of adding the supported non-metallocene catalyst as the main catalyst and one or more of aluminoxane, alkyl aluminum or haloalkyl aluminum as the cocatalyst to the polymerization reaction system can be as follows: first adding the main catalyst and then adding the cocatalyst; or first adding the cocatalyst and then adding the main catalyst; or first mixing by contact of the main catalyst and the cocatalyst and then adding them together; or adding the main catalyst and the cocatalyst separately at the same time. When the main catalyst and the cocatalyst are separately added, they can be successively added to the same charge pipe, or successively added to the different charge pipes; while when the main catalyst and the cocatalyst are separately added at the same time, they should be added to the different charge pipes.

In the preparation of the ultra-high molecular weight polyethylene having a low metal element content of the present invention, in order to reduce the metal element content in the polymer, it is necessary to fully release and exert the catalytic activity of the main catalyst for the ethylene polymerization reaction. By using the supported non-metallocene catalyst described in the present invention, under the polymerization reaction conditions including the polymerization pressure, the polymerization temperature, the polymerization solvent, and the optional participation of the comonomer, the ultra-high molecular weight polyethylene having a low metal element content and a low ash content can be obtained.

According to the present invention, the polymerization pressure and the polymerization solvent of the present invention are conducive to achieving the high catalyst activity, and thereby obtaining the ultra-high molecular weight polyethylene having a low metal element content. The polymerization temperature of the present invention is conducive

to achieving the high catalyst activity, but it will affect the viscosity-average molecular weight of the thereby obtained polyethylene. In addition, the extended polymerization time is also conducive to achieving high catalyst activity.

The ultra-high molecular weight polyethylene of the present invention is an ultra-high molecular weight polyethylene having a low metal element content and a low ash content, and has mechanical properties such as high tensile yield strength, high tensile fracture strength, and higher impact strength. Therefore, the polyethylene of the present invention can be suitable for preparing high-end materials such as high-strength ultra-high molecular weight polyethylene fibers and artificial medical joints.

## Examples

The present invention will be described in further detail with reference to examples, but the present invention is not limited to these examples.

The determination of the bulk density of the ultra-high molecular weight polyethylene is carried out in accordance with the standard GB 1636-79, and the true density is determined based on the gradient column method in a density tube in accordance with the standard GB/T 1033-86.

The polymerization activity of the main catalyst is calculated according to the following process: after the polymerization reaction is completed, the polymerization product in the reaction tank is filtered and dried, and then the polymerization product is weighed, the polymerization activity (in kg polymer/g catalyst or kg PE/gCat) of the catalyst is represented by the ratio of the mass of the polymerization product divided by the mass of the used polyethylene main catalyst (the supported non-metallocene catalyst).

The contents of the active metal element of the supported non-metallocene catalyst and the elements such as titanium, magnesium, calcium, aluminum, silicon and chlorine of the ultra-high molecular weight polyethylene are determined by the ICP-AES method.

The ash content in the ultra-high molecular weight polyethylene is determined with the direct calcining method in accordance of the national standard GBT9345.1-2008. The polymer is burned in a muffle furnace and its residue is treated at a high temperature until constant weight, the content is obtained by dividing the mass of the residue by the initial polymer mass.

The determination of the comonomer insertion rate in the ultra-high molecular weight ethylene copolymer is performed as follows, a copolymer with a known content is calibrated with a nuclear magnetic resonance method and the measurement is performed with a 66/S Fourier transform infrared spectrometer of German Bruck Corporation.

The viscosity-average molecular weight of the ultra-high molecular weight ethylene is calculated according to the following method: in accordance of the standard ASTM D4020-00, the intrinsic viscosity of the polymer is measured using a high-temperature dilution type Ubbelohde viscometer process (with a capillary inner diameter of 0.44mm, a constant temperature bath medium of 300 # silicone oil, a dilution solvent of decalin, and a measurement temperature of 135°C), and then the viscosity-average molecular weight Mv of the polymer is calculated according to the following equation.

$$Mv=5.37\times10^4\times[\eta]^{1.37}$$

wherein, $\eta$ is the intrinsic viscosity.

The determination of the solvent residue content in the wet material after polymerization reaction is performed as follows: directly filtering the ethylene slurry polymer powder obtained after the polymerization reaction is completed in the polymerization reactor with a 100 mesh filter screen, weighing the wet polymer and recording the mass as ml, and then completely drying the wet polymer under the vacuum of 20 mBar at 80°C and weighing the dried polymer powder and recording the mass as m2, and then calculating out the solvent residue content.

$$\text{Solvent residual content}=\left(\frac{m1-m2}{m2}\right)\times 100\%$$

The determination of the melting point and the crystallinity of the ultra-high molecular weight polyethylene is performed by using a differential thermal scanning calorimetry. The instrument is the Q1000 DSC differential thermal scanning calorimeter of TA Corporation, USA, and the determination is performed according to the standard YYT0815-2010. The tensile yield strength, the fracture strength, and the elongation at break of the polymer are measured in accordance with the standard GB/T 1040.2-2006. The impact strength of the polymer is determined in accordance with GB/T 1043-1993. The Young's modulus is measured using a universal testing machine, where the compression conditions include the pre-pressing temperature is 80°C and the pre-pressing pressure is 7.0MPa, the hot-pressing

temperature is 190°C and the hot-pressing pressure is 7.0MPa; the cold-pressing temperature is the normal temperature, and the cold-pressing pressure is 15.0MPa. The tensile elasticity modulus is measured using a universal testing machine in accordance of GB/T 1040.2-2006, where the compression conditions include the pre-pressing temperature is 80°C and the pre-pressing pressure is 7.0MPa, the hot-pressing temperature is 190°C and the hot-pressing pressure is 7.0MPa; the cold-pressing temperature is the normal temperature, and the cold-pressing pressure is 15.0MPa.

**Example 1: Preparation of main catalyst**

**Example 1-1**

The magnesium compound was anhydrous magnesium chloride, the first solvent was tetrahydrofuran, the alcohol was ethanol, and the porous support was silica, i.e., silica gel, which was ES757 from Ineos Company. The silica gel was first thermally activated by continuous calcining at 600°C in a nitrogen atmosphere for 4 hours. The Group IVB chemical treating agent was titanium tetrachloride ($TiCl_4$), the second solvent was dichloromethane, and the non-metallocene complex was a compound having a structure of

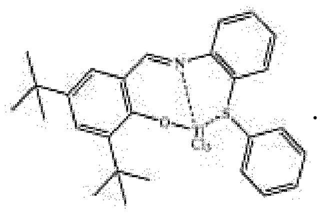

5g of the magnesium compound was added to the first solvent, then the alcohol was added. The mixture was completely dissolved at room temperature to obtain a magnesium compound solution. Then the porous support was added. The resulting mixture was stirred for 2 hours to obtain a first mixed slurry. Then the slurry was uniformly heated to 90°C, and directly vacuumized and dried to obtain a composite support.

The obtained composite support was added to a hexane solvent. The Group IVB chemical treating agent was added dropwise within 30 minutes at normal temperature. Then the resulting mixture was uniformly heated to 60°C to perform an isothermal reaction for 2 hours, then filtered, washed with the hexane solvent three times with the used amount for each washing identical to the amount of the solvent added before, and finally dried in vacuum at 60°C to produce a modified composite support.

At room temperature, the non-metallocene complex was added to the second solvent, followed by the addition of the modified composite support. The resulting mixture was stirred for 4 hours, then standed in a sealed state for 12 hours, and then directly vacuumized and dried at normal temperature to obtain a supported non-metallocene catalyst.

The used proportioning included the mass ratio of the magnesium compound and the porous support was 1:2; the molar ratio of the magnesium compound as the Mg element to the alcohol was 1:2; the proportion of the magnesium compound and the first solvent was 1 mol:210 mL; the molar ratio of the composite support as the Mg element to the chemical treating agent as the Group IVB metal element was 1:0.20; the molar ratio of the composite support as the Mg element to the non-metallocene complex was 1:0.08. The proportion of the non-metallocene complex relative to said second solvent was 0.1 g/mL.

The supported non-metallocene catalyst was denoted as CAT-1.

**Example 1-2**

It was basically the same as Example 1-1, but with the following changes. The magnesium compound was changed to ethyloxy magnesium ($Mg(OC_2H_5)_2$), the alcohol was changed to n-butanol, the first solvent was changed to toluene, the porous support was a partially crosslinked (crosslinking degree of 30%) polystyrene. The polystyrene was continously dried at 85°C under a nitrogen gas atmosphere for 12 hours. The chemical treating agent was changed to zirconium tetrachloride ($ZrCl_4$).

The used non-metallocene complex was

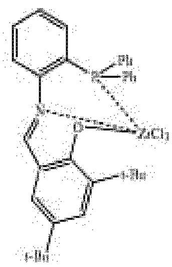

,

the second solvent was changed to toluene, the change in the treatment of the first mixed slurry included adding a precipitating agent hexane to the first mixed slurry to make it completely precipitate, filtering and washing with the precipitating agent three times, vacuuming at 60°C and then drying.

The used proportioning included the mass ratio of the magnesium compound and the porous support was 1:1; the molar ratio of the magnesium compound as the Mg element to the alcohol was 1:1; the proportion of the magnesium compound and the first solvent was 1 mol:150 mL; the molar ratio of the composite support as the Mg element to the chemical treating agent as the Group IVB metal element was 1:0.30; the molar ratio of the composite support as the Mg element to the non-metallocene complex was 1:0.10; the volume ratio of the precipitating agent to the first solvent was 1:1. The proportion of the non-metallocene complex relative to said second solvent was 0.06 g/mL.

The supported non-metallocene catalyst was denoted as CAT-2.

**Example 1-3**

It was basically the same as Example 1-1, but with the following changes. The magnesium compound was changed to anhydrous magnesium bromide ($MgBr_2$), the alcohol was changed to 2-ethylhexanol, the first solvent and the second solvent were changed to hexane, and the used porous support was montmorillonite. The montmorillonite was continously calcined at 300°C under a nitrogen gas atmosphere for 6 hours. The chemical treating agent was changed to titanium tetrabromide ($TiBr_4$), and the used non-metallocene complex was

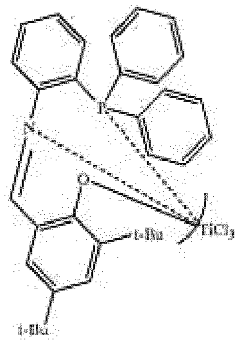

.

The change in the treatment of the first mixed slurry included being directly vacuumized and dried at 105°C.

The used proportioning included the mass ratio of the magnesium compound and the porous support was 1:5; the molar ratio of the magnesium compound as the Mg element to the alcohol was 1:0.7; the proportion of the magnesium compound and the first solvent was 1 mol:280 mL; the molar ratio of the composite support as the Mg element to the chemical treating agent as the Group IVB metal element was 1:0.10; and the molar ratio of the composite support as the Mg element to the non-metallocene complex was 1:0.05. The proportion of the non-metallocene complex relative to said second solvent was 0.05 g/mL.

The supported non-metallocene catalyst was denoted as CAT-3.

**Example 2: Preparation of ultra-high molecular weight ethylene homopolymer**

A 5L polymerization autoclave was purged with a high-purity nitrogen at 100°C for 2 hour and then vented to remove the pressure therein. 2.5L of the solvent was added. Then the main catalyst (the supported non-metallocene catalysts CAT-1 to CAT-3) prepared in Example 1 of the present invention and the cocatalyst were added under stirring conditions (300rpm). The autoclave was heated up to a preset temperature, ethylene was continously introduced and the constant temperature and pressure were maintained to reach the preset polymerization time. The introduction of ethylene was stopped and the autoclave was vented to remove the pressure therein. The autoclave was cooled down

to room temperature. The polymer together with the solvent was discharged from the autoclave. The supernatant solvent was removed, and the resulting material was dried and weighed to obtain the final mass. The specific conditions of the ethylene slurry homopolymerization reaction were shown in Table 1. The basic performance result of the thereby obtained ultra-high molecular weight polyethylene was shown in Table 2. The summary of the results of the metal element content, the ash content and the mechanical property of the ultra-high molecular weight polyethylene prepared by the ethylene slurry polymerization was shown in Table 3.

**Comparative Example 2-1**

This comparative example was substantially identical to Example 2, except that the polymerization solvent was changed to n-hexane as the solvent, the polymer number was UHMWPE15. The specific conditions of the ethylene slurry polymerization reaction were shown in Table 1. The performance result of the thereby obtained ultra-high molecular weight polyethylene prepared by the ethylene slurry polymerization was shown in Table 2. The summary of the results of the metal element content, the ash content and the crystallinity of the ultra-high molecular weight polyethylene prepared by the ethylene slurry polymerization was shown in Table 3.

**Comparative Example 2-2**

This comparative example was substantially identical to Example 2, except that the polymerization solvent was changed to n-heptane as the solvent, the polymer number was UHMWPE16. The specific conditions of the ethylene slurry polymerization reaction were shown in Table 1. The performance result of the thereby obtained ultra-high molecular weight polyethylene prepared by the ethylene slurry polymerization was shown in Table 2. The summary of the results of the metal element content, the ash content and the crystallinity of the ultra-high molecular weight polyethylene prepared by the ethylene slurry polymerization was shown in Table 3.

**Comparative Example 2-3**

This comparative example was substantially identical to Example 2, except that the catalyst was changed to a dichlorozirconocene supported on silica gel-type metallocene catalyst, the used cocatalyst was methyl aluminoxane, and the polymerization was performed for 6 hours. It was found that the polymerization activity was extremely low (less than 2 kgPE/g Cat), and the viscosity-average molecular weight of the polymer was less than $60 \times 10^4$ g/mol.

**Comparative Example 2-4**

This comparative example was substantially identical to Example 2, except that the catalyst was changed to the CM-type Ziegler-Natta catalyst (the support was a magnesium compound and free of silicon, also known as the CMU catalyst) of Beijing Auda Division of Sinopec Catalyst Co., Ltd., the polymer number was UHMWPE17. The specific conditions of the ethylene slurry polymerization reaction were shown in Table 1. The performance result of the thereby obtained ultra-high molecular weight polyethylene prepared by the ethylene slurry polymerization was shown in Table 2. The summary of the results of the metal element content, the ash content and the crystallinity of the ultra-high molecular weight polyethylene prepared by the ethylene slurry polymerization was shown in Table 3.

Table 1: Summary of the reaction conditions of the preparation of the ultra-high molecular weight ethylene homopolymer by the ethylene slurry homopolymerization

| No. | Main catalyst | Cocatalyst | Molar ratio of cocatalyst to main catalyst's active metal | Polymerization solvent | Polymerization pressure (MPa) | Polymerization temperature (°C) | Polymerization time (h) | Polymerization activity ($10^4 \times$gPE/gCat) | Polymer number |
|---|---|---|---|---|---|---|---|---|---|
| 1 | CAT-1 | triethyl aluminum | 40 | n-pentane | 1.9 | 70 | 6 | 4.7 | UHMWPE 1 |
| 2 | CAT-1 | triethyl aluminum | 100 | n-pentane | 1.9 | 70 | 6 | 4.9 | UHMWPE 2 |
| 3 | CAT-1 | methyl aluminoxane | 40 | n-pentane | 1.9 | 75 | 6 | 5.3 | UHMWPE 3 |
| 4 | CAT-1 | triethyl aluminum | 40 | Mixed alkane solvent composed of n-pentane and isopentane according to the molar proportion of 1:1 and having a saturated vapor pressure at 20°C of 66.6 KPa | 1.0 | 83 | 8 | 5.5 | UHMWPE 4 |
| 5 | CAT-1 | monochlorodiethyl aluminum | 70 | cyclopentane | 1.9 | 80 | 5 | 7.1 | UHMWPE 5 |
| 6 | CAT-1 | triethyl aluminum | 40 | Mixed alkane solvent composed of n-pentane, isopentane and cyclopentane according to the molar proportion of 1:1:1 and having a saturated vapor pressure at 20°C of 55.93 KPa | 0.5 | 70 | 10 | 4.5 | UHMWPE 6 |
| 7 | CAT-2 | triethyl aluminum | 40 | isopentane | 2.8 | 60 | 4 | 5.2 | UHMWPE 7 |

(continued)

| N o. | Main c atalyst | Cocatalyst | Molar ratio of cocatalyst to main ca talyst's activ e metal | Polymerization solvent | Polymerization pressure (MPa) | Polymerization t emperature (°C) | Polymerizati on time (h) | Polymerization activity ($10^4\times$gPE/ gCat ) | Polymer n umber |
|---|---|---|---|---|---|---|---|---|---|
| 8 | CAT-2 | dichloroethylalumi num | 50 | Mixed alkane solvent composed of n-pe ntane and isopentane according to the molar proportion of 1:1 and having a s aturated vapor pressure at 20°C of 66.6 KPa | 2.6 | 65 | 4 | 4.3 | UHMWPE 8 |
| 9 | CAT-3 | tri-iso-butyl alumi num | 60 | neopentane | 2.2 | 85 | 3 | 6.0 | UHMWPE 9 |
| 10 | CAT-1 | triethyl aluminum | 40 | Mixed alkane solvent composed of n-pe ntane and cyclopentane according to th e molar proportion of 5:1 and having a saturated vapor pressure at 20°C of 52.85 KPa | 1.9 | 70 | 6 | 5.4 | UHMWPE 10 |
| 11 | CAT-1 | triethyl aluminum | 40 | Mixed alkane solvent composed of neo pentane and isopentane according to th | 1.9 | 70 | 6 | 5.1 | UHMWPE 11 |
| | | | | e molar proportion of 0.5:1 and having a saturated vapor pressure at 20°C of 100.01 KPa | | | | | |
| 12 | CAT-1 | triethyl aluminum | 40 | Mixed alkane solvent composed of isop entane and cyclopentane according to the molar proportion of 8:1 and having a saturated vapor pressure at 20°C of 72.02 KPa | 1.9 | 70 | 6 | 5.2 | UHMWPE 12 |

(continued)

| No. | Main catalyst | Cocatalyst | Molar ratio of cocatalyst to main catalyst's active metal | Polymerization solvent | Polymerization pressure (MPa) | Polymerization temperature (°C) | Polymerization time (h) | Polymerization activity ($10^4 \times$gPE/gCat) | Polymer number |
|---|---|---|---|---|---|---|---|---|---|
| 13 | CAT-2 | triethyl aluminum | 40 | Mixed alkane solvent composed of neo pentane and n-pentane according to the molar proportion of 0.4:1 and having a saturated vapor pressure at 20°C of 82.25 KPa | 2.8 | 60 | 4 | 5.5 | UHMWPE 13 |
| 14 | CAT-3 | tri-iso-butyl aluminum | 60 | Mixed alkane solvent composed of neo pentane, isopentane and n-pentane according to the molar proportion of 0.5:0.5:1 and having a saturated vapor pressure at 20°C of 84.08 KPa | 2.2 | 85 | 3 | 6.4 | UHMWPE 14 |
| 15 | CAT-1 | triethyl aluminum | 40 | n-hexane | 1.9 | 70 | 6 | 4.2 | UHMWPE 15 |
| 16 | CAT-1 | triethyl aluminum | 40 | n-heptane | 1.9 | 70 | 6 | 4.5 | UHMWPE 16 |
| 17 | CM | triethyl aluminum | 40 | n-pentane | 1.9 | 70 | 6 | 3.7 | UHMWPE 17 |

Table 2: The summary of the performance results of the ultra-high molecular weight ethylene homopolymer prepared by the ethylene slurry polymerization

| No. | Polymer number | Solvent content in wet material (wt%) | Viscosity-average molecular weight ($10^4$ g/mol) | Bulk density (g/cm$^3$) | Polymer true density (g/cm$^3$) | Tensile yield strength (MPa) | Tensile fracture strength (MPa) | Elongation at break (%) | Impact strength (KJ/m$^2$) | Young's modulus (MPa) |
|---|---|---|---|---|---|---|---|---|---|---|
| 1 | UHMWPE1 | 17.4 | 670 | 0.45 | 0.922 | 25.3 | 39.5 | 469.9 | 82.5 | 412.7 |
| 2 | UHMWPE2 | 17.0 | 620 | 0.43 | 0.923 | 24.5 | 38.2 | 453.3 | 81.3 | 416.7 |
| 3 | UHMWPE3 | 15.5 | 945 | 0.44 | 0.918 | 26.3 | 44.7 | 380.5 | 85.4 | 405.5 |
| 4 | UHMWPE4 | 18.8 | 265 | 0.42 | 0.937 | 22.6 | 34.7 | 407.1 | 76.4 | 421.0 |
| 5 | UHMWPE5 | 16.2 | 535 | 0.43 | 0.933 | 24.2 | 36.7 | 427.5 | 74.8 | 430.3 |
| 6 | UHMWPE6 | 12.7 | 735 | 0.42 | 0.920 | 26.0 | 42.4 | 375.4 | 91.3 | 369.2 |
| 7 | UHMWPE7 | 15.9 | 830 | 0.40 | 0.921 | 26.4 | 43.7 | 438.3 | 88.5 | 400.2 |
| 8 | UHMWPE8 | 17.4 | 515 | 0.45 | 0.932 | 24.0 | 36.4 | 433.8 | 83.4 | 405.4 |
| 9 | UHMWPE9 | 17.5 | 170 | 0.40 | 0.940 | 22.8 | 33.4 | 440.5 | 104.3 | 372.3 |
| 10 | UHMWPE10 | 17.3 | 705 | 0.45 | 0.920 | 25.7 | 41.4 | 480.3 | 85.2 | 418.3 |
| 11 | UHMWPE11 | 17.0 | 685 | 0.45 | 0.920 | 25.4 | 40.1 | 475.5 | 84.3 | 417.5 |
| 12 | UHMWPE12 | 17.2 | 690 | 0.45 | 0.920 | 25.5 | 40.6 | 478.2 | 83.7 | 415.6 |
| 13 | UHMWPE13 | 15.5 | 850 | 0.42 | 0.920 | 27.0 | 44.4 | 449.3 | 91.0 | 405.6 |
| 14 | UHMWPE14 | 16.9 | 195 | 0.40 | 0.938 | 23.0 | 33.8 | 450.2 | 107.3 | 380.5 |
| 15 | UHMWPE15 | 25.7 | 470 | 0.39 | 0.935 | 20.4 | 30.5 | 325.4 | 64.3 | 276.3 |
| 16 | UHMWPE16 | 29.4 | 425 | 0.38 | 0.936 | 21.5 | 31.3 | 314.3 | 67.5 | 283.5 |
| 17 | UHMWPE17 | 18.5 | 385 | 0.39 | 0.938 | 21.8 | 32.3 | 335.4 | 74.3 | 322.7 |

Table 3. The summary of the results of metal element content, ash content, melting point and crystallinity of the ultra-high molecular weight ethylene homopolymer prepared by the ethylene slurry polymerization

| No. | Polymer number | Titanium content (ppm) | Calcium content (ppm) | Magnesium content (ppm) | Aluminum content (ppm) | Chlorine content (ppm) | Silicon content (ppm) | Ash content (ppm) | Melting point (°C) | Crystallinity (%) |
|---|---|---|---|---|---|---|---|---|---|---|
| 1 | UHMWPE1 | 0.50 | 1.61 | 1.47 | 12.0 | 12.4 | 2.3 | 75 | 145.4 | 65.1 |
| 2 | UHMWPE2 | 0.49 | 1.59 | 1.45 | 16.7 | 16.3 | 2.1 | 70 | 145.0 | 63.0 |
| 3 | UHMWPE3 | 0.45 | 1.52 | 1.34 | 13.2 | 14.5 | 1.9 | 64 | 148.5 | 64.4 |
| 4 | UHMWPE4 | 0.44 | 1.50 | 1.31 | 13.0 | 33.3 | 1.8 | 61 | 142.3 | 67.5 |
| 5 | UHMWPE5 | 0.38 | 0.77 | 1.07 | 14.8 | 19.4 | 1.5 | 50 | 144.8 | 47.5 |
| 6 | UHMWPE6 | 0.52 | 1.65 | 1.53 | 12.4 | 15.5 | 2.4 | 80 | 146.2 | 46.3 |
| 7 | UHMWPE7 | 0.42 | 1.48 | 1.28 | 13.7 | 25.4 | 1.7 | 60 | 147.2 | 51.4 |
| 8 | UHMWPE8 | 0.62 | 1.25 | 1.64 | 11.5 | 22.7 | 2.5 | 77 | 145.3 | 62.5 |
| 9 | UHMWPE9 | 0.85 | 1.82 | 1.22 | 14.3 | 23.5 | 1.6 | 68 | 143.8 | 69.3 |
| 10 | UHMWPE10 | 0.48 | 1.55 | 1.42 | 11.5 | 12.0 | 2.2 | 72 | 145.5 | 64.7 |
| 11 | UHMWPE11 | 0.46 | 1.53 | 1.40 | 11.2 | 11.4 | 2.0 | 68 | 145.7 | 64.5 |
| 12 | UHMWPE12 | 0.49 | 1.58 | 1.45 | 11.7 | 11.7 | 2.1 | 70 | 145.6 | 65.0 |
| 13 | UHMWPE13 | 0.40 | 1.44 | 1.24 | 13.5 | 25.8 | 1.6 | 58 | 147.5 | 51.0 |
| 14 | UHMWPE14 | 0.83 | 1.79 | 1.20 | 14.1 | 24.0 | 1.5 | 62 | 144.3 | 68.4 |
| 15 | UHMWPE15 | 1.52 | 11.74 | 11.54 | 50.5 | 75.4 | 3.8 | 252 | 140.2 | 72.3 |
| 16 | UHMWPE16 | 1.47 | 16.62 | 13.27 | 38.3 | 68.3 | 3.0 | 217 | 139.5 | 71.4 |
| 17 | UHMWPE17 | 1.32 | 2.54 | 5.54 | 26.1 | 43.7 | 0.5 | 178 | 141.6 | 68.3 |

It can be seen from the comparison of the effects obtained with Nos. 1 and 2 in Table 1 that the polymerization activities, which were obtained under the conditions that the molar ratios of the cocatalyst to the active metal of the catalyst required by the polymerization process were 40 and 100 respectively, were comparable, which hence indicated that when the catalyst provided by the present invention was used in the olefin polymerization, the required amount of the cocatalyst was relatively low, and therefore the present invention could reduce the used amount of the cocatalyst.

It can be seen from the comparison of Nos. 1 and 2 of Table 2 that under the same other polymerization conditions, increasing the used amount of the cocatalyst would reduce the viscosity-average molecular weight of the polymer. Therefore, using the process for preparing the ultra-high molecular weight polyethylene provided by the present invention could adjust the viscosity-average molecular weight and the performance of the ultra-high molecular weight polyethylene by changing the cocatalyst, and the proportion and the used amount of the cocatalyst. It can be seen from the comparison of the results obtained in Tables 1 and 2 that increasing the polymerization pressure, increasing the polymerization temperature, and extending the polymerization time could achieve high ethylene slurry polymerization activity, thereby reducing the metal element content in the obtained ultra-high molecular weight polyethylene.

It can be seen from the comparison of the effects obtained from Tables 1 and 2 that with the present invention, the performance of the thereby obtained ultra-high molecular weight polyethylene could be adjusted by selecting catalysts having different properties under the appropriate ethylene slurry polymerization conditions, such as the polymerization pressure, the polymerization temperature, the polymerization solvent, the polymerization time, the cocatalyst and the cocatalyst molar ratio.

From the comparison of the results obtained from No. 1 and No. 15 , No. 16 , No. 17 in Tables 1-3, it can be seen that using the process for preparing the ultra-high molecular weight polyethylene of the present invention, it was very easy to dry the ethylene slurry polymer powder obtained after the polymerization was completed. After the polymerization reaction was completed, the product was directly filtered, the residual solvent content in the wet polymer was less than 20wt%, which was lower than the residual solvent content of higher than 25wt% in the wet polymer obtained by using n-hexane or n-heptane as the polymerization solvent, which was very conducive to shortening the drying time of the polyethylene material and saving the cost of the polyethylene post-treatment.

Moreover, it can be seen from Tables 2 and 3 that under the conditions of preparing the ultra-high molecular weight polyethylene by the ethylene slurry polymerization of the present invention, compared to using n-hexane or n-heptane as the solvent, the ultra-high molecular weight polyethylene prepared by the polymerization according to the present invention had high bulk density, high viscosity-average molecular weight, low element contents (titanium , calcium , magnesium , aluminum , silicon , chlorine and the like) and low ash content, and the tensile yield strength, the tensile fracture strength, the elongation at break, the impact strength and the Young's modulus of the thereby obtained ultra-high molecular weight ethylene homopolymer were all relatively high.

In addition, it can be seen based on the effects obtained from No. 10 to No. 14 in Tables 1-3 that by using the process for preparing the ultra-high molecular weight polyethylene of the present invention and using the mixed alkane solvent, the obtained polyethylene had higher bulk density, higher viscosity-average molecular weight, lower element contents ( titanium , calcium , magnesium , aluminum , silicon , chlorine and the like) and lower ash content, and the tensile yield strength, the tensile fracture strength, the elongation at break, the impact strength and the Young's modulus of the thereby obtained ultra-high molecular weight ethylene homopolymer were all higher.

## Example 3. Preparation of ultra-high molecular weight ethylene copolymer

A 5L polymerization autoclave was purged with a high-purity nitrogen at 100°C for 2 hour and then vented to remove the pressure therein. 2.5L of the solvent was added. Then the main catalyst (the supported non-metallocene catalysts CAT-1 to CAT-3) prepared in Example 1 of the present invention, the cocatalyst, and the comonomer were added under stirring conditions (300rpm). The autoclave was heated up to a preset temperature, ethylene was continously introduced and the constant temperature and pressure were maintained to reach the preset polymerization reaction time. The introduction of ethylene was stopped and the autoclave was vented to remove the pressure therein. The autoclave was cooled down to room temperature. The polymer together with the solvent was discharged from the autoclave. The supernatant solvent was removed, and the resulting material was dried and weighed to obtain the final mass. The specific conditions of the ethylene slurry copolymerization reaction were shown in Table 4. The results of the basic performance and the tensile property of the thereby obtained ultra-high molecular weight ethylene copolymer prepared by the ethylene slurry polymerization were shown in Table 5. The summary of the results of the metal element content, the ash content, the melting point and the crystallinity of the ultra-high molecular weight ethylene copolymer prepared by the ethylene slurry polymerization was shown in Table 6.

## Comparative Example 3-1

This comparative example was substantially identical to Example 3, except that the polymerization solvent was

changed to n-hexane as the solvent, the polymer number was UHMWPE35. The specific conditions of the ethylene slurry polymerization reaction were shown in Table 4. The results of the basic performance and the tensile property of the thereby obtained ultra-high molecular weight ethylene copolymer prepared by the ethylene slurry polymerization were shown in Table 5. The summary of the results of the metal element content, the ash content, the melting point and the crystallinity of the ultra-high molecular weight ethylene copolymer prepared by the ethylene slurry polymerization was shown in Table 6.

**Comparative Example 3-2**

This comparative example was substantially identical to Example 3, except that the polymerization solvent was changed to n-heptane as the solvent, the polymer number was UHMWPE36. The specific conditions of the ethylene slurry polymerization reaction were shown in Table 4. The results of the basic performance and the tensile property of the thereby obtained ultra-high molecular weight ethylene copolymer prepared by the ethylene slurry polymerization were shown in Table 5. The summary of the results of the metal element content, the ash content, the melting point and the crystallinity of the ultra-high molecular weight ethylene copolymer prepared by the ethylene slurry polymerization was shown in Table 6.

**Comparative Example 3-3**

This comparative example was substantially identical to Example 3, except that the catalyst was changed to a dichlorozirconocene supported on silica gel-type metallocene catalyst, the used cocatalyst was methyl aluminoxane, and the polymerization was performed for 6 hours. It was found that the reaction slurry could not be obtained, i.e., the reaction could not proceed.

**Comparative Example 3-4**

This comparative example was substantially identical to Example 3, except that the catalyst was changed to the CM-type Ziegler-Natta catalyst (the support was a magnesium compound and free of silicon, also known as the CMU catalyst) of Beijing Auda Division of Sinopec Catalyst Co., Ltd., the polymer number was UHMWPE37. The specific conditions of the ethylene slurry polymerization reaction were shown in Table 4. The results of the basic performance and the tensile property of the thereby obtained ultra-high molecular weight ethylene copolymer prepared by the ethylene slurry polymerization were shown in Table 5. The summary of the results of the metal element content, the ash content, the melting point and the crystallinity of the ultra-high molecular weight ethylene copolymer prepared by the ethylene slurry polymerization was shown in Table 6.

Table 4: Summary of the reaction conditions of the preparation of the ultra-high molecular weight ethylene copolymer by the ethylene slurry copolymerization

| No | Main catalyst | Cocatalyst | Molar ratio of cocatalyst to main catalyst's active metal | Polymerization solvent | Comonomer | Molar ratio of comonomer to main catalyst | Comonomer proportion (mol%) | Polymerization pressure (MPa) | Polymerization temperature (°C) | Polymerization time (h) | Polymerization activity ($10^4$ geopolymer/ g main catalyst) | Polymer number |
|---|---|---|---|---|---|---|---|---|---|---|---|---|
| 1 | CAT -1 | triethyl aluminum | 40 | n-pentane | 1-hexene | 50 | 0.37 | 1.9 | 70 | 6 | 5.3 | UHMWPE 21 |
| 2 | CAT -1 | triethyl aluminum | 100 | n-pentane | 1-hexene | 50 | 0.37 | 1.9 | 70 | 6 | 5.5 | UHMWPE 22 |
| 3 | CAT -1 | methyl aluminoxan e | 40 | n-pentane | 1-hexene | 100 | 0.75 | 1.9 | 75 | 6 | 5.8 | UHMWPE 23 |
| 4 | CAT -1 | triethyl aluminum | 40 | Mixed alkane solvent composed of n-pentane and isopentane according to the molar proportion of 1:1 and having a saturated vapor pressure at 20°C of 66.6 KPa | 1-butene | 20 | 0.32 | 1.0 | 83 | 8 | 6.2 | UHMWPE 24 |
| 5 | CAT -1 | monochlor odiethylalu minum | 70 | cyclopentane | 1-hexene | 200 | 1.50 | 1.9 | 80 | 5 | 77 | UHMWPE 25 |

(continued)

| No | Main catal yst | Cocatalyst | Molar ratio of cocatalyst to main catalyst's active metal | Polymerization solvent | Comonom er | Molar ratio of comon-om er to main cata-lyst | Comonom er propor-tion (mol%) | Polymerizati on pressure (MPa) | Polymerizati on temperature (°C) | Polymerizati on time (h) | Polymerizati on activity ($10^4$ geopoly-mer/ g main catalyst) | Polymer number |
|---|---|---|---|---|---|---|---|---|---|---|---|---|
| 6 | CAT -1 | triethyl aluminum | 40 | Mixed alkane solvent composed of n-pentane, isopentane and cyclopentane according to the molar proportion of 1: 1: 1 and having a saturated vapor pressure at 20°C of 55.93 KPa | Propylene | 80 | 2.25 | 0.5 | 70 | 10 | 5.0 | UHMWPE 26 |
| 7 | CAT -2 | triethyl aluminum | 40 | isopentane | 1-hexene | 150 | 0.68 | 2.8 | 60 | 4 | 5.8 | UHMWPE 27 |
| 8 | CAT -2 | dichloroeth ylaluminu m | 50 | Mixed alkane solvent composed of n-pentane and isopentane according to the molar proportion of 1:1 and | 1-octene | 200 | 1.10 | 2.6 | 65 | 4 | 4.5 | UHMWPE 28 |
| | | | | having a saturated vapor pressure at 20°C of 66.6 KPa | | | | | | | | |
| 9 | CAT -3 | tri-iso-buty l aluminum | 60 | neopentane | 1 -pentene | 300 | 1.94 | 2.2 | 85 | 3 | 6.3 | UHMWPE 29 |

(continued)

| No | Main catalyst | Cocatalyst | Molar ratio of cocatalyst to main catalyst's active metal | Polymerization solvent | Comonomer | Molar ratio of comonomer to main catalyst | Comonomer proportion (mol%) | Polymerization pressure (MPa) | Polymerization temperature (°C) | Polymerization time (h) | Polymerization activity ($10^4$ geopolymer/ g main catalyst) | Polymer number |
|---|---|---|---|---|---|---|---|---|---|---|---|---|
| 10 | CAT -1 | triethyl aluminum | 40 | Mixed alkane solvent composed of n-pentane and cyclopentane according to the molar proportion of 5:1 and having a saturated vapor pressure at 20°C of 52.85 KPa | 1-hexene | 50 | 0.37 | 1.9 | 70 | 6 | 5.7 | UHMWPE 30 |
| 11 | CAT -1 | triethyl aluminum | 40 | Mixed alkane solvent composed of neopentane and isopentane according to the molar proportion of 0.5:1 and having a saturated vapor pressure at 20°C of 100.01 KPa | 1-hexene | 50 | 0.37 | 1.9 | 70 | 6 | 5.5 | UHMWPE 31 |

(continued)

| No | Main catalyst | Cocatalyst | Molar ratio of cocatalyst to main catalyst's active metal | Polymerization solvent | Comonomer | Molar ratio of comonomer to main catalyst | Comonomer proportion (mol%) | Polymerization pressure (MPa) | Polymerization temperature (°C) | Polymerization time (h) | Polymerization activity ($10^4$ geopolymer/ g main catalyst) | Polymer number |
|---|---|---|---|---|---|---|---|---|---|---|---|---|
| 12 | CAT -1 | triethyl aluminum | 40 | Mixed alkane solvent composed of isopentane and cyclopentane according to the molar proportion of 8:1 and having a saturated vapor pressure at 20°C of 72.02 KPa | 1-hexene | 50 | 0.37 | 1.9 | 70 | 6 | 5.6 | UHMWPE 32 |
| 13 | CAT -2 | triethyl aluminum | 40 | Mixed alkane solvent composed of neopentane and n-pentane according to the molar proportion of 0.4:1 and having a saturated vapor pressure at 20°C of 82.25 KPa | 1-hexene | 150 | 0.68 | 2.8 | 60 | 4 | 6.5 | UHMWPE 33 |
| 14 | CAT -3 | tri-iso-buty l aluminum | 60 | Mixed alkane solvent composed of neopentane, isopentane | 1 -pentene | 300 | 1.07 | 2.2 | 85 | 3 | 6.2 | UHMWPE 34 |

(continued)

| No | Main catalyst | Cocatalyst | Molar ratio of cocatalyst to main catalyst's active metal | Polymerization solvent | Comonomer | Molar ratio of comonomer to main catalyst | Comonomer proportion (mol%) | Polymerization pressure (MPa) | Polymerization temperature (°C) | Polymerization time (h) | Polymerization activity ($10^4$ geopolymer/ g main catalyst) | Polymer number |
|---|---|---|---|---|---|---|---|---|---|---|---|---|
| | | | | and n-pentane according to the molar proportion of 0.5:0.5:1 and having a saturated vapor pressure at 20°C of 84.08 KPa | | | | | | | | |
| 15 | CAT -1 | triethyl aluminum | 40 | n-hexane | 1-hexene | 50 | 0.37 | 1.9 | 70 | 6 | 3.9 | UHMWPE 35 |
| 16 | CAT -1 | triethyl aluminum | 40 | n-heptane | 1-hexene | 50 | 0.37 | 1.9 | 70 | 6 | 3.5 | UHMWPE 36 |
| 17 | CM | triethyl aluminum | 40 | n-pentane | 1-hexene | 50 | 0.37 | 1.9 | 70 | 6 | 3.8 | UHMWPE 37 |

Table 5: The summary of the results of the basic performance and the tensile property of the ultra-high molecular weight ethylene copolymer prepared by the ethylene slurry polymerization

| No. | Polymer number | Solvent content in wet material (wt%) | Viscosity-average molecular weight ($10^4$ g/mol) | Comonomer molar insertion rate (%) | Polymer bulk density (g/cm$^3$) | Polymer true density (g/cm$^3$) | Tensile elasticity module (MPa) |
|---|---|---|---|---|---|---|---|
| 1 | UHMWPE21 | 18.7 | 640 | 0.15 | 0.46 | 0.922 | 323 |
| 2 | UHMWPE22 | 18.3 | 600 | 0.14 | 0.45 | 0.923 | 310 |
| 3 | UHMWPE23 | 16.8 | 770 | 0.24 | 0.47 | 0.909 | 344 |
| 4 | UHMWPE24 | 17.2 | 230 | 1.54 | 0.44 | 0.906 | 304 |
| 5 | UHMWPE25 | 17.1 | 510 | 1.47 | 0.42 | 0.908 | 335 |
| 6 | UHMWPE26 | 14.7 | 680 | 0.52 | 0.41 | 0.910 | 372 |
| 7 | UHMWPE27 | 16.3 | 762 | 0.47 | 0.41 | 0.913 | 364 |
| 8 | UHMWPE28 | 19.3 | 455 | 0.35 | 0.43 | 0.935 | 285 |
| 9 | UHMWPE29 | 18.4 | 155 | 1.77 | 0.44 | 0.938 | 325 |
| 10 | UHMWPE30 | 18.2 | 675 | 0.19 | 0.47 | 0.920 | 347 |
| 11 | UHMWPE31 | 17.5 | 650 | 0.17 | 0.47 | 0.921 | 338 |
| 12 | UHMWPE32 | 18.0 | 645 | 0.17 | 0.47 | 0.921 | 330 |
| 13 | UHMWPE33 | 16.1 | 785 | 0.51 | 0.47 | 0.912 | 374 |
| 14 | UHMWPE34 | 18.2 | 170 | 1.92 | 0.47 | 0.937 | 332 |
| 15 | UHMWPE35 | 25.4 | 380 | 0.05 | 0.39 | 0.932 | 227 |
| 16 | UHMWPE36 | 30.3 | 365 | 0.03 | 0.38 | 0.934 | 205 |
| 17 | UHMWPE37 | 19.6 | 330 | 0.06 | 0.40 | 0.937 | 258 |

Table 6. The summary of the results of metal element content, ash content, melting point and crystallinity of the ultra-high molecular weight ethylene copolymer prepared by the ethylene slurry polymerization

| No. | Polymer number | Titanium content (ppm) | Calcium content (ppm) | Magnesium content (ppm) | Aluminum content (ppm) | Chlorine content (ppm) | Silicon content (ppm) | Ash content (ppm) | Melting point (°C) | Crystallinity (%) |
|---|---|---|---|---|---|---|---|---|---|---|
| 1 | UHMWPE21 | 0.50 | 1.61 | 1.47 | 12.0 | 11.5 | 2.0 | 71 | 146.3 | 64.5 |
| 2 | UHMWPE22 | 0.49 | 1.59 | 1.45 | 12.7 | 15.2 | 1.8 | 70 | 145.6 | 63.0 |
| 3 | UHMWPE23 | 0.45 | 1.52 | 1.34 | 13.2 | 13.6 | 1.5 | 68 | 148.8 | 64.4 |
| 4 | UHMWPE24 | 0.44 | 1.50 | 1.31 | 13.0 | 30.4 | 1.5 | 65 | 145.4 | 61.5 |
| 5 | UHMWPE25 | 0.38 | 0.77 | 1.07 | 14.8 | 17.4 | 1.2 | 62 | 145.2 | 47.5 |
| 6 | UHMWPE26 | 0.52 | 1.65 | 1.53 | 12.4 | 12.4 | 2.1 | 75 | 146.6 | 46.3 |
| 7 | UHMWPE27 | 0.42 | 1.48 | 1.28 | 13.7 | 20.3 | 1.5 | 62 | 147.3 | 62.5 |
| 8 | UHMWPE28 | 0.35 | 0.62 | 1.01 | 15.2 | 22.2 | 1.3 | 64 | 144.4 | 57.4 |
| 9 | UHMWPE29 | 0.30 | 0.55 | 0.94 | 13.4 | 29.0 | 1.6 | 57 | 143.2 | 74.2 |
| 10 | UHMWPE30 | 0.46 | 1.50 | 1.40 | 11.2 | 10.8 | 1.8 | 65 | 147.2 | 63.1 |
| 11 | UHMWPE31 | 0.48 | 1.57 | 1.45 | 11.6 | 11.0 | 1.9 | 67 | 146.7 | 64.0 |
| 12 | UHMWPE32 | 0.48 | 1.58 | 1.44 | 11.7 | 11.2 | 1.9 | 68 | 146.9 | 64.2 |
| 13 | UHMWPE33 | 0.40 | 1.42 | 1.23 | 13.0 | 20.8 | 1.4 | 60 | 147.7 | 62.2 |
| 14 | UHMWPE34 | 0.29 | 0.52 | 0.90 | 13.2 | 29.7 | 1.4 | 55 | 143.9 | 74.0 |
| 15 | UHMWPE35 | 3.15 | 15.54 | 57.4 | 45.5 | 75.4 | 7.4 | 237 | 142.2 | 71.4 |
| 16 | UHMWPE36 | 3.64 | 17.27 | 42.8 | 47.3 | 74.7 | 8.2 | 220 | 142.5 | 72.3 |
| 17 | UHMWPE37 | 1.45 | 2.28 | 8.3 | 28.0 | 41.5 | 0.5 | 164 | 139.2 | 67.5 |

It can be seen from the comparison of the effects obtained with Nos. 1 and 2 in Table 4 that the polymerization activities, which were obtained under the conditions that the molar ratios of the cocatalyst to the active metal of the catalyst required by the polymerization process were 40 and 100 respectively, were comparable, which hence indicated that when the catalyst provided by the present invention was used in the olefin polymerization, the required amount of the cocatalyst was relatively low, and therefore the present invention could reduce the used amount of the cocatalyst.

It can be seen from the comparison of Nos. 1 and 2 of Table 5 that under the same other polymerization conditions, increasing the used amount of the cocatalyst would reduce the viscosity-average molecular weight of the polymer. Therefore, using the process for preparing the ultra-high viscosity-average molecular weight ethylene copolymer provided by the present invention could adjust the viscosity-average molecular weight and the performance of the ultra-high viscosity-average molecular weight polyethylene by changing the cocatalyst, and the proportion and the used amount of the cocatalyst.

It can be seen from the comparison of the results obtained in Tables 4 and 5 that increasing the polymerization pressure, increasing the polymerization temperature, and extending the polymerization time could achieve high ethylene slurry polymerization activity, thereby reducing the metal element content in the obtained ultra-high viscosity-average molecular weight polyethylene.

It can be seen from the comparison of the effects obtained from Tables 4 and 5 that with the present invention, the performance of the thereby obtained ultra-high viscosity-average molecular weight polyethylene could be adjusted by selecting catalysts having different properties under the appropriate ethylene slurry polymerization conditions, such as the polymerization pressure, the polymerization temperature, the polymerization solvent, the polymerization time, the cocatalyst and the cocatalyst molar ratio.

From the comparison of the results obtained from No. 1 and No. 15 , No. 16 and No. 17 in Tables 4-6, it can be seen that using the process for preparing the ultra-high viscosity-average molecular weight ethylene copolymer of the present invention, it was very easy to dry the ethylene slurry polymer powder obtained after the polymerization was completed. After the polymerization reaction was completed, the product was directly filtered, the residual solvent content in the wet polymer was less than 20wt%, which was lower than the residual solvent content of higher than 25wt% in the wet polymer obtained by using n-hexane or n-heptane as the polymerization solvent, which was very conducive to shortening the drying time of the polyethylene material and saving the cost of the polyethylene post-treatment.

Moreover, it can be seen from Table 5 that under the conditions of preparing the ultra-high molecular weight polyethylene by the ethylene slurry polymerization of the present invention, compared to using n-hexane and n-heptane as the solvent, the ultra-high molecular weight polyethylene prepared by the polymerization according to the present invention had high bulk density, high viscosity-average molecular weight, low element contents (titanium , calcium , magnesium , aluminum , silicon , chlorine and the like) and low ash content, and the tensile elasticity modulus of the thereby obtained ultra-high molecular weight ethylene copolymer was relatively high.

In addition, it can be seen based on the effects obtained from No. 10 to No. 14 in Tables 4-6 that by using the process for preparing the ultra-high viscosity-average molecular weight ethylene copolymer of the present invention and using the mixed alkane solvent, the obtained polyethylene had higher bulk density, higher viscosity-average molecular weight, lower element contents ( titanium , calcium , magnesium , aluminum , silicon , chlorine and the like) and lower ash content, and the tensile elasticity modulus of the thereby obtained ultra-high molecular weight ethylene copolymer was higher.

Although the embodiments of the present invention have been described in detail with reference to the examples, it should be noted that the scope of the present invention is not limited by the embodiments, but is defined by the appended claims. Those skilled in the art can appropriately modify the embodiments without departing from the technical spirit and scope of the present invention, and it is obvious that the modified embodiments are also included in the scope of the present invention.

## Claims

1. A process for preparing an ultra-high molecular weight polyethylene, wherein said ultra-high molecular weight polyethylene has a viscosity-average molecular weight of 150-1000 $\times 10^4$ g/mol, preferably 200-850 $\times 10^4$ g/mol, more preferably 300-700 $\times 10^4$ g/mol, which is **characterized in that** raw materials containing ethylene and optionally at least one como-nomer are subjected to the slurry polymerization in the absence of hydrogen gas, with a supported non-metallocene catalyst as the main catalyst, with one or more of aluminoxane, alkyl aluminum, and haloalkyl aluminum as the cocatalyst, with an alkane solvent having a boiling point of 5-55°C or a mixed alkane solvent having a saturated vapor pressure at 20°C of 20-150 KPa as the polymerization solvent.

2. The process for preparing the ultra-high molecular weight polyethylene according to claim 1, which is **characterized in that** the tank slurry polymerization is performed under the conditions that the polymerization temperature is

50-100°C, preferably 60-90°C, and the polymerization pressure is 0.4-4.0 MPa, preferably 1.0-3.0 MPa,, and the polymerization activity is higher than 2 $\times 10^4$ g polyethylene/g main catalyst, preferably higher than 3 $\times 10^4$ g polyethylene/g main catalyst, wherein in case that the comonomer is present, relative to the total mole number of ethylene and the comonomer, the proportion of the comonomer is 0.01-3 mol%, preferably 0.01-2 mol%, and ethylene and the comonomer are charged together into the polymerization tank.

3. The process for preparing the ultra-high molecular weight polyethylene according to claim 1 or 2, which is **characterized in that** the polymerization solvent is one of n-pentane, isopentane, neopentane, and cyclopentane; or a mixed alkane solvent of two or more of n-pentane, isopentane, neopentane and cyclopentane, preferably one of a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-pentane-isopentane-cyclopentane, and a combination of neopentane-isopentane-n-pentane.

4. The process for preparing the ultra-high molecular weight polyethylene according to any of claims 1-3, which is **characterized in that** said comonomer is selected from $C_3$-$C_{10}$ alpha-olefins, and can be selected from propene, 1-butene, 1-pentene, 1-hexene, and 1-octene, and preferably selected from 1-butene and 1-hexene.

5. The process for preparing the ultra-high molecular weight polyethylene according to any of claims 1-4, which is characterized in thatthe aluminoxane as said cocatalyst is selected from methyl aluminoxane, ethyl aluminoxane, iso-butyl aluminoxane, n-butyl aluminoxane, and mixture(s) thereof, preferably selected from methyl aluminoxane, iso-butyl aluminoxane, and mixture(s) thereof, the alkyl aluminum as said cocatalyst is selected fromtrimethyl aluminum, triethyl aluminum, tri-propyl aluminum, tri-iso-butyl aluminum, tri-n-butyl aluminum, tri-iso-pentyl aluminum, tri-n-pentyl aluminum, trihexyl aluminum, tri-iso-hexyl aluminum, diethyl methyl aluminum, dimethyl ethyl aluminum, and mixture(s) thereof, preferably selected from trimethyl aluminum, triethyl aluminum, tri-propyl aluminum, tri-iso-butyl aluminum, and mixture(s) thereof, most preferably selected from triethyl aluminum, tri-iso-butyl aluminum, and mixture(s) thereof, the haloalkyl aluminum as said cocatalyst is selected from monochlorodimethylaluminum, dichloromethylaluminum, monochlorodiethylaluminum, dichloroethylaluminum, monochlorodipropylaluminum, dichloropropylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, monochlorodiisohexylaluminum, dichloro-isohexylaluminum, and mixture(s) thereof, preferably selected from monochlorodiethylaluminum, dichloroethylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, and mixture(s) thereof, further preferably selected from monochlorodiethylaluminum, dichloroethylaluminum, monochlorodi-n-hexylaluminum, and mixture(s) thereof, and most preferably selected from monochlorodiethylaluminum, dichloroethylaluminum, and mixture(s) thereof.

6. The process for preparing the ultra-high molecular weight polyethylene according to any of claims 1-5, which is **characterized in that** said supported non-metallocene catalyst contains a non-metallocene complex and a Group IVB metal compound.

7. The process for preparing the ultra-high molecular weight polyethylene according to claim 6, which is **characterized in that** said non-metallocene complex is selected from compounds having the following chemical structural formulae and mixtures thereof:

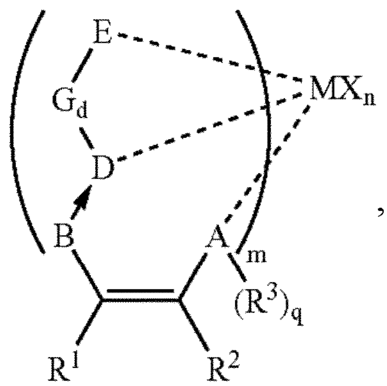

,

preferably selected from compounds (A) and (B) having the following chemical structural formulae and mixtures thereof:

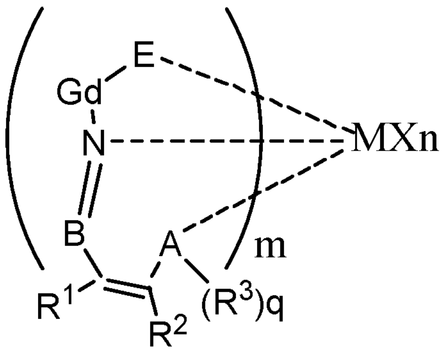

(A)

and

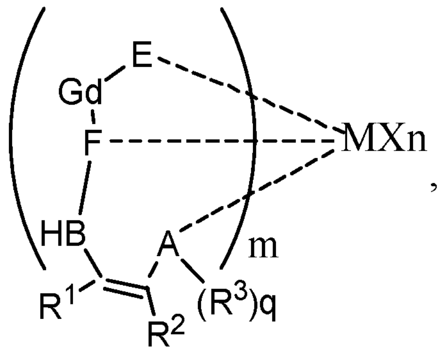

(B)

,

more preferably selected from compounds (A-1) to (A-4) and (B-1) to (B-4) having the following chemical structural formulae and mixtures thereof:

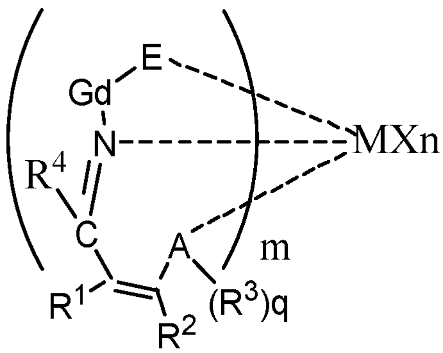

(A-1)

,

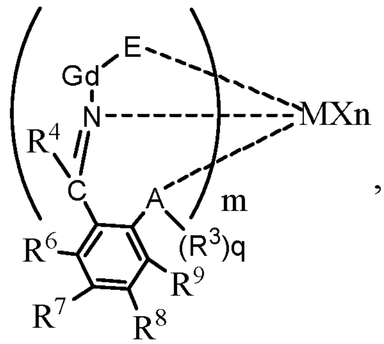

(A-2)

,

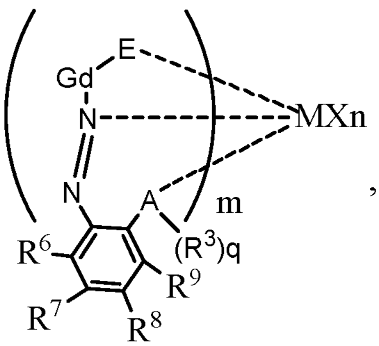

(A-3)

,

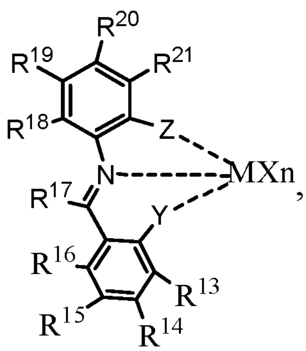

(A-4)

,

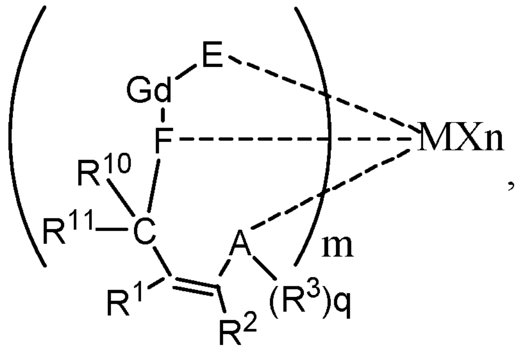,

(B-1)

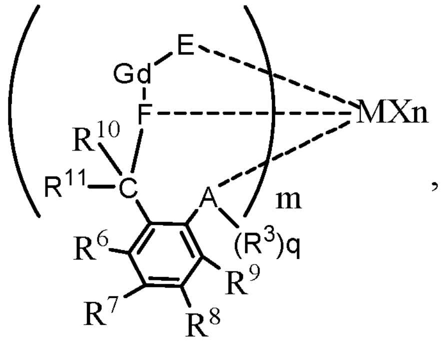,

(B-2)

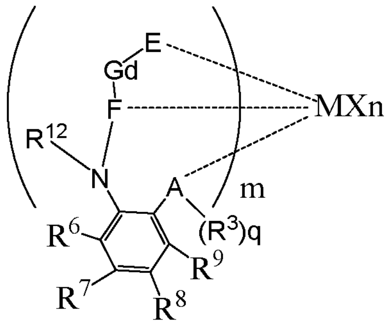, and

(B-3)

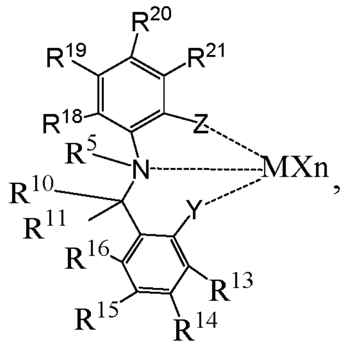,

(B-4)

in all the above chemical structural formulae,

q is 0 or 1;
d is 0 or 1;
m is 1, 2 or 3;
M is the center metal atom selected from Group III to Group XI metal atoms of the periodic table of elements, preferably Group IVB metal atoms, more preferably Ti (IV) and Zr (IV);
n is 1, 2, 3 or 4, depending on the valence state of the central metal atom M;
X is selected from a halogen atom, a hydrogen atom, a $C_1$-$C_{30}$ hydrocabon group, a substituted $C_1$-$C_{30}$ hydrocabon group, an oxygen-containing group, a nitrogen-containing group, a sulfur-containing group, a boron-containing group, an aluminum-containing group, a phosphorus-containing group, a silicon-containing group, a germanium-containing group or a stannum-containing group, a plurality of Xs can be identical or different, and can also form a bond or a ring with each other;
A is selected from an oxygen atom, a sulphur atom, a selenium atom,

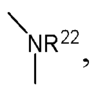,

, $-NR^{23}R^{24}$, $-N(O)R^{25}R^{26}$,

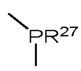,

, $-PR^{28}R^{29}$, $-P(O)R^{30}OR^{31}$, sulfonyl, sulfinyl or $-Se(O)R^{39}$, wherein N, O, S, Se, and P are each coordination atoms;
B is selected from a nitrogen atom, a nitrogen-containing group, a phosphorus-containing group or a $C_1$-$C_{30}$ hydrocabon group;

D is selected from a nitrogen atom, an oxygen atom, a sulphur atom, a selenium atom, a phosphorus atom, a nitrogen-containing group, a phosphorus-containing group, a $C_1$-$C_{30}$ hydrocabon group, sulfonyl or sulfinyl, wherein N, O, S, Se, and P are each coordination atoms;
E is selected from a nitrogen-containing group, an oxygen-containing group, a sulfur-containing group, a selenium-containing group, a phosphorus-containing group or cyano, wherein N, O, S, Se, and P are each coordination atoms;
F is selected from a nitrogen atom, a nitrogen-containing group, an oxygen atom, a sulphur atom, a selenium atom, or a phosphorus-containing group, wherein N, O, S, Se, and P are each coordination atoms;
G is selected from a $C_1$-$C_{30}$ hydrocabon group, a substituted $C_1$-$C_{30}$ hydrocabon group or an inert functional group;
Y is selected from an oxygen atom, a nitrogen-containing group, an oxygen-containing group, a sulfur-containing group, a selenium-containing group or a phosphorus-containing group, wherein N, O, S, Se, and P are each coordination atoms;
Z is selected from a nitrogen-containing group, an oxygen-containing group, a sulfur-containing group, a selenium-containing group, a phosphorus-containing group or cyano, wherein N, O, S, Se, and P are each coordination atoms;
$\rightarrow$ represents a single bond or a double bond;
- represents a covalent bond or an ionic bond;
---Represents a coordination bond, a covalent bond or an ionic bond;
$R^1$ to $R^4$, and $R^6$ to $R^{21}$ are each independently selected from hydrogen, a $C_1$-$C_{30}$ hydrocabon group, a substituted $C_1$-$C_{30}$ hydrocabon group or an inert functional group, $R^{22}$ to $R^{36}$, $R^{38}$ and $R^{39}$ are each independently selected from hydrogen, a $C_1$-$C_{30}$ hydrocabon group or a substituted $C_1$-$C_{30}$ hydrocabon group, the above-mentioned groups can be identical to or different from each other, wherein adjacent groups can be combined together with each other to form a bond or to form a ring, preferably form an aromatic ring;
said inert functional group is selected from halogen, an oxygen-containing group, a nitrogen-containing group, a silicon-containing group, a germanium-containing group, a sulfur-containing group, a stannum-containing group, a $C_1$-$C_{10}$ ester group or nitro,
$R^5$ is selected from a lone pair of electrons on the nitrogen, hydrogen, a $C_1$-$C_{30}$ hydrocabon group, a substituted $C_1$-$C_{30}$ hydrocabon group, an oxygen-containing group, a sulfur-containing group, a nitrogen-containing group, a selenium-containing group or a phosphorus-containing group; when $R^5$ is an oxygen-containing group, a sulfur-containing group, a nitrogen-containing group, a selenium-containing group or a phosphorus-containing group, N, O, S, P and Se in $R^5$ can serve as coordination atoms;
said substituted $C_1$-$C_{30}$ hydrocabon group is selected from $C_1$-$C_{30}$ hydrocabon groups having one or more halogen atoms or $C_1$-$C_{30}$ alkyl groups as the substituent;
Said non-metallocene complex is further preferably selected from compounds having the following chemical structural formulae and mixtures thereof:

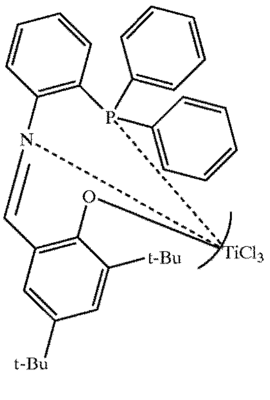
,
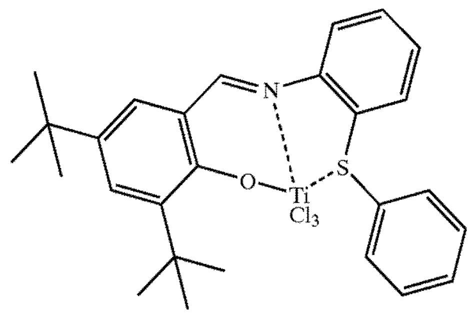
,

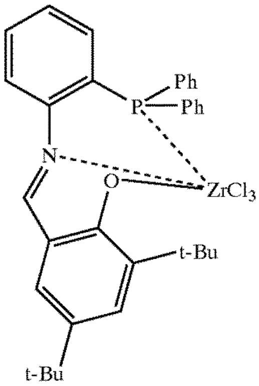 ,

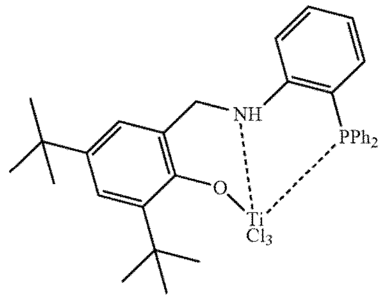 ,

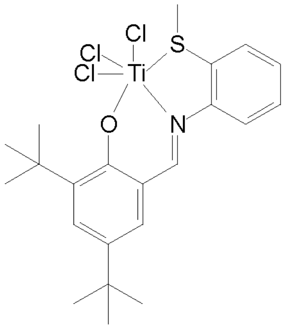 and 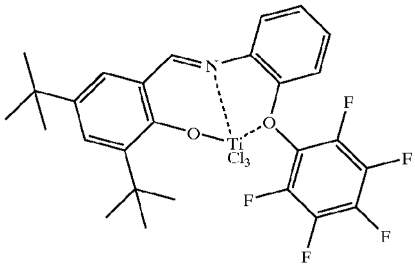 ,

most preferably selected from compounds having the following chemical structural formulae and a mixture thereof:

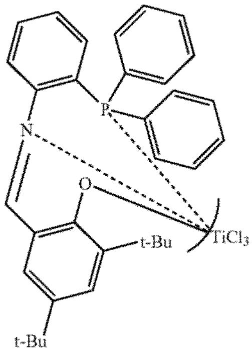 and 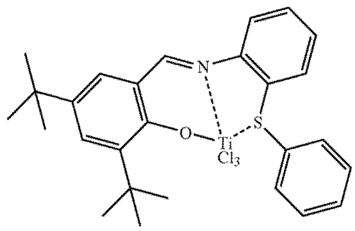 .

**8.** The preparation process according to claim 7, which is **characterized in that** said halogen is selected from F, Cl, Br or I;

said nitrogen-containing group is selected from

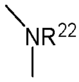 ,

, $-NR^{23}R^{24}$, $-T-NR^{23}R^{24}$ or $-N(O)R^{25}R^{26}$;

said phosphorus-containing group is selected from

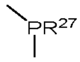,

, $-PR^{28}R^{29}$, $-P(O)R^{30}R^{31}$ or $-P(O)R^{32}(OR^{33})$;
said oxygen-containing group is selected from hydroxy, $-OR^{34}$ and $-T-OR^{34}$;
said sulfur-containing group is selected from $-SR^{35}$, $-T-SR^{35}$, $-S(O)R^{36}$ or $-T-SO_2R^{37}$;
said selenium-containing group is selected from $-SeR^{38}$, $-T-SeR^{38}$, $-Se(O)R^{39}$ or $-T-Se(O)R^{39}$;
said group T is selected from $C_1$-$C_{30}$ hydrocabon group or substituted $C_1$-$C_{30}$ hydrocabon group;
said $R^{37}$ is selected from hydrogen, $C_1$-$C_{30}$ hydrocabon group or substituted $C_1$-$C_{30}$ hydrocabon group;
said $C_1$-$C_{30}$ hydrocabon group is selected from $C_1$-$C_{30}$ alkyl, $C_7$-$C_{30}$ alkylaryl, $C_7$-$C_{30}$ arylalkyl, $C_3$-$C_{30}$ cyclic alkyl group, $C_2$-$C_{30}$ alkenyl, $C_2$-$C_{30}$ alkynyl, $C_6$-$C_{30}$ aryl, $C_8$-$C_{30}$ fused ring group or $C_4$-$C_{30}$ heterocyclic group, wherein said heterocyclic group contains 1-3 heteroatoms selected from nitrogen atom, oxygen atom or sulphur atom;
said boron-containing group is selected from $BF_4^-$, $(C_6F_5)_4B^-$ or $(R^{40}BAr_3)^-$;
said aluminum-containing group is selected from alkyl aluminum, $AlPh_4^-$, $AlF_4^-$, $AlCl_4$-, $AlBr_4^-$, $AlI_4$- or $R^{41}AlAr_3^-$;
said silicon-containing group is selected from $-SiR^{42}R^{43}R^{44}$ or $-T-SiR^{45}$;
said germanium-containing group is selected from $-GeR^{46}R^{47}R^{48}$ or $-T-GeR^{49}$; said stannum-containing group is selected from $-SnR^{50}R^{51}R^{52}$, $-T-SnR^{53}$ or $-T-Sn(O)R^{54}$;
said Ar represents $C_6$-$C_{30}$ aryl;
$R^{40}$ to $R^{54}$ are each independently selected from hydrogen, the above-mentioned $C_1$-$C_{30}$ hydrocarbon group or the above-mentioned substituted $C_1$-$C_{30}$ hydrocarbon group, wherein these groups can be identical to or different from each other, wherein adjacent groups can be combined together with each other to form a bond or to form a ring, and,
said group T is defined as before.

**9.** The process for preparing the ultra-high molecular weight polyethylene according to claim 6, wherein said Group IVB metal compound is selected from Group IVB metal halide, Group IVB metal alkyl compound, Group IVB metal alkoxy compound, Group IVB metal alkyl halide, Group IVB metal alkoxy halide and mixtures thereof, preferably selected from $TiCl_4$, $TiBr_4$, $ZrCl_4$, $ZrBr_4$, $HfCl_4$, $HfBr_4$ and mixtures thereof, most preferably selected from $TiCl_4$, $ZrCl_4$ and mixtures thereof.

**10.** An ultra-high molecular weight polyethylene, which is **characterized in that** the ultra-high molecular weight polyethylene has a viscosity-average molecular weight of 150-1000 $\times 10^4$ g/mol, preferably 200-850 $\times 10^4$ g/mol, more preferably 300-700 $\times 10^4$ g/mol, and a metal element content of 0-50 ppm, preferably 0-30 ppm, and said polyethylene satisfies at least one of Condition (1) and Condition (2):

Condition (1): tensile elasticity modulus is greater than 250 MPa, preferably greater than 280 MPa,
Condition (2): Young's modulus is greater than 300 MPa, preferably greater than 350 MPa.

**11.** The ultra-high molecular weight polyethylene according to claim 10, which is **characterized in that** said polyethylene has a bulk density of 0.30-0.55 g/cm$^3$, preferably 0.33-0.52 g/cm$^3$, more preferably 0.40-0.50 g/cm$^3$, a true density of 0.900-0.940 g/cm$^3$, preferably 0.905-0.935 g/cm$^3$, further preferably 0.915-0.930 g/cm$^3$, a melting point of 140-152°C, preferably 142-150°C, and a crystallinity of 40-75%, preferably 45-70%.

**12.** The ultra-high molecular weight polyethylene according to claim 10 or 11, which is **characterized in that** said polyethylene has a titanium content of 0-3 ppm, preferably 0-2 ppm, a calcium content of 0-5 ppm, preferably 0-3 ppm, a magnesium content of 0-10 ppm, preferably 0-5 ppm, an aluminum content of 0-30 ppm, preferably 0-20 ppm, a silicon content of 0-10 ppm, preferably 0-5 ppm, and a chlorine content of 0-50 ppm, preferably 0-30 ppm.

**13.** The ultra-high molecular weight polyethylene according to any of claims 10-12, which is **characterized in that** when the polyethylene contains comonomer units, the polyethylene has a random copolymerization structure, the comonomer molar insertion rate is 0.05-4.0%, preferably 0.10-2.0%, the comonomer is selected from $C_3$-$C_{10}$ alpha-olefins and can be selected from propene, 1-butene, 1-pentene, 1-hexene, and 1-octene, preferably selected from 1-butene and 1-hexene.

**14.** The ultra-high molecular weight polyethylene according to any of claims 10-13, wherein said polyethylene satisfies

at least one of the following condition (3) to condition (6):

Condition (3): the tensile yield strength is greater than 22 MPa, preferably greater than 25 MPa,
Condition (4): the tensile strength at break is greater than 32 MPa, preferably greater than 35 MPa,
Condition (5): the elongation at break is greater than 350%, preferably greater than 400%,
Condition (6): the impact strength is greater than 70 $KJ/m^2$, preferably greater than 75 $KJ/m^2$.

**15.** The ultra-high molecular weight polyethylene according to any of claims 10-14, which is **characterized in that** said polyethylene has an ash content of less than 200 ppm, preferably less than 150 ppm.

**INTERNATIONAL SEARCH REPORT**

International application No.
**PCT/CN2022/074011**

**A. CLASSIFICATION OF SUBJECT MATTER**

C08F 4/646(2006.01)i; C08F 210/16(2006.01)i

According to International Patent Classification (IPC) or to both national classification and IPC

**B. FIELDS SEARCHED**

Minimum documentation searched (classification system followed by classification symbols)

C08F

Documentation searched other than minimum documentation to the extent that such documents are included in the fields searched

Electronic data base consulted during the international search (name of data base and, where practicable, search terms used)

VCN, VEN, DWPI, CNKI, ISI WEB OF SCIENCE: 超高分子量聚乙烯, 聚乙烯, 乙烯, 铝, 淤浆, UHMWPE, ethylene, polyethylene, PE, aluminum, Al, slurry

**C. DOCUMENTS CONSIDERED TO BE RELEVANT**

| Category* | Citation of document, with indication, where appropriate, of the relevant passages | Relevant to claim No. |
|---|---|---|
| X | CN 107936163 A (SINOPEC YANGZI PETROCHEMICAL CO., LTD.; CHINA PETROLEUM & CHEMICAL CORPORATION) 20 April 2018 (2018-04-20) description, pp. 2-31 | 1, 3-15 |
| Y | CN 107936163 A (SINOPEC YANGZI PETROCHEMICAL CO., LTD.; CHINA PETROLEUM & CHEMICAL CORPORATION) 20 April 2018 (2018-04-20) description, pp. 2-31 | 2 |
| Y | CN 102964471 A (CHINA PETROLEUM & CHEMICAL CORPORATION; SINOPEC YANGZI PETROCHEMICAL CO., LTD.) 13 March 2013 (2013-03-13) description, pp. 3-46, table 2, sequence 11, and embodiments | 2 |
| X | CN 101654492 A (SINOPEC YANGZI PETROCHEMICAL CO., LTD.) 24 February 2010 (2010-02-24) description, pp. 2-29 | 1-15 |
| X | CN 102039184 A (CHINA PETROLEUM & CHEMICAL CORPORATION; SINOPEC YANGZI PETROCHEMICAL CO., LTD.) 04 May 2011 (2011-05-04) description, pp. 3-30 | 1-15 |
| X | US 2002045537 A1 (SAMSUNG GENERAL CHEMICALS CO.) 18 April 2002 (2002-04-18) description, pp. 1-3 | 1-6, 9 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 April 2022** | **29 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/074011**

**C. DOCUMENTS CONSIDERED TO BE RELEVANT**

| Category* | Citation of document, with indication, where appropriate, of the relevant passages | Relevant to claim No. |
|---|---|---|
| X | CN 107936161 A (SINOPEC YANGZI PETROCHEMICAL CO., LTD.; CHINA PETROLEUM & CHEMICAL CORPORATION) 20 April 2018 (2018-04-20)<br>description, pp. 2-28 | 1-15 |
| X | US 2017283528 A1 (SABIC GLOBAL TECHNOLOGIES B.V.) 05 October 2017 (2017-10-05)<br>description, pp. 2-4 | 1-6, 9 |
| X | CN 102030844 A (SHANGHAI INSTITUTE OF ORGANIC CHEMISTRY, CHINESE ACADEMY OF SCIENCES) 27 April 2011 (2011-04-27)<br>description, pp. 3-30 | 1-6, 9 |
| X | CN 102952222 A (CHINA PETROLEUM & CHEMICAL CORPORATION) 06 March 2013 (2013-03-06)<br>description, pp. 2-4 | 1-6, 9 |
| X | US 2003130448 A1 (EQUISTAR CHEMICALS, LP) 10 July 2003 (2003-07-10)<br>description, pp. 1-2 | 1-6, 9 |
| X | EP 0574153 A1 (NIPPON OIL CO., LTD.) 15 December 1993 (1993-12-15)<br>description, pp. 2-4 | 1-6, 9 |
| A | US 5026511 A (NIPPON OIL CO., LTD.) 25 June 1991 (1991-06-25)<br>claim 1 | 1-15 |
| A | US 4968765 A (MITSUI PETROCHEMICAL INDUSTRIES, LTD.) 06 November 1990 (1990-11-06)<br>claim 1 | 1-15 |
| A | 李传峰 (LI, Chuanfeng). "负载型非茂金属催化剂聚合制备UHMWPE (Preparation of UHMWPE by Supported Non-metallocene Catalysts Chinese Full Text)"<br>*现代塑料加工应用 (Modern Plastics Processing and Applications),*<br>No. 04, 31 December 2009 (2009-12-31),<br>entire document | 1-15 |

Form PCT/ISA/210 (second sheet) (January 2015)

**INTERNATIONAL SEARCH REPORT**
**Information on patent family members**

International application No.
**PCT/CN2022/074011**

| Patent document cited in search report | | | Publication date (day/month/year) | Patent family member(s) | | | Publication date (day/month/year) |
|---|---|---|---|---|---|---|---|
| CN | 107936163 | A | 20 April 2018 | None | | | |
| CN | 102964471 | A | 13 March 2013 | None | | | |
| CN | 101654492 | A | 24 February 2010 | None | | | |
| CN | 102039184 | A | 04 May 2011 | None | | | |
| US | 2002045537 | A1 | 18 April 2002 | KR | 20010097493 | A | 08 November 2001 |
| | | | | WO | 0181432 | A1 | 01 November 2001 |
| | | | | AT | 344282 | T | 15 November 2006 |
| | | | | CN | 1452637 | A | 29 October 2003 |
| | | | | EP | 1276776 | A1 | 22 January 2003 |
| | | | | RU | 2002131459 | A | 10 March 2004 |
| | | | | JP | 2004501227 | A | 15 January 2004 |
| | | | | DE | 60031719 | D1 | 14 December 2006 |
| CN | 107936161 | A | 20 April 2018 | None | | | |
| US | 2017283528 | A1 | 05 October 2017 | EP | 3197924 | A1 | 02 August 2017 |
| | | | | CN | 106795238 | A | 31 May 2017 |
| | | | | WO | 2016045929 | A1 | 31 March 2016 |
| | | | | JP | 2017529443 | A | 05 October 2017 |
| | | | | BR | 112017005587 | A2 | 12 December 2017 |
| | | | | EA | 201790683 | A1 | 31 July 2017 |
| CN | 102030844 | A | 27 April 2011 | CN | 102219870 | A | 19 October 2011 |
| | | | | CN | 102219869 | A | 19 October 2011 |
| CN | 102952222 | A | 06 March 2013 | None | | | |
| US | 2003130448 | A1 | 10 July 2003 | WO | 03059968 | A1 | 24 July 2003 |
| | | | | CA | 2470984 | A1 | 24 July 2003 |
| | | | | AU | 2002360859 | A1 | 30 July 2003 |
| EP | 0574153 | A1 | 15 December 1993 | CA | 2096782 | A1 | 22 November 1993 |
| | | | | JP | H05320244 | A | 03 December 1993 |
| | | | | DE | 69312586 | D1 | 04 September 1997 |
| US | 5026511 | A | 25 June 1991 | JP | H0192207 | A | 11 April 1989 |
| | | | | CA | 1304554 | C | 07 July 1992 |
| | | | | EP | 0310449 | A2 | 05 April 1989 |
| | | | | DE | 3852367 | D1 | 19 January 1995 |
| US | 4968765 | A | 06 November 1990 | DE | 3887411 | D1 | 10 March 1994 |
| | | | | CA | 1297247 | C | 17 March 1992 |
| | | | | EP | 0307155 | A2 | 15 March 1989 |
| | | | | CN | 1031868 | A | 22 March 1989 |
| | | | | AT | 100874 | T | 15 February 1994 |
| | | | | KR | 890005311 | A | 13 May 1989 |
| | | | | JP | S6468512 | A | 14 March 1989 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200410054344
- CN 200710042467
- CN 200710042468
- US 4962167 A1
- US 5587440 A
- CN 201480057309
- CN 201780000391
- CN 201610892732
- CN 201610892836
- CN 201610892837
- CN 201610892424
- CN 200410024103
- CN 201610747653
- WO 03010207 A
- CN ZL01126323
- CN ZL02110844
- GB 163679 A